# EUROPEAN PATENT SPECIFICATION

(11) **EP 2 663 907 B1**
(45) Date of publication and mention of the grant of the patent: **29.08.2018**
(21) Application number: 12704185.3
(22) Date of filing: 27.01.2012
(51) Int. Cl.: G06F 1/18, G06F 1/16

(54) **HANDHELD PORTABLE DEVICE**
TRAGBARES HANDGERÄT
DISPOSITIF PORTABLE PORTATIF

(30) Priority: 31.01.2011 US 201161437779 P; 31.01.2011 US 201113018239; 31.01.2011 US 201113018174; 31.01.2011 US 201113018184; 31.01.2011 US 201113018153; 31.01.2011 US 201113018242; 22.06.2011 US 201113166735
(43) Date of publication of application: 20.11.2013
(60) Divisional application: 18183796.4
(73) Proprietor: Apple Inc., Cupertino CA 95014 (US)
(72) Inventor: HENRY, Jules B., Cupertino, California 95014 (US); CORBIN, Sean S., Cupertino, California 95014 (US); MCCLURE, Stephen R., Cupertino, California 95014 (US); TERNUS, John P., Cupertino, California 95014 (US); GIBBS, Kevin, Cupertino, California 95014 (US); FRANKLIN, Jeremy C., Cupertino, California 95014 (US); KIBITI, Elvis M., Cupertino, California 95014 (US); RAFF, John, Cupertino, California 95014 (US); RAPPOPORT, Benjamin M., Cupertino, California 95014 (US); WRIGHT, Derek W., Cupertino, California 95014 (US); UTTERMANN, Erik A., Cupertino, California 95014 (US); YU, Ming, Cupertino, California 95014 (US); PETERSON, Carl, Cupertino, California 95014 (US); LI, Qingxiang, Cupertino, California 95014 (US); ANGULO, Gomez Rodney A., Cupertino, California 95014 (US); YEUNG, Alex Chun Lap, Cupertino, California 95014 (US); WILSON, Brianna C., Cupertino, California 95014 (US); STRINGER, Christopher J., Cupertino, California 95014 (US); COSTER, Daniel J., Cupertino, California 95014 (US); ROSS, III, Donald Q., Cupertino, California 95014 (US); KIM, David, Cupertino, California 95014 (US); SU, Chuan You, Cupertino, California 95014 (US); MALONEY, Max A., Cupertino, California 95014 (US); GILLOW, Erik D., Cupertino, California 95014 (US); TRZASKOS, Piotr S., Cupertino, California 95014 (US); WODRICH, Justin Richard, Cupertino, California 95014 (US)
(74) Representative: Rooney, John-Paul
(86) International application number: PCT/US2012/023026
(87) International publication number: WO 2012/106216

(56) References cited:
- WO-A2-2009/126480
- US-A1- 2002 085 342
- US-A1- 2009 257 189
- US-A1- 2010 165 556

## Description

### BACKGROUND

### Field of the Described Embodiments

The described embodiments relate generally to portable computing devices such as laptop computers, tablet computers, and the like. More particularly, enclosures of portable computing devices and methods of assembling portable computing devices are described.

### Description of the Related Art

In recent years, portable computing devices such as laptops, PDAs, media players, cellular phones, etc., have become small, light and powerful. One factor contributing to this reduction in size can be attributed to the manufacturer's ability to fabricate various components of these devices in smaller and smaller sizes while in most cases increasing the power and or operating speed of such components. The trend of smaller, lighter and powerful presents a continuing design challenge in the design of some components of the portable computing devices.

One design challenge associated with the portable computing device is the design of the enclosures used to house the various internal components. This design challenge generally arises from a number conflicting design goals that includes the desirability of making the enclosure lighter and thinner, the desirability of making the enclosure stronger and making the enclosure more esthetically pleasing. The lighter enclosures, which typically use thinner structures and fewer fasteners, tend to be more flexible and therefore they have a greater propensity to buckle and bow when used while the stronger and more rigid enclosures, which typically use more substantial structures and include fasteners, tend to be thicker and carry more weight. Unfortunately, however, the increased weight consistent with the more rugged enclosure can lead to user dissatisfaction whereas bowing of enclosures formed of lightweight material can result in damaging some of the internal components (such as printed circuit boards) of the portable device.

Furthermore, the enclosures are mechanical assemblies having multiple parts that are screwed, bolted, riveted, or otherwise fastened together at discrete points. These assembly techniques typically complicate the housing design and create aesthetic difficulties because of undesirable cracks, seams, gaps or breaks at the mating surfaces and fasteners located along the surfaces of the housing. For example, a mating line surrounding the entire enclosure is produced when using an upper and lower casing. Moreover, the various components and complicated processes used to manufacture the portable device can make assembly a time consuming and cumbersome process requiring, for example, a highly trained assembly operator working with special tools.

Another challenge is related to techniques for mounting structures within the portable computing devices. Conventionally, the structures have been laid over one of the casings (upper or lower) and attached to one of the casings with fasteners such as screws, bolts, rivets, etc. That is, the structures are positioned in a sandwich like manner in layers over the casing and thereafter fastened to the casing. This methodology suffers from the same drawbacks as mentioned above, i.e., assembly is a time consuming and cumbersome process.

From a visual stand point, users often find compact and sleek designs of consumer electronic devices more aesthetically appealing. As an example, portable electronic device designs that are both thin and light-weight are often popular with consumers. To enable this type of design, the portable electronic device can include a thin profile enclosure and a number of different components disposed inside. For instance, a display, a main logic board including a processor and memory, batteries, audio circuitry, speakers and external interface circuitry can be disposed within the thin-profile enclosure.

One advantage of a portable electronic device is that it can be transported to and utilized in a number of different environments. While being moved from environment to environment, external communications and data connectivity are desired. To meet this need, a common approach is to implement a wireless solution on the portable electronic device. The wireless solution can include implementing a wireless protocol and providing one or more antennas on the device.

A design objective for a wireless solution is consistent wireless performance under a wide range of operating conditions. One challenge to obtaining consistent wireless performance is that materials that are desirable for meeting an aspect of the over-all design different from the wireless performance can negatively affect its wireless performance. For instance, to meet strength and stiffness objectives, it may be desirable to use materials for the enclosure or the device components that are radio opaque and hence block antenna reception. Another challenge to obtaining consistent wireless performance is that, in a compact device with limited packaging space, components that can generate or that can be induced to generate signals that are detrimental to wireless performance can be packaged in close proximity to the antennas.

The proliferation of high volume manufactured, portable electronic devices has encouraged innovation in both functional and aesthetic design practices for enclosures that encase such devices. Manufactured devices can include a casing that provides an ergonomic shape and aesthetically pleasing visual appearance desirable to the user of the device. Exterior surfaces of metal alloy casings of portable electronic devices can be shaped by computer numerically controlled machinery and can include combinations of flat regions and curved regions. To minimize weight of the portable electronic device, the metal alloy casing can be shaped to a minimal thickness while maintaining sufficient mechanical rigidity to avoid minor impact damage. As the thickness of the metal alloy casing can be quite thin, for example fractions of a millimeter, the shaping of the exterior casing can require precise and repeatable results to minimize surface variation on the exterior of the casing. Irregularities in the surface can result in a metal alloy casing having an unacceptable appearance or compromised mechanical integrity. In addition, high volume manufacturing can require minimal time for shaping of the metal alloy casing. Multiple separate tools to shape different regions of the metal alloy casing can require additional manufacturing time than machining using a single cutting tool along a single continuous path. Thus there exists a need for a method and an apparatus for machining a three dimensional top surface, edge surface and bottom surface of a metal alloy casing resulting in a surface with a consistent surface variation within a tolerance required to achieve a desired minimal thickness casing and preferred surface appearance upon finishing.

The proliferation of high volume manufactured, portable electronic devices has encouraged innovation in both functional and aesthetic design practices for enclosures that encase such devices. Manufactured devices can include a casing that provides an ergonomic shape and aesthetically pleasing visual appearance desirable to the user of the device. Edge surfaces of casings can be shaped to a geometry that melds curved sections seamlessly to a flat bottom surface, with no substantial flat sections along the edge surface. Openings in the edge surface of casings can accommodate removable flat objects, such as a memory card or a tray to hold the memory card. When the flat object is stored within the casing, the outer portion of the flat object can be formed to be contiguous with the curved surface of the casing providing a smooth uninterrupted surface. Mechanical ejection of the flat object can be effected by inserting an ejection tool into an opening in the casing adjacent to the flat object. To align the flat object with a circuit board inside the casing, the flat object can be oriented parallel to the circuit board, typically parallel to a flat top surface or flat bottom surface of the casing. As the edge surface of the casing can be not perpendicular to the flat surfaces of the housing, the flat object can be ejected in a direction that is not perpendicular to the curved edge surface of the casing, but rather parallel to one of the flat surfaces. To minimize the size of the opening in the curved edge surface of the casing that can receive the ejection tool adjacent to the flat object, the center of the opening can be oriented perpendicular to the curved edge surface of the casing. The angle of insertion of the ejection tool can be not parallel to the orientation of the flat object in the casing. Thus there exists a need for a method and an apparatus for ejecting a flat object through a surface of a casing along a direction that is not parallel to the direction of insertion of the ejection tool through an opening perpendicular to the surface of the casing. Another example of a prior art device can be found disclosed in, for example, US2009/257189A1.

In view of the foregoing, there is a need for improved component density and associated assembly techniques that reduce cost and improve outgoing quality. In addition, there is a need for improvements in the manner in which handheld devices are assembled such as improvements that enable structures to be quickly and easily installed within the enclosure. It is also desirable to minimize the Z stack height of the assembled components in order to reduce the overall thickness of the portable computing device and thereby improve the overall aesthetic look and feel of the product. In view of the foregoing, there is a need for methods and apparatus for improving wireless performance in portable electronic devices.

### SUMMARY OF THE DESCRIBED EMBODIMENTS

A portable computing device is disclosed. The portable computing device can take many forms such as a laptop computer, a tablet computer, and so on. An embodiment of the invention is set out in independent claim 1.

In one aspect, the single piece housing can be machined from a single billet of material, such as rectangular block of aluminum, using computer numerical controlled (CNC) machine tools and associated techniques. In one embodiment, the single piece housing can be generated by 1) machining the billet to form an exterior surface of the housing, the exterior surface including curved side walls transitioning into a substantially flat bottom surface; 2) machining the billet to form an interior cavity, a portion of the interior cavity substantially flat and parallel to the substantially flat bottom surface; 3) machining the billet to form interior sidewalls to form ledges that extends from the sidewalls, the ledges including a surface, proximately parallel to the flat bottom surface, for receiving a trim bead and a cover and 4) machining the billet to form support shelves for attaching corner brackets to the housing.

In particular embodiments, the corner brackets can be attached to the support shelves using an adhesive and a conductive foam to increase a stiffness and hence, the damage resistance of the housing to impact events. The conductive foam can ground the corner bracket to the remainder of the housing to ensure good antenna performance. The corner brackets can include a surface for receiving corner portions of a trim bead and a cover. The corner brackets can be installed such that a top portion of the surface on the corner brackets for receiving the trim bead is aligned with surfaces for receiving the trim bead formed on ledges of the single piece housing adjacent to the corner bracket. In one embodiment, the surface for receiving the trim bead on the corner brackets can be castellated to increase the strength of the housing proximate to the castellation.

In yet other embodiments, a number of openings can be machined into the single piece housing to provide access to the interior cavity from the exterior of the housing. For example, a first opening in the single piece housing can be formed to allow a SIM tray for supporting a SIM card to extend from the interior cavity through and above one of the sidewalls and a second opening in the single piece housing, adjacent to the first opening, can be formed for allowing access to an ejector mechanism that causes the SIM tray to extend from the interior of the cavity. As another example, an opening can formed in a bottom portion of the housing that is configured to receive a logo stack including a logo insert bonded to a metal sheet. In yet another example, a number of openings can be formed in a curved exterior sidewall of the housing to allow sound from a speaker to exit the housing. The holes can be machined from the exterior to the interior in a direction that is normal to the local curvature of the sidewall.

In yet another embodiment, the housing can be designed such that during a failure of the cover some structural integrity is maintained. In one example, adhesive, such as an adhesive tape, can be applied to a bottom portion of the cover. In the event of a cover failure, the adhesive tape, can hold pieces of the cover together and prevent the cover from breaking into shards.

The portable computing device can take many forms such as a laptop computer, a tablet computer, and so on. A single piece housing including an integral bottom and side walls that cooperate to form an interior cavity can be used as an enclosure. Device components, such as a display, battery packs, a main logic board, memory, audio devices can be packaged within the interior cavity. The components can be sealed within the interior cavity using a cover. In one embodiment, the single piece housing can be formed from a radio opaque material and the cover can be formed from a radio transparent material that is also light transparent, such as a transparent glass.

An antenna system can be disposed within the interior cavity of the housing underneath the cover. The antenna system can include comprising an antenna for transmitting or receiving wireless signals. An adhesive layer for bonding the antenna to a bottom of the cover glass and a compressible foam layer can be provided. The compressible foam layer can be configured to exert an upward force on the antenna to provide a relatively constant spacing between the antenna and the bottom of the cover and to minimize air gaps between the bottom of the cover and the antenna. The relative constant spacing and the minimal air gaps may help to improve the performance of a wireless solution implemented using the antenna.

In one embodiment, the antenna can be bonded to the compressible foam layer. In another embodiment, an antenna carrier can be disposed between the antenna and the compressible foam layer where antenna and the compressible foam can each be bonded to the antenna carrier. An RF antenna window can be provided with the housing. In one embodiment, the antenna carrier can be configured to fit within the RF antenna window.

In another embodiment, a proximity sensor can be coupled to the antenna carrier, such as by bonding the proximity sensor the compressible foam layer. The proximity sensor can be used to detect objects near the antenna. When an object is detected near the antenna, a power level associated with the antenna can be adjusted. A shield can be disposed between the proximity sensor and the antenna. The shield can be used to prevent electromagnetic interference generated by the proximity sensor from reaching the antenna.

Another aspect of the invention provides a system. The system can include a metal housing having a surface for receiving a cover glass, a speaker assembly and an antenna system. The speaker assembly can have a) a speaker housing having a metal portion for enclosing at least one speaker driver; b) a connector for grounding the speaker drivers to the metal portion of the speaker housing; c) a conductive material wrapped around the speaker housing for forming a faraday cage around the at least one speaker driver, the conductive material grounded to the metal portion and the metal housing. The antenna system can be mounted to a bottom of the cover glass and to the speaker assembly. Further, the antenna system can be grounded to the metal housing. In one embodiment, the antenna system can be located near one side edge of the metal housing. The thickness of the metal housing on the side edge proximate to the antenna system can be thinned to a performance of the antenna system.

A portable computing device is disclosed. The portable computing device can take many forms such as a laptop computer, a tablet computer, and so on. In one embodiment, the portable computing device can include a single piece housing having a front opening. In the described embodiment, the single piece housing can, in turn, include an integral bottom and side walls that cooperate to form a cavity in cooperation with the front opening where an interior surface of the bottom wall is substantially flat and the side walls are curved. In addition to the single piece housing, the portable computing device can include components, including at least a battery cell and main logic board, that are mounted directly to a central portion of the bottom wall. Additional components, including sensors, antennae, buttons, switches, and a speaker module, can be arranged around a peripheral edge of the battery cell and main logic board. The portable computing device can also include a display assembly mounted to the housing and a transparent cover disposed within the front opening and attached to the housing. A bottom portion of the single piece housing and the mounted display assembly can form a protective enclosure for the battery cell.

In another embodiment, a portable computing device is disclosed. The portable computing device can include a single piece housing having a front opening. In the described embodiment, the single piece housing can include an integral bottom and side walls that cooperate to form a cavity in cooperation with the front opening, wherein the bottom wall has an interior surface that is substantially flat. Components, such as battery cells and a main logic board, can be mounted directly to the interior surface of the bottom wall of the housing. The battery cells and a main logic board can be in substantially the same plane and the battery cells can expand into a space between battery cells during operation. A display assembly can be disposed within the front opening and mounted to the housing such that the housing and the display assembly together form a protective enclosure for the battery cell.

In another embodiment, a portable computing device is disclosed. The portable computing device can include a single piece housing having a front opening. The single piece housing can include an integral bottom and side walls that cooperate to form a cavity in cooperation with the front opening. The bottom wall of the housing can have an interior surface that is substantially flat surrounded by a plurality of recesses in a peripheral edge portion. A component can be mounted directly to the substantially flat interior surface of the bottom wall and at least another component can be mounted in a recess in the peripheral edge portion. A display system and transparent cover can be disposed within the front opening and attached to the housing.

In one embodiment, an apparatus for shaping an exterior surface of a metal alloy casing of a portable electronic device is disclosed. The apparatus includes a cutting tool having at least three cutting surfaces for abrading regions of the metal alloy casing. The apparatus also includes a computer numerically controlled (CNC) positioning assembly configured to rotate the cutting tool at a constant rotational velocity and to contact the rotating cutting tool along a pre-determined continuous path at a constant translational velocity to abrade the metal alloy casing. The at least three cutting surfaces of the cutting tool include a first flat cutting surface, a curved convex shaped cutting surface and a second flat cutting surface. The first flat cutting surface is nearest a neck of the cutting tool and shapes a flat edge region on the top of the metal alloy casing. The curved convex shaped cutting surface is adjacent to the first flat cutting surface and shapes a curved edge region of the metal alloy casing. The second flat cutting surface is on the bottom of the cutting tool adjacent to the curved convex shaped cutting surface and shapes a flat bottom region of the metal alloy casing. The pre-determined continuous path includes a continuous spiral path to shape the flat edge region of the metal alloy casing and a continuous zigzag path used to shape the flat bottom region of the metal alloy casing. The spacing between adjacent circuits of the continuous spiral path varies based on a curvature of a cross section of the surface of the metal alloy casing.

In one embodiment, an apparatus for shaping an exterior surface of a metal alloy casing of a portable electronic device includes a bell shaped cutting tool and a computer numerically controlled (CNC) positioning assembly. The bell shaped cutting tool includes multiple cutting surfaces for abrading different regions of the metal alloy casing. The CNC positioning assembly is configured to rotate the bell shaped cutting tool at a constant rotational velocity and to contact the rotating bell shaped cutting tool along a pre-determined path to abrade the metal alloy casing. Adjacent cutting surfaces of the cutting tool are used to shape adjacent regions on the exterior surface of the metal alloy casing.

In one embodiment, a method for machining an edge surface and a bottom surface of a metal alloy casing of a portable electronic device includes at least the following steps. A first step includes abrading the edge surface of the metal alloy casing by contacting a rotating cutting tool along a first pre-determined continuous spiral path against the edge surface. A second step includes adjusting the pitch of vertical movement of the cutting tool for each circuit of the continuous spiral path based on a resulting curvature of the metal alloy casing perpendicular to the direction of the continuous spiral path along the surface of the metal alloy casing. A third step includes abrading the bottom surface of the metal alloy casing by contacting the rotating cutting tool along a second pre-determined alternating direction linear path against the bottom surface.

A flat object ejector assembly is disclosed which includes the following: a force receiving mechanism arranged to receive a force (Fᵢₙₚᵤₜ) along a first axis; and a flat object ejector including: a tray with a receiving area adapted to support a flat object; a tray contact area arranged to receive an ejection force (F_{eject}), the ejection force causing at least a portion of the tray to be exposed subsequent to an ejection event; and an arm mechanically attached to a pivot point. The arm receives a force (Fₐᵣₘ) at an arm input position from the force receiving mechanism, and the force (Fₐᵣₘ) acting at the arm input position causes a lever action to drive an ejection end of the arm with the ejection force (F_{eject}) against the tray contact area, such that the force (Fᵢₙₚᵤₜ) initiates the ejection event causing the tray and supported flat object to move in a direction along a second axis different than the first axis to partially expose a portion of the tray.

A flat object ejector assembly disposed within a housing having a sharply curved surface having a first normal vector, the flat object ejector assembly arranged to receive an ejection tool substantially parallel to the first normal that causes the flat object ejector assembly to partially eject a flat object from the sharply curved surface of the housing at an angle that is not collinear with the first normal vector, wherein the ejection tool causes an ejector mechanism to rotate about a single axis causing the flat object to partially eject.

In one embodiment, an apparatus in a portable electronic device is disclosed. The apparatus includes at least a first pivot element, a second pivot element and a foam element. The first pivot element is arranged to receive an ejection tool in a concave acceptance region of the first pivot element, through a first opening in a casing of the portable electronic device. The first pivot element is arranged to rotate about a first rotational axis, thereby contacting a cylindrical section of the first pivot element to a curved section of the second pivot element, thereby displacing the second pivot element. The second pivot element is arranged to rotate about a second rotational axis, in response to contact from the first pivot element, and to contact a tabular section of the second pivot element to a flat object enclosed in the casing. The tabular section of the second pivot element upon rotation about the second rotational axis displaces the flat object outward through a second opening in the casing of the portable electronic device. A foam element positioned adjacent to the second pivot element in the casing is arranged to rotate the second pivot element back to a neutral position.

In one embodiment, an apparatus in a mobile device for ejecting a flat object initially contained therein is disclosed. The apparatus is arranged to receive an ejection tool along a first axis and to eject the flat object along a second axis. The first and second axes are not parallel to each other. In one embodiment, the apparatus includes a first pivot element arranged to receive the ejection tool and to rotate about a first rotational axis and thereby contact and displace a second pivot element. The second pivot element is arranged to rotate about a second rotational axis in response to contact from the first pivot element. The second pivot element includes a tabular element that contacts the flat object and ejects the flat object at least partially from the mobile device. In one embodiment, the apparatus includes a foam element positioned adjacent to the second pivot element. The foam element compresses upon rotation of the second pivot element when ejecting the flat object and decompresses upon removal of the ejection tool returning the second pivot element to a neutral position.

### BRIEF DESCRIPTION OF THE DRAWINGS

The embodiments will be readily understood by the following detailed description in conjunction with the accompanying drawings, wherein like reference numerals designate like structural elements, and in which:
Figure 1A shows a top view of a portable computing device in accordance with the described embodiments.
Figure 1B shows a perspective top view of a portable computing device in accordance with the described embodiments.
Figure 2 shows a perspective view of an exterior portion of a housing in accordance with the described embodiments.
Figure 3A shows a simplified top view of the interior of the housing in accordance with the described embodiments.
Figure 3B shows a perspective view of an interior portion of a housing in accordance with the described embodiments.
Figure 4A shows a perspective view of one corner of the housing in accordance with the described embodiments.
Figure 4B shows a stack-up for attaching a corner bracket to the housing in accordance with the described embodiments.
Figure 5A shows a perspective view of one side of the housing including an under ledge portion in accordance with the described embodiments.
Figure 5B shows a perspective view of a device attachment feature incorporating a leaf spring as a retaining mechanism in accordance with the described embodiments.
Figure 6 shows a perspective view of one side of the housing including a cut-out for an RF antenna window in accordance with the described embodiments.
Figures 7A and 7B show side views of showing a mechanism for coupling the cover to housing in accordance with the described embodiments.
Figure 8 shows a side view of a logo stack-up in accordance with the described embodiments.
Figure 9 shows a method of forming a housing for a portable device in accordance with the described embodiments.
Figure 10 is a block diagram of an arrangement of functional modules utilized by a portable electronic device in accordance with the described embodiments.
Figure 11 is a block diagram of an electronic device suitable for use with the described embodiments.
Figure 12 shows a perspective view of an antenna window mounted to a housing in accordance with the described embodiments.
Figures 13A-13C show side views of antenna stack-ups in accordance with the preferred embodiments.
Figure 14 shows a side view of a stack-up for bonding a cover to the housing.
Figures 15A and 15B show perspective views an antenna stack-up located near an outer edge of a housing in accordance with the described embodiments.
Figure 16 is a perspective view of a speaker assembly in accordance with the described embodiments.
Figure 17 shows a side view of a display stack-up in accordance with the described embodiments.
Figures 18A and 18B show methods of generating an antenna stack-up for a portable device in accordance with the described embodiments.
Figure 19 shows a top view of a portable computing device in accordance with the described embodiments.
Figure 20 shows a perspective top view of a portable computing device in accordance with the described embodiments.
Figure 21 shows a perspective bottom view of a portable computing device in accordance with the described embodiments.
Figure 22 is a perspective view of view of the interior of the housing of a portable computing device in accordance with the described embodiments.
Figure 23 presents a top level internal view of portable computing device showing a specific arrangement of various internal components in accordance with described embodiments
Figure 24 shows an embodiment.
Figure 25 shows a cross-section along line AA of Figure 24.
Figure 26 shows a cross-section along line BB of Figure 27.
Figure 27 shows another embodiment.
Figure 28 shows an exploded perspective view of major components of a portable computing device in accordance with described embodiments.
Figure 29 shows a more detailed view of the speaker module in accordance with described embodiments.
Figure 30 illustrates a cross-sectional perspective view of a button assembly mounted through a cover glass of a portable computing device in accordance with the described embodiments.
Figure 31 illustrates a top view of a portion of the button assembly of Figure 30.
Figure 32 is a side view of a portion of the display with alignment pins for the camera module.
Figure 33 is a top plan view of the camera module.
Figure 34 is a side view of the camera module and a portion of the flex connector coupled to it.
Figure 35 shows a flowchart detailing a process in accordance with the described embodiments.
Figure 36 illustrates a simplified cross sectional side view of a casing for a portable electronic device including a shaped geometric edge.
Figure 37 illustrates a simplified cross section of a cutting tool to shape an exterior surface of the casing of Figure 36.
Figures 38A-D illustrate positioning of different sections of the cutting tool to shape different regions of the exterior surface of the casing of Figure 36.
Figure 39 illustrates a vertical path of the center of the cutting tool for successive circuits of a spiral path when shaping the exterior surface of the casing of Figure 36.
Figure 40 illustrates variable spacing for successive circuits of the spiral path when shaping the exterior surface of the casing of Figure 36.
Figure 41 illustrates a top view of a portion of successive circuits of the spiral path of Figure 40.
Figure 42 illustrates a portion of a spiral path for one region and a portion of a zigzag path for a second region of the exterior surface of the casing of Figure 36.
Figure 43 illustrates a representative method for shaping the exterior surface of the casing of Figure 36.
Figure 44A illustrates a top view of a mobile device including a removable sliding tray.
Figure 44B illustrates a front view of the mobile device of Figure 44A.
Figure 44C illustrates a perspective view of the mobile device of Figure 44A.
Figure 45A illustrates a top view of another mobile device that includes a removable sliding tray.
Figure 45B illustrates a front view of the mobile device of Figure 44A.
Figure 45C illustrates a perspective view of the mobile device of Figure 44A.
Figure 45D illustrates a perspective view of a variant of the mobile device of Figure 44A.
Figure 46 illustrates a partial perspective view of one embodiment of the flat object ejector assembly in accordance with the described embodiment.
Figure 47 illustrates a full perspective view of the embodiment from Figure 46 from an alternate angle.
Figures 48A, 48B, and 48C illustrate an exploded view of the embodiment from Figure 46, showing different cross sectional views of the embodiment.
Figure 49 illustrates a perspective view of a second embodiment of the flat object ejector assembly in accordance with the described embodiment.
Figure 50 illustrates a perspective view of the embodiment from Figure 49 from an alternate angle.
Figures 51A, 51B, and 51C illustrate an exploded view of the embodiment from Figure 50, showing different cross sectional views of the embodiment.
Figure 52 illustrates a perspective view of a third embodiment of the flat object ejector assembly in accordance with the described embodiment.
Figure 53 illustrates a perspective view of the embodiment from Figure 52 from an alternate angle.
Figures 54A, 54B, and 54C illustrate an exploded view of the embodiment from Figure 49, showing different cross sectional views of the embodiment.
Figure 55 shows a flowchart detailing a manufacturing process for installing a flat object ejector in a mobile device.
Figure 56 shows a flowchart detailing an ejection process in accordance with the described embodiments.
Figure 57 illustrates a simplified top view of a representative apparatus to eject a sliding tray from a mobile device.
Figure 58 illustrates a perspective view of the apparatus of Figure 57.
Figure 59 illustrates a second perspective view of the apparatus of Figure 57.
Figure 60 illustrates a bottom view of the apparatus of Figure 57.
Figure 61 illustrates a detailed front perspective exploded view of select elements of the apparatus of Figure 57.
Figure 62 illustrates a detailed rear perspective exploded view of select elements of the apparatus of Figure 57.
Figure 63 illustrates a front view and a back view of the select elements of Figures 62 and 63 assembled together.
Figure 64 illustrates a left side view and a right side view of the select elements of Figures 61 and 62 assembled together.
Figure 65 illustrates a perspective view of the select elements of Figures 61 and 62 assembled together in a neutral "home" position.
Figure 66 illustrates a perspective view of the select elements of Figures 61 and 62 assembled together in an "ejected" position.

### DESCRIBED EMBODIMENTS

In the following paper, numerous specific details are set forth to provide a thorough understanding of the concepts underlying the described embodiments. It will be apparent, however, to one skilled in the art that the described embodiments may be practiced without some or all of these specific details. In other instances, well known process steps have not been described in detail in order to avoid unnecessarily obscuring the underlying concepts.

This paper discusses an aesthetically pleasing portable computing device that is easy to carry with one hand and operate with the other. The portable computing device can be formed of a single piece housing and an aesthetically pleasing protective top layer that can be formed of any of a number of durable and strong yet transparent materials such as highly polished glass or plastic. For the remainder of this discussion, however, the protective top layer can take the form of highly polished cover glass without any loss in generality. Furthermore, the uniformity of the appearance of the portable computing device can be enhanced since (unlike conventional portable computing devices) the cover glass can be mounted to the single piece housing without the use of a bezel. This simplicity of design can accrue many advantages to the portable computing device besides those related to aesthetic look and feel. For example, fewer components and less time and effort can be required for assembly of the portable computing device and the absence of seams in the single piece housing can provide good protection against environmental contamination of internal components. Moreover, the ability of the portable computing device to successfully withstand applied loads (such as from day to day use) as well as those from less frequent but potentially more damaging events such as being dropped can be substantially improved over conventional portable computing devices.

In the described embodiments, the single piece housing can be formed from plastic or metal. In the case where the single piece housing is formed of metal, the metal can take the form of a single sheet (such as aluminum). The single sheet of metal can be formed into a shape appropriate for housing various internal components as well as providing various openings into which switches, connectors, displays, and so on can be accommodated. The single piece housing can be forged, molded, or otherwise processed into a desired shape. In one embodiment, a billet of material, such as a rectangular billet of material, can be machined to form a single-piece housing.

One disadvantage of selecting a metal to use a housing material is that metals are generally opaque to radio signals. Thus, a selection of a metal material for the housing can affect antenna placement, i.e., the antennas need to be placed in a location of the housing where radio signals are not blocked by surrounding materials that are radio opaque. One of the advantages to using metal for the housing is ability of metal to provide good electrical grounding for any internal components requiring a good ground plane. For example, performance of a built in RF antenna can be substantially improved when a good ground plane is provided. Moreover, a good ground plane can be used to help mitigate the deleterious effects caused by, for example, of electromagnetic interference (EMI) and/or electrostatic discharge (ESD). However, if an RF antenna is present within the housing, a portion of the housing (if metal) may be given over to a radio transparent portion.

The shape of the housing can be asymmetric in that an upper portion of the housing can formed to have a substantially different shape than that exhibited by a lower portion of the housing. For example, the upper portion of the housing can have surfaces that meet at distinct angles forming well defined boundary whereas the lower portion can be formed to have a substantially flat bottom surface. The transition zone between the upper portion having distinct edges and the lower, substantially flat portion can take the form of an edge having a rounded shape providing both a natural change from the upper portion of the housing (i.e., the area of distinct edges) and the smoother surface presented by the lower portion of the housing. It should also be noted that in addition to providing a more aesthetically pleasing transition, the rounded shape of the edge in the transition zone can provide a more comfortable feel when being held in a user's hand either during use or merely being carried about. One of the advantages to using metal for the housing is ability of metal to provide good electrical grounding for any internal components requiring a good ground plane. For example, performance of a built in RF antenna can be substantially improved when a good ground plane is provided. Moreover, a good ground plane can be used to help mitigate the deleterious effects caused by, for example, of electromagnetic interference (EMI) and/or electrostatic discharge (ESD). However, if an RF antenna is present within the housing, then at least a portion of the housing (if metal) is given over to a radio transparent portion.

It should be noted that throughout the following discussion, the term "CNC" is used. The abbreviation CNC stands for computer numerical control and refers specifically to a computer controller that reads computer instructions and drives a machine tool (a powered mechanical device typically used to fabricate components by the selective removal of material). It should be noted however, that any appropriate machining operation can be used to implement the described embodiments and is not strictly limited to those practices associated with CNC.

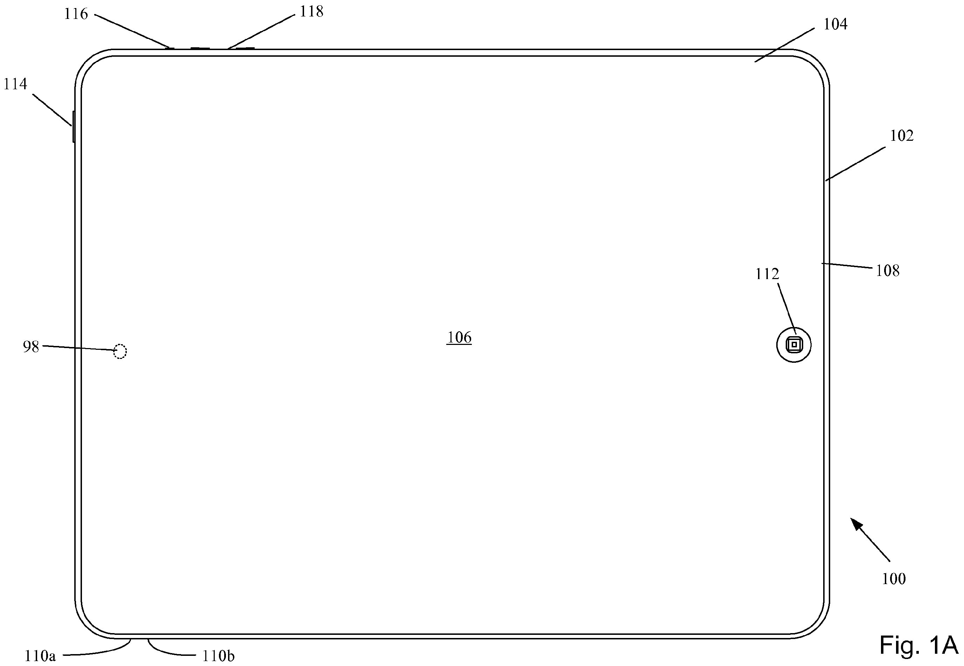

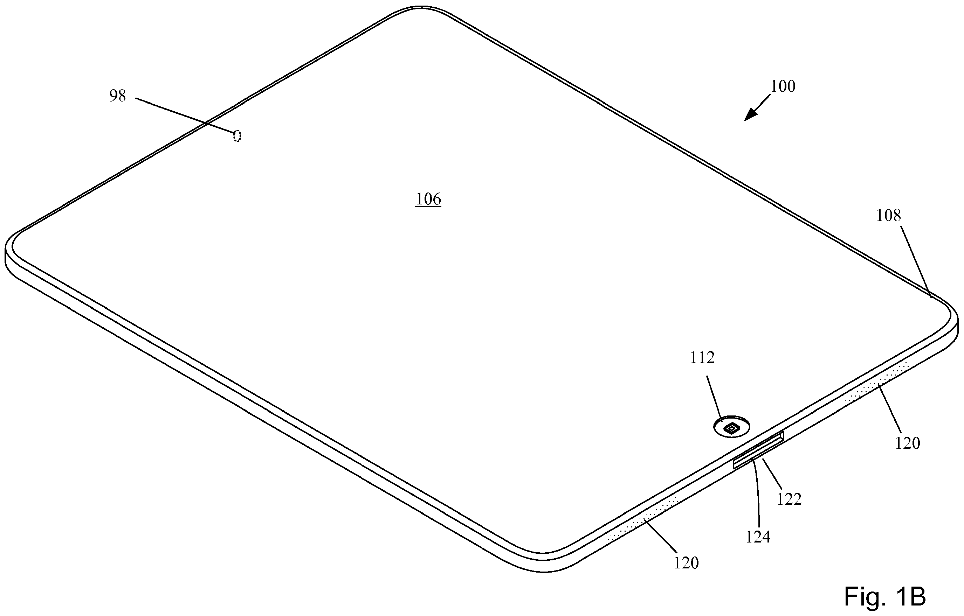

These and other embodiments are discussed below with reference to Figures 1-66. However, those skilled in the art will readily appreciate that the detailed description given herein with respect to these figures is for explanatory purposes only and should not be construed as limiting. Achieving a wireless solution that provides consistent wireless performance over a wide-range of operating conditions can involve considering the relative radio transparency or opacity of each the components of the portable device, the layout of the components relative to one another and an ability of each component to generate signals that can interfere with wireless reception. Thus, first, prior to describing particular features of the wireless solution, features of the portable computing device including features affecting the wireless solution are described in general with respect to Figures 1A-3C.

Figure 1A illustrates a specific embodiment of portable computing device 100. More specifically, Figure 1A shows a full top view of fully assembled portable computing device 100. Portable computing device 100 can process data and more particularly media data such as audio, video, images, etc. By way of example, portable computing device 100 can generally correspond to a device that can perform as a music player, game player, video player, personal digital assistant (PDA), tablet computer and/or the like. With regards to being handheld, portable computing device 100 can be held in one hand by a user while being operated by the user's other hand (i.e., no reference surface such as a desktop is needed). For example, the user can hold portable computing device 100 in one hand and operate portable computing device 100 with the other hand by, for example, operating a volume switch, a hold switch, or by providing inputs to a touch sensitive surface such as a display or pad. The device can also be operated while it is resting on a surface, such as a table.

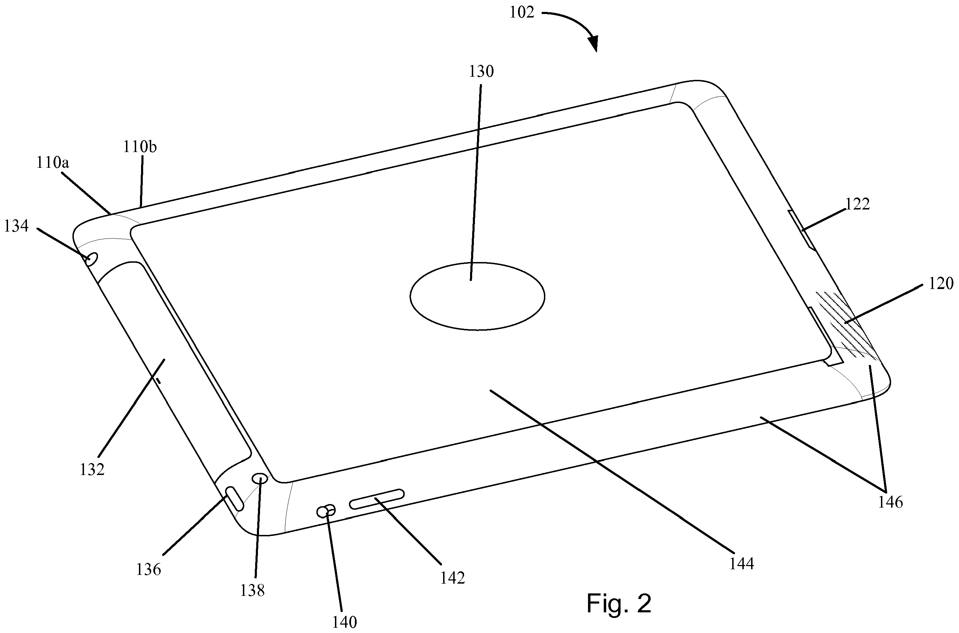

Portable computing device 100 can include single piece housing 102 that can be formed of any number of materials such as plastic or metal which can be forged, molded, machined or otherwise processed into a desired shape. In those cases where portable computing device 100 has a metal housing and incorporates RF based functionality, it may be advantageous to provide at least a portion of housing 102 in the form of radio (or RF) transparent materials such as ceramic, or plastic. An example of a housing including radio transparent portion is described in more detail with respect to Figures 2, 3 and 6.

In any case, housing 102 can be configured to at least partially enclose any suitable number of internal components associated with the portable computing device 100. For example, housing 102 can enclose and support internally various structural and electrical components (including integrated circuit chips and other circuitry) to provide computing operations for portable computing device. The integrated circuits can take the form of chips, chip sets, modules any of which can be surface mounted to a printed circuit board, or PCB, or other support structure. For example, a main logic board (MLB) can have integrated circuits mounted thereon that can include at least a microprocessor, semi-conductor (such as FLASH) memory, various support circuits and so on.

Housing 102 can include opening 104 for placing internal components and may be sized to accommodate a display assembly or system suitable for providing a user with at least visual content as for example via a display. In some cases, the display system can include touch sensitive capabilities providing the user with the ability to provide tactile inputs to portable computing device 100 using touch inputs. The display system can be formed and installed separately from a cover 106. The cover 106 can be formed of polycarbonate or other appropriate plastic or highly polished glass. Using highly polished glass, the cover 106 can take the form of cover glass substantially filling opening 104. Trim bead 108 can be used to form a gasket between cover glass 106 and housing 102. Trim bead 108 can be formed of a resilient material such as a plastic along the lines of thermoplastic urethane or TPU. In this way, trim bead 108 can provide protection against environmental contaminants from entering the interior of portable computing device 100.

Although not shown, the display panel underlying cover glass 106 can be used to display images using any suitable display technology, such as LCD, LED, OLED, electronic or e-inks, and so on. In one embodiment, the display assembly and cover glass can be provided as an integrated unit for installation into the housing. In another embodiment, the display assembly and the cover glass 106 can be installed separately.

Display assembly may be placed and secured within the cavity using a variety of mechanisms. In one embodiment, the display assembly and the housing 102 can include alignment points for receiving a fixture. The fixture can be used to accurately align the display assembly with the housing. In one embodiment, after the display assembly is aligned with the housing, it can be secured to the housing 102 using fasteners.

Portable computing device 100 can include a number of mechanical controls for controlling or otherwise modifying certain functions of portable computing device 100. For example, power switch 114 can be used to manually power on or power off portable computing device 100. Mute button 116 can be used to mute any audio output provided by portable computing device 100 whereas volume switch 118 can be used to increase/decrease volume of the audio output by portable computing device 100. It should be noted that each of the above described input mechanisms are typically disposed through an opening in housing 102 such that they can couple to internal components. In some embodiments, portable computing device 100 can include an image capture module 98 configured to provide still or video images. The placement may be widely varied and may include one or more locations including for example front and back of the device, i.e., one through the back housing, the other through the display window.

Portable computing device 100 can include a mechanism for wireless communications, as either a transceiver type device or receiver only, such as a radio, portable computing device 100 can include an antenna that can be disposed internal to a radio transparent portion of housing 102 In other embodiments, a portion of housing 102 can be replaced with radio transparent material in the form of an antenna window described in more detail below.. In some embodiments, an antenna can be to an underside of the cover glass 106. The radio transparent material can include, for example, plastic, ceramic, and so on. The wireless communications can be based on many different wireless protocols including for example 3G, 2G, Bluetooth, RF, 802.11, FM, AM, and so on. Any number of antennas may be used, which can use a single window or multiple windows depending on the needs of the system.

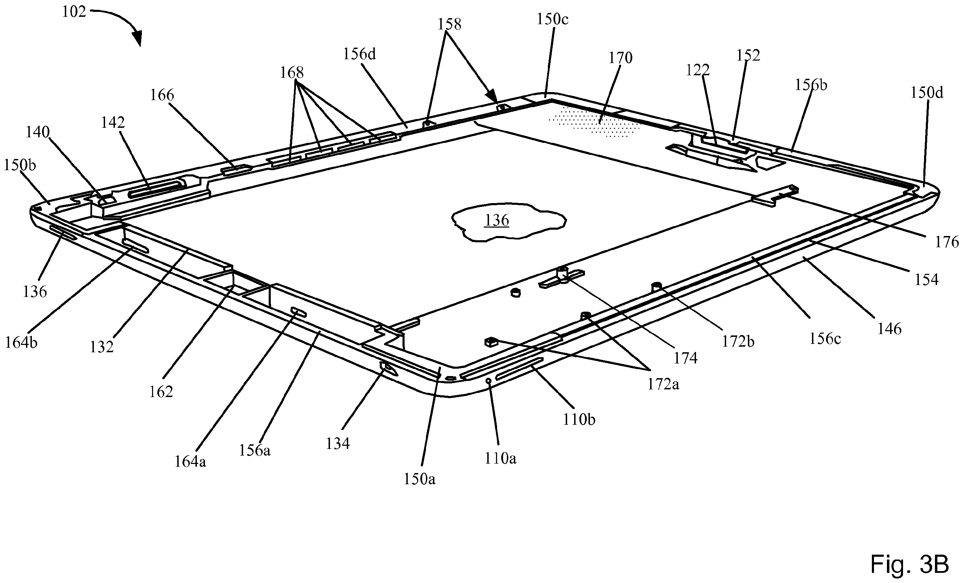

The portable computing device can be used on a wireless data network, such as a cellular data network. Access to the cellular data network can require the use of a Subscriber Identity Module (SIM) or SIM card. In one embodiment, the device 100 can include an opening 110b that allows a SIM card to inserted or removed. In a particular embodiment, the SIM card can be carried on a SIM card tray that can extend from a side of the housing 102. The housing can include an opening 110a that allows an ejector for the SIM card tray to be actuated such that the SIM card tray is extended from the housing. The openings, 110a and 110b, for the SIM card tray are shown in Figure 3B.

Figure 1B shows a perspective top view of portable computing device 100 in accordance with the described embodiments. As shown in Figure 1B, portable computing device 100 can include one or more speakers used to output audible sound. The sounds generated by the one or more internal speakers can pass through the housing 102 via speaker grill 120. A portion of the speaker grill can be located on a downward facing side of the housing such that a portion of the sound is angled downward. When the device is placed on a surface, a portion of the sound that is emitted in a downward direction can be reflected off the surface on which a device has been placed. The speaker grill 120 can be formed as a series of small holes that are punched through the sidewalls of the housing. As described in more detail below, the side walls can be curved.

In one embodiment, a bit for punching or drilling the speaker holes can be orientated such that the holes are machined proximately normal to the surface curvature at each location. In some instance, more than one hole can be drilled at a time. For instance, 5 holes can be drilled in a row along a line of constant curvature such that all of the holes are drilled proximately normal to the surface. In one embodiment, cover layers can be placed on the front and back of the housing while the holes are being machined. For example, a stainless sheet can be placed over the exterior surface of the housing and a plastic backing can be placed over the interior of the housing. The external and internal covers can prevent damage to the surrounding housing resulting from chips of material that are generated in the machining process. Generating the holes in this manner can produce a smooth surface where the presence of the holes is not noticeable to the touch.

After the speaker grill holes are formed, a protective layer can be added on an interior surface of the housing that covers the speaker grill holes. The protective layer can be designed to prevent ingress of environmental contaminants, such as water, that can potentially enter into the interior of the cavity via the speaker grill holes. In one embodiment, the protective layer can be formed from a hydrophobic fabric mesh that is acoustically permeable to allow sound through the speaker grill 120 while reducing the risk of environmental ingress.

Returning to Figure 1B, portable computing device 100 can also include one or more connectors for transferring data and/or power to and from portable computing device 100. For example, portable computing device 100 can include multiple data ports, one for each configuration of portrait mode and landscape mode. However, the currently described embodiment includes single data port 122 that can be formed of connector assembly 124 accommodated within an opening formed along a first side of housing 102. In this way, portable computing device 100 can use data port 122 to communicate with external devices when portable computing device 100 is mounted in docking station. It should be noted that in some cases, portable computing device 100 can include an orientation sensor or an accelerometer that can sense the orientation or movement of portable computing device 100. The sensor can then provide an appropriate signal which will then cause portable computing device 100 to present visual content in an appropriate orientation.

Connector assembly 124 can be any size deemed appropriate such as, for example, a 30 pin connector. In some cases, the connector assembly 124 can serve as both a data and power port thus obviating the need for a separate power connector. Connector assembly 124 can be widely varied. In one embodiment, connector assembly 124 can take the form of a peripheral bus connector. In one embodiment, a connector assembly with 30 pins can be used. These types of connectors include both power and data functionality, thereby allowing both power delivery and data communications to occur between the portable computing device 100 and the host device when the portable computing device 100 is connected to the host device. In some cases, the host device can provide power to the media portable computing device 100 that can be used to operate the portable computing device 100 and/or charge a battery included therein concurrently with the operating.

Figure 2 shows a perspective view of an exterior portion of a housing 102 prior to assembly. The exterior portion can act as a bottom portion of the device after assembly. An interior portion of the housing and its associated features, which encloses device components such as a display assembly and main logic board, is described with respect to Figure 3B. In one embodiment, the housing can be formed via machining of a single billet of material, such as a single billet of aluminum formed into a rectangular shape. In Figure 2, a portion of the billet can have been machined to form the general outer shape of the exterior portion of the housing. In other embodiments, the billet can be cast into some shape that is closer to the final shape of the housing prior to beginning machining to produce the final housing shape.

The housing 102 includes a substantially flat portion 144 surrounded by curved side walls 146. In one embodiment, the housing 102 can have a maximum thickness of less than 1 cm. In a particular embodiment, the maximum thickness is about 8 mm. In Figure 2, the geometry is provided for the purposes of illustration only. In different embodiments, the curvature on the side walls, such as 146, and the area of the flat portion 144 can be varied. In one embodiment, rather than a flat portion joined by curved side walls, the sidewalls and flat portion can be combined into a shape with a continuous profile, such as conforming to a continuous spline curve. In yet other embodiments, rather than using curved side walls, the side walls can be substantially flat and joined to the substantially flat portion via a specified radius of curvature.

Openings can be formed in the flat portion 144 and the sidewalls 146. The openings can be used for various purposes that involve functional as wells as cosmetic considerations. In one example, the openings can be used for switches. As shown in Figure 2, a number of switch openings are formed in the side walls. For instance, opening 136 is for a power control switch, opening 140 is for a slide switch and opening 142 is for a volume switch. In one embodiment, the slide switch can be used to provide muting control. In other embodiments, the slide switch can be used to control other device features. The size of the openings can depend on the size of the switch. For example, opening 142 can be for a volume rocker switch which can be larger than a power control switch or the mute control. In one embodiment, the openings can be formed using a bit that is orientated proximately normal to the surface of the housing 102. Thus, its orientation during machining can vary depending on what location on the side wall is being cut.

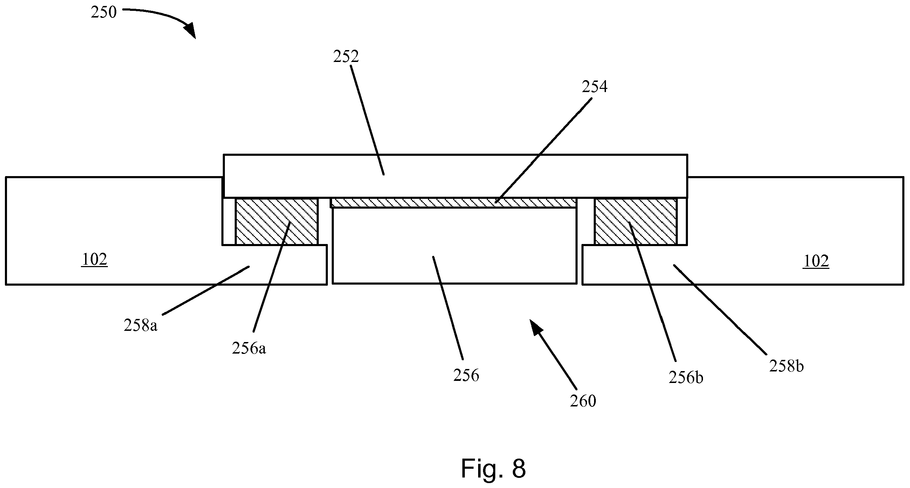

In another example, openings can be formed in the housing for external connectors. For example, an opening 134 is provided in the side wall for an audio port, such as for a head phone connector. In yet another example (see Figures 1B and Figure 3B), an opening can be provided for an external data and power connector, such as a 30-pin connector. In one embodiment, the opening can be cut in a direction that is proximately parallel to flat portion of housing, which may not be normal to curvature of the exterior surface. Closer to the substantially flat portion of the housing 144, opening 138 is provided for a rear facing image capture device. Near the center of the substantially flat portion, opening 130 is provided for a logo insert. The logo insert can be formed from a different material and be a different color than the remainder of the housing. Further details of the logo insert including a logo stack-up for attaching a logo to the housing are described with respect to Figure 8.

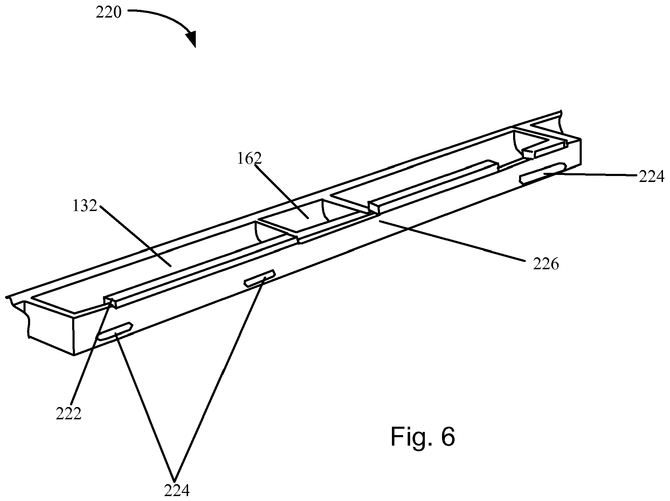

The housing 102 can be formed from a radio opaque material, such as a metal. In a particular embodiment, the housing can include a cut-out portion for placement an RF antenna window to support one or more antennas. The housing can include a cut-out for receiving the RF antenna window 132. The RF antenna window can be formed from a radio transparent material, such as a plastic, to improve wireless data reception for the device. In Figure 2, the RF antenna window is shown an installed position extending across the side wall and ending proximate to the substantially flat portion 144 of the housing. The RF antenna window 132 can be shaped to match the surface curvature profiles of the adjacent sidewalls. A view of the RF antenna window 132 and surrounding support structure on the housing as viewed across the interior of the housing is shown and described in more detail with respect to Figure 6.

In particular embodiments, a device can be configured to access a data network via one or more wireless protocols. For example, using a protocol such as Wi-Fi, a device can be configured to access the Internet via a wireless access point. As another example, using a wireless protocol, such as GSM or CDMA, device can be configured to access a cellular data network via a local cell phone tower. A device implementing two wireless protocols, such as Wi-Fi and GSM or Wi-Fi and CDMA, can employ different antenna system, one for the Wi-Fi and one for the GSM or CDM.

Typically, a component, such as the RF antenna window 132, can be used to implement a cellular data network connection using GSM or CDM. To implement a wireless protocol, such as Wi-Fi, the RF antenna window 132 may not be necessary. Thus, in some embodiments, a housing can be formed without an opening for the RF antenna window 132. In these embodiments, the housing 102 can extend over the surface where RF antenna window 132 is located to conform to the surrounding curvature of the sidewall. Thus, the area where the RF antenna window 132 is located can be formed from the same material as the other portions of the housing 102 and machined in a manner similar to the other sidewalls of the housing.

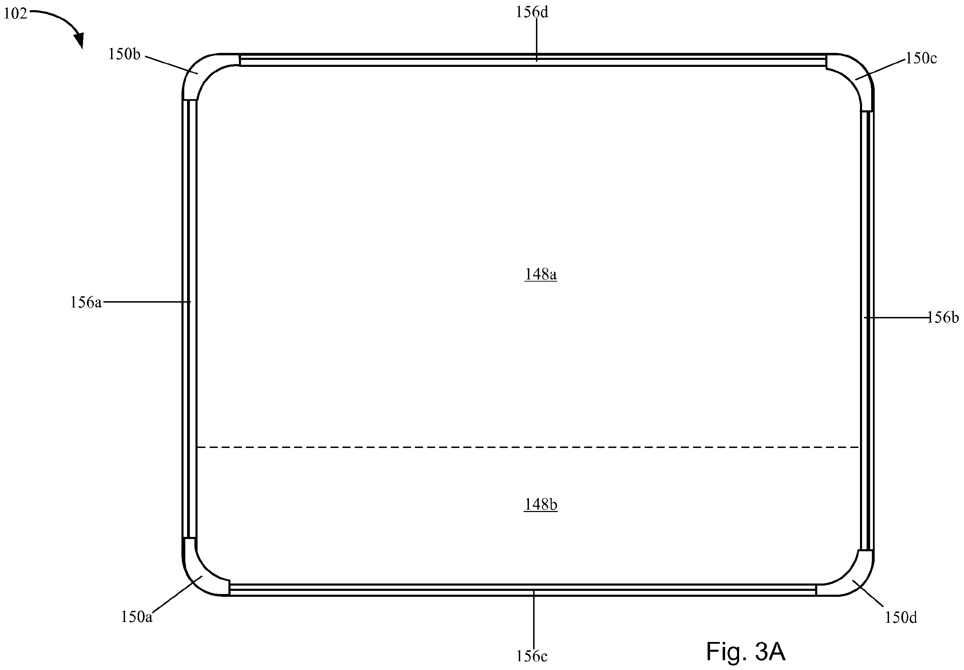

Figure 3A shows a top view of a simplified housing 102 showing a cavity with a front opening for one embodiment. A more detailed perspective view of a housing is described with respect to Figure 3B. In 3A, the housing 102 can include substantially flat bottom portions 148a and 148b. The flat bottom portions, 148a and 148b, can be at different heights or a single height. In one embodiment, the flat bottom portions, 148 and 148b, can be substantially parallel with the flat exterior bottom 144 of the housing described above with respect to Figure 2. The flat bottom portions, 148a and 148b, can transition into sidewalls that extend above the bottom of the cavity.

The sidewalls can be undercut to form ledges, such as ledges 156a, 156b, 156c and 156d, that extend into the center of the cavity from the sidewalls. In one embodiment, the ledges can include portions at different heights. The width of the ledges can vary across each side and vary from side to side. For instance, the width of the ledge 156a can be thinner than ledge 156d. A ledge is not necessarily continuous across a side. In some embodiments, a portion of each ledge can be removed. In addition, a ledge width is not necessarily constant across a side. In some embodiments, the width of the ledge can vary across a side.

Brackets, such as 150a, 150b, 150c and 150d, can be placed at each corner of the housing. The brackets can be formed from a metal, such as stainless steel. The brackets can be configured to add structural stiffness to the housing. During an impact event, such as an impact to the corner of the housing, the corner brackets can limit the amount of impact damage, such as damage to a cover glass. The shape of the brackets can vary from corner to corner. In addition, the simplified shape of the brackets is shown for the purposes of illustration and brackets with different shapes can be used. As is discussed in more detail as follows, the brackets can be bonded with an adhesive to the housing. In one embodiment, The brackets can include a surface for receiving a corner portion of a trim bead and a cover.

In one embodiment, components, such as the batteries, can be disposed within regions 148a and 148b. For instance, in one embodiment, a number of battery packs can be bonded using PSA strips to the housing in region 148a. In one embodiment, three battery packs can be adhered to flat region 148a using adhesive that can take the form of adhesive strips such as PSA. Using adhesive strips can slightly elevate the batteries and provide room for the batteries packs to expand during operation. As another example, in region 148b, a number of PCBs can be placed. The number and type of PCBs can vary from embodiment to embodiment depending on the functionality of the device. A few examples of PCBs that can be secured to the housing in this region include but are not limited to a main logic board, a battery management unit, and/or a RF circuit board. The RF circuit board can also include GPS circuitry. Attachment points can be machined as bossed into the bottom of the housing to secure device components, such as the PCBs. These are described in more detail with respect to Figure 3B.

Figure 3B shows a perspective view of an interior portion of a housing 102. Device components, such as a display, processor boards, memory, audio devices can be secured within a cavity formed by the housing. The housing 102 can include a substantially flat portion in its center that surrounds the opening 136 for the logo insert. As described in more detail with respect to Figure 8, the opening 136 can include a recessed ledge on which a sheet, such as a metal sheet conforming to the shape of the recessed ledge can be bonded to the housing to seal the opening 136.

A number of structures, such as bosses 172a and 172b or bosses 174 and 176 can be formed on the bottom of the housing. In one embodiment, the bosses can be used with fasteners to secure one or more PCBs to the housing. For example, the bosses can be used to attach a main logic board, a battery management unit board and radio board. The number and types of boards can vary from embodiment to embodiment. For instance, some embodiments do not include a radio board. Thus, the number and types of bosses can vary from embodiment to embodiment. The bosses can include structures with apertures that allow a fastener, such as a metal or plastic screw to be inserted. The structures can be formed by removing material during a CNC based machining process. Attachment points, such as bosses, can also be formed for other components, such as the display assembly or a Wi-Fi antenna.

The housing 102 can include a number of features adjacent to the sidewalls of the housing and arranged around a perimeter of the housing. One example of a feature is an opening in the sidewall. For example, openings for an audio port 134, a power switch 136, a mute button 140 and a volume switch 142, which are described above with respect to Figure 2, and an opening for the data port, which is described above with respect to Figure 1B, are also visible in Figure 3. The openings for the mute button 140, 142 volume switch and data port 122 are shown from the interior side of the housing 102. In Figure 3B, it can be seen that there is structure around the opening on the interior side that is different than the structure around the openings as viewed from the exterior side. In particular, the exterior surface of the housing around the openings is relative smooth without sharp edges while the interior structure around the opening can include steps, ledges, walls and other formations. As discussed above, the exterior and interior portions of the housing can be asymmetric in this regard.

In Figure 3B, other openings include the speaker hole cut outs 170 as viewed from the interior and the openings for the SIM tray ejector mechanism 110a and SIM tray 110b as viewed from an exterior of the housing 102. The openings for SIM tray ejector mechanism 110a and the SIM tray 110b can be located on the curved sidewalls of the housing 102. In one embodiment, the SIM tray 110a and SIM tray opening 110b can be configured to allow the SIM tray to eject in a plane that is substantially parallel to the bottom flat portion of the housing. However, the opening for the SIM tray ejector mechanism and the SIM tray ejector mechanism can be configured such that opening 110a is drilled about norm to the surface according to the curvature of the sidewall where it is located. The ejector mechanism can be configured to receive an implement, such as a straight pin that is inserted normal to the surface via opening 110a to eject the SIM tray. Thus, when a straight pin is inserted into the opening 110a and the SIM tray is extended from opening 110b, the SIM tray and the pin can be at angle relative to one another.

In particular embodiments, as described with respect to Figure 3A, the ledges do not necessarily extend around the entire perimeter of the housing or entirely across a side. For example, the housing does not include a ledge proximate to where RF antenna window 132 is placed. In other embodiments that do not include an RF antenna window, the ledge can be extended into the region that is occupied by the RF antenna window. In some locations, it would be difficult to implement an install of a component in the presence of a ledge. At various locations, material can be removed such that the ledge at a location is minimal or no ledge is formed. For example, proximate to the openings 140 and 142 for the mute button and volume switch, respectively, the ledge can be removed and a cavity can be formed for receiving the mute button and volume switch assemblies. The removed material proximate to these openings can allow mechanisms for the mute button and the volume switch to be inserted down into the housing such that a portion of the mechanisms can be accessible from an exterior of the housing via the openings. In one embodiment, the housing of a switch assembly installed in this manner can be shaped such that a level surface aligned with adjacent ledges on the sides of the housing is provided after the switch assembly is installed. The level surface can provide support for an item that is placed over the top of the installed switch assembly, such as the cover glass and trim bead.

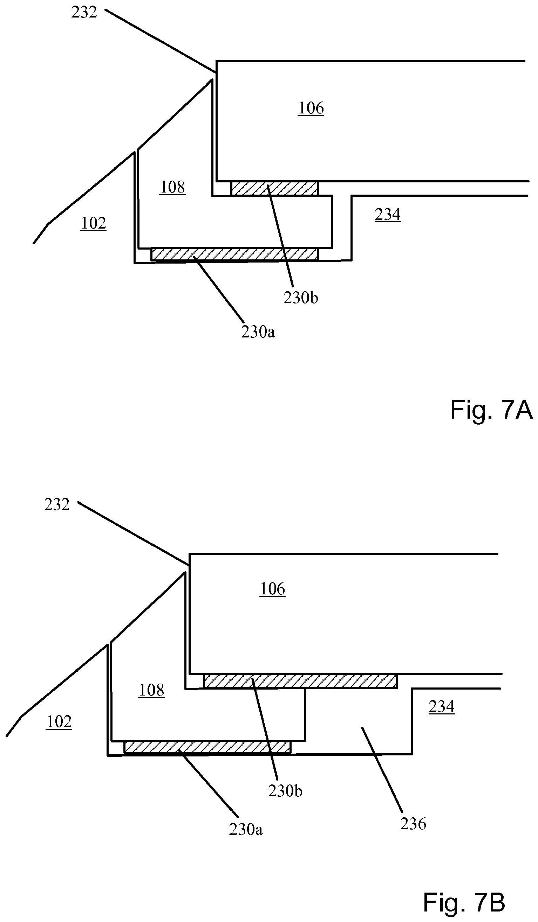

In particular embodiments, the ledges around the sides can include a surface 154 for receiving a trim bead 108 and a cover 106 that spans the cavity formed by the interior cavity. As described above, the cover 106 can be formed from a transparent material. When attached, the cover 106 can protect underlying components, such as a display, from damage. Local side views showing the cover 106 and trim bead 108 mounted to the housing are described in more detail with respect to Figures 7A and 7B.

Features, such as apertures and/or recesses can be formed in the ledges, 156a, 156b, 156c and 156d. For example, two recesses 158 can be formed in side ledge 156d to allow a speaker assembly to be coupled to the housing. The recesses can include an aperture that allows a fastener to be inserted to secure the speaker assembly. In another example, a recess 166 can be formed in side ledge 156d that provides a mounting point for a hall effect sensor. In yet another example, side ledge 156d can include a number of recesses, such as four recesses 168, that can extend into an upper surface of side ledge 156d as well as underneath the side ledge 156d. In one embodiment, the recesses 168 can be configured to allow magnet assemblies to be mounted to the housing 102. The magnet assemblies can be used to secure a cover device that also includes magnets to housing 102.

In one embodiment, a number of brackets can be coupled to the housing 102 to strengthen the housing in particular regions. For instance, the data port opening 122 is relatively large, which can weaken the housing in the area surrounding the opening 122. To strengthen the housing around the data port opening 122, a bracket 152 can be added above the opening. The bracket can be formed from a material, such as a metal. In one embodiment, the bracket can be configured to be attached to the housing, such that it is aligned with the surface 154 for receiving the trim bead. Thus, a portion of the trim bead can be disposed on a bracket, such as bracket 152.

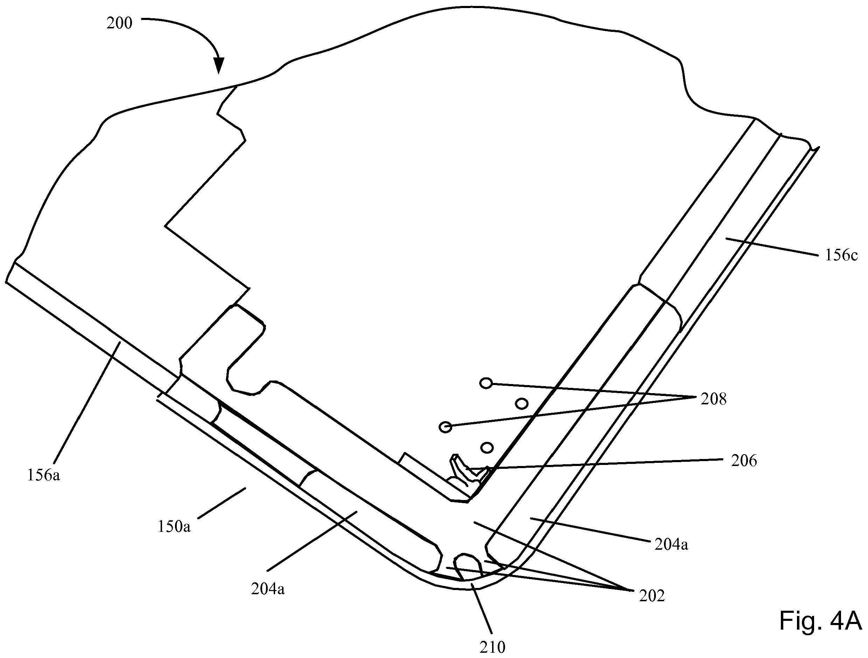

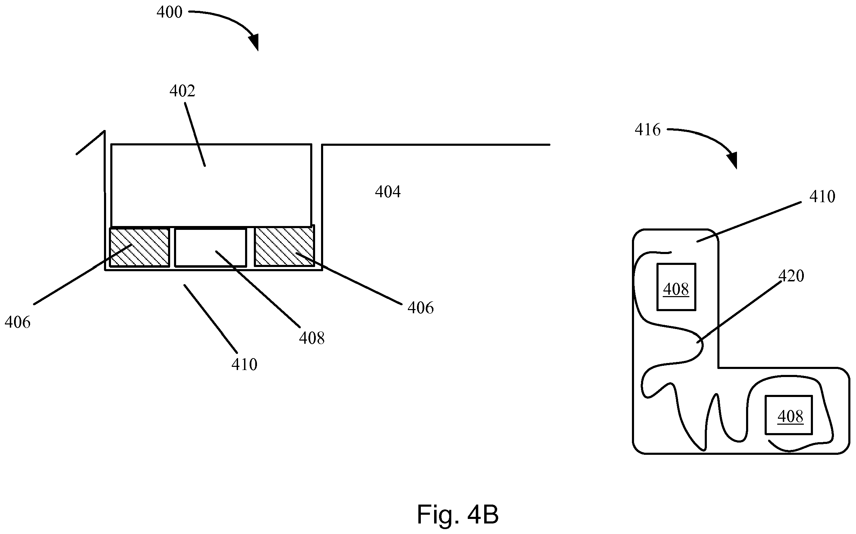

As another example, brackets 150a, 150b, 150c and 150d can be located at each of the respective corners of housing 102. The corner brackets can be used to improve a resistance of the device to impact damage, such as impact damage resulting from the device being dropped on its corners. The impact damage can be reduced because the corner brackets add stiffness that can reduce deformation during an impact event. In one embodiment, the brackets can include a surface for receiving the trim bead 108 that aligns with the surface for receiving the trim bead formed in the side ledges. In addition, when mounted, the brackets can extend towards the interior of the housing to form a ledge, like the side ledges machined into the housing 102. Further details of the corner brackets are described in more detail with respect to Figures 4A and 4B as follows.

Figure 4A shows a perspective view of one corner 210 of the housing 102. In one embodiment, the SIM tray mechanism can be mounted in corner 210 to utilize openings in the housing 110a and 110b shown in Figure 3B. One component 206 of the SIM tray mechanism is shown already installed. The housing 102 can include apertures 208. The apertures can be used with fasteners to secure additional components associated with the SIM tray mechanism.

Corner bracket 150a extends around corner 210 to join side ledge 156c and top ledge 156a. The top and side ledges can be formed by undercutting portions of the housing billet during the machining process. A support shelf at a lower height can be formed beneath the height of the ledges 156c and 156a and the corner bracket. If desired, the support shelf can be undercut like the surrounding ledges. In the corners, the support shelf for the corner bracket 150a does not have to extend all around the corner. Material can be removed to allow a component, such as the SIM tray mechanism 206, to be installed.

In one embodiment, the corner brackets can be bonded to the support shelf using a liquid adhesive. A conductive foam can be placed between the corner bracket and the support shelf to ground the metal bracket to the rest of the structure. Details of a bonding scheme and a stack-up for a corner bracket are described in Figure 4B.

The use of strengthening brackets is not limited to use around a corner and could also be used at other locations, such as between the corners. For example, a portion of ledge 156c can be removed to allow a component to be installed. Then, a bracket that extends just along this side, as opposed to around a corner, could be used to re-form the ledge over the installed component. The bracket may possibly strengthen the housing in the region where the ledge material is removed and replaced with a bracket. In some embodiments, a portion of a ledge can be removed to form a gap in the ledge, such as to install a component underneath the ledge. However, the gap may not be filled using a bridging structure and the housing can be utilized with a discontinuous ledge.

In one embodiment, the bracket 150a can be formed from a material, such as stainless steel. The shape of bracket can be selected to increase the strength of the housing in the region where it is installed. As an example, the bracket 150a can be castellated in corner 210 to improve impact damage resistance during a corner drop event. The castellation can include raised and sunken portions around corner 210. The raised portions can add additional structure that can strengthen the bracket and dissipate force during an impact event. The amount of castellation, i.e., the number of times the raised and lowered pattern of structure is repeated can be varied. Thus, the example in Figure 4A is for the purposes of illustration and is not meant to be limiting.

To provide castellation, bracket 150a includes a ledge portion 204a that aligns with a ledge portion on side ledge 156c. Ledge portion 204a can be followed by a raised portion, a sunken portion and another raised portion and then a sunken portion 204b. The sunken portion 204b can be shaped to align with a ledge portion on top side 156a. A castellation pattern can be specified by the local geometry, such as a local height and width of the raised and sunken portions and a number of raised and sunken portions. These parameters can be varied from design to design.

As previously described, the trim bead 108 can extend around from a ledge portion on 156c onto the ledge portion 204a on the bracket 150a, over the top of the castellation, onto ledge portion 204b and then onto a ledge portion of top side 156a. In one embodiment, the shape of the trim bead can be modified to match the castellation pattern. For instance, the trim bead can be thinned where the structure is raised to form the castellation. In other embodiments, if the trim bead can be sufficiently thin or formed from a compressible material, a thickness profile of the trim bead may not be modified to account for the castellation pattern around corner 210. For instance, a trim bead with a uniform thickness can be used over a structural location with castellation proximate to corner 210.

Figure 4B shows a side view 400 and a top view 416 of a stack-up for bonding a corner bracket to a housing, such as the single piece housing 102, described above with respect to Figures 2 and 3. The bracket 402 can be bonded to an underlying support shelf 402 in the housing using an adhesive. One or more pieces of conductive foam can be placed between the support shelf 410 and bracket 402 to ground the bracket to the rest of housing. In one embodiment, the support shelf beneath the conductive foam can be laser etched to provide a good conductive surface.

The bracket 402 can be attached to the housing such that a top of the bracket is proximately level with a top height of the adjacent structure 404. In one embodiment, to install the bracket, one or more pieces of conductive foam, such as two pieces of conductive foam can be placed on the support shelf and an adhesive path 420 can be routed around the conductive foam. In one embodiment, the adhesive can be a liquid adhesive. In a particular embodiment, the liquid adhesive can be an acrylic adhesive.

Next, a bracket 402 can be placed on top of the foam pieces and a fixture can be placed over the bracket. The fixture can press down on the bracket 402 such that the bracket is installed at the proper height, such as proximately level with the adjacent structure 404. The conductive foam can be loaded when the fixture presses down to push the bracket against the fixture such that the bracket remains at the desired height. The adhesive path 420 can be selected and can be laid down under CNC control to wet the bottom surfaces of the bracket and expand as the bracket is pressed down but not extend into the area next to and underneath the conductive foam. The adhesive can be laid down in this manner to prevent the adhesive from spreading under the foam such that it interferes with the grounding capabilities of the conductive foam.

In 416, the support shelf 410 is shown as a continuous structure. In other embodiments, a portion of the support shelf can be removed. For example, a portion of the support shelf can be removed such that two islands are formed where each piece of the conductive foam rests on a respective island. The bracket 402 can be bonded to each of the islands.

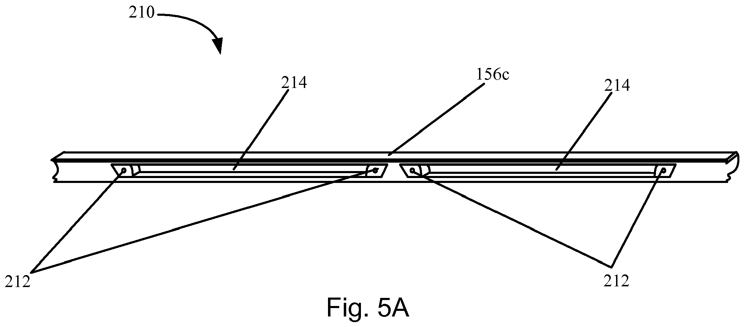

Figure 5A shows a perspective view 210 of one side of the housing 102 across the interior bottom surface of the housing and under ledge 156c on a sidewall. Two recesses 214 can be formed under ledge 156c. The two recesses can each include attachments, such as attachment points 212. In one embodiment, each recess can include two attachments points for attaching a device attachment feature to the housing. The device attachment feature can be used to couple a device to the housing 102, such as a cover.

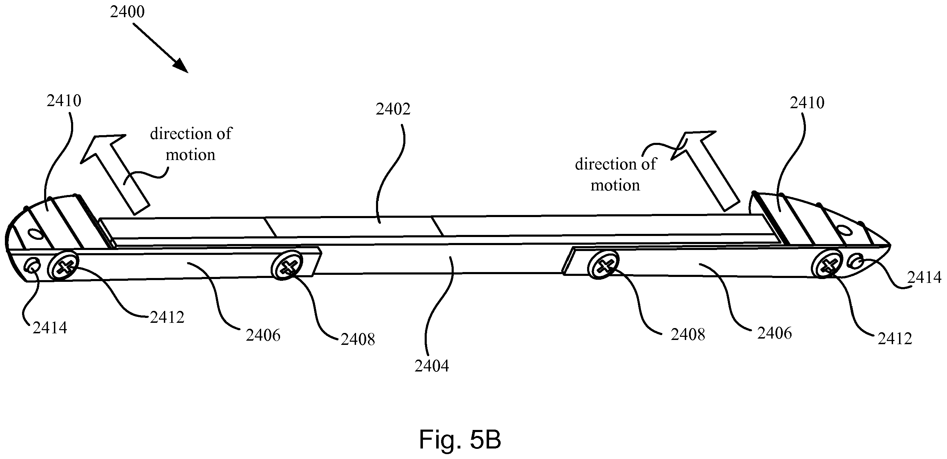

Figures 5B shows a representation of an embodiment of device attachment feature attachment feature 2400 that can be attached to the housing 102. In particular, attachment 2400 can include magnetic elements 2402/shunt 2404 in attached to leaf spring 2406. Leaf spring 2406 can be secured directly to shunt 2404 by way of fasteners 2408 and end supports 2410 by way of fasteners 2412. End supports 2410 can be attached to a support structure such as a housing to provide support for attachment feature 2400. In one embodiment, alignment posts 2414 can be used during assembly to provide alignment for both end supports 2410 and leaf spring 2406.

Figure 6 shows a perspective view of one side of the housing 220 including the cut-out for the RF antenna window 132. The RF antenna window can be configured to support one or more antenna carriers within cavities of the window. In one embodiment, the RF antenna window 132 can include a cavity 162 for supporting an image capture device and/or sensor assembly.

The housing 102 can include a proximately rectangular recess portion in which the RF antenna window 132 is disposed. The bottom of the antenna tray 132 can be curved to conform to an exterior portion of the housing (see Figure 2). In one embodiment, the antenna tray can be supported by the support wall 226 formed in the housing 102. The RF antenna window 132 can include a lip portion 222 that hangs over the support wall 226. The lip portion 222 can help to prevent the antenna tray from being pulled out of the housing. The RF antenna window 132 can be bonded to the housing using a liquid adhesive. The antenna tray 132 can be bonded along the lip portion and exterior facing surfaces of the support wall 226.

The support wall 226 can include a number of openings, such as openings 224. The openings 224 can be aligned with openings in the RF antenna window 132. The openings can allow wires to be passed through the housing and into the antenna carrier to reach components in the RF antenna window 132, such as one or more antennas and the image capture and/or sensor assembly.

In alternate embodiments, an RF antenna window 132 and its associated antennas can be removed. In this embodiment, the support wall 226 can be removed and the exterior and interior portions of the housing proximate to the antenna location can be formed from the same material as the remaining portions of the housing, such as from a single metal billet. If a image capture device is included at the location shown in Figure 6, then a image capture device assembly can be attached directly to the housing 102 rather than the RF antenna window. The image capture device assembly (not shown) can be installed on top of a compressible foam. The thickness of the compressible foam can be selected so that the image capture device assembly is slightly pushed against the cover glass when the cover glass is installed. The force may help to keep the image capture device assembly properly aligned with the cover glass.

Figures 7A and 7B shows a side view of showing a mechanism for coupling the cover to housing. A ledge can be formed on an upper portion of the housing sidewall. The ledge can include a surface for receiving the trim bead 108. Thus, the trim bead 108, which can be a gasket formed from a flexible material, can rest on the ledge of the housing. As described above with respect to Figure 4, at a number of locations the trim bead 108 can be disposed on top of brackets attached to the housing, such as corner brackets. The trim bead 108 can be bonded to the housing using an adhesive 230a, such as an epoxy or PSA tape. Then, the cover 106 can be bonded to the trim bead 108 using an adhesive, such as 230b, around the perimeter of the housing. The trim bead 108 can help form a seal to the interior of the housing. The seal can help to prevent external contaminants, such as moisture, that may be damaging to internal components from entering into the interior of the housing. In addition, the trim bead 108 can raise the cover 106 such that it does not contact the housing 102, thus, providing cushioning between the housing and the cover 16 that can prevent damage to the cover resulting from the cover impacting with the housing. In one embodiment, the top of the cover glass 106 can extend slightly 232 about the top height of the trim bead 108.

Structure, such as 234, can be located underneath the cover 106. The structure 234 can be associated with components located underneath the cover 106, such as the display assembly. Comparing Figures 7A and 7B, it can be seen that amount of underlying structure close to the trim bead 108 can vary. For example, Figure 7B shows a larger gap 236 between the trim bead 108 and the underlying structure as compared to Figure 7A. In some embodiments, when gaps, such as 236, are present, the adhesive 230b, such as a PSA tape, can be extended from between the trim bead 108 and the cover 106 and underneath the cover 106 where portions of the PSA tape are bonded to the cover glass but not an underlying surface, such as the trim bead 108, that can provide cushioning for the cover 106 during an impact event.

In this example, the extended adhesive 230b can act as a safety measure if the cover 106 breaks during an impact event. The cover 106 can be formed from a glass material which can break into shards. The extended adhesive 230b can hold the pieces of the broken cover together so that small shards do not break away from the device during the impact event. Thus, the extended adhesive 230b can serve a function similar to safety glass which can include reinforcing components that provide a limited structural integrity to keep the glass from flying apart during an impact event.

Figure 8 shows a side view of a logo stack-up 250. The housing 102 can include an opening 260 that can be shaped in the form a symbol, such as a logo. In one embodiment, the housing 102 can be less than about 1 mm thick in area sounding the logo. In a particular embodiment, the housing can be about .78 mm thick. Material can be removed from a bottom interior surface of the housing such that a ledge including sides 258a and 258b are formed. The ledge can provide a surface for attaching the logo stack-up 250 to the housing 102.

In one embodiment, an insert 256 can be configured to fit within the opening. The insert can be formed from a material, such as a plastic. The logo insert can be thinner than a nominal thickness of the surrounding housing. In one embodiment, the logo insert can be about .59 mm thick.

In particular embodiments, the insert can be opaque to light, such as painted black, or formed from an opaque material. In other embodiments, the insert can formed from a translucent material. In one embodiment, the translucent material can be configured to diffuse light from an internal light source, such that the logo appears to be lit when viewed from the exterior.

The logo insert 256 can be bonded to a support structure 252 using an adhesive 254. In particular embodiments, the adhesive can be a tape, such as a pressure sensitive adhesive (PSA) tape or an epoxy, and the support structure can be formed from a sheet of metal, such as a sheet of stainless steel. The metal can be shaped such that it fits around the ledge formed in the housing 102. The support structure 252 can be bonded to the ledge using an adhesive, such as a PSA or an epoxy.

In one embodiment, a conductive tape can be used to ground the support structure 252 to the housing, such as a conductive tape placed over a portion of the housing and a portion of the support structure. In another embodiment, a conductive adhesive can be used to couple the support structure 252 to the housing 102 where the conductive adhesive mechanically attaches and grounds the support structure to the housing. In alternate embodiments, rather than using a separate support structure 252 and logo insert 256, a single piece structure can be used, such as a single piece of molded plastic.

After the logo is installed, a top layer on the interior of the housing can be added. For instance, the top of the sheet of stainless steel can be coated in some manner. In one embodiment, an electrophoretic deposition process can be used to deposit the layer.

The logo stack-up 250 can be part of a fire enclosure associated with the housing 102. The fire enclosure can be configured to contain an exothermic event that has occurred within an interior of the housing, such as an exothermic event associated with the batteries. The metal support structure 252 coupled to the logo insert 256 can help to contain an internal exothermic event.

As described above, the support structure 252 and logo insert 256 can be formed as a single piece. In one embodiment, the single piece can be formed from a metal. The metal can be suitable for use as part of the fire enclosure. However, a cosmetic layer can be applied to a portion of the logo insert 256. In another embodiment, the single piece can be formed from a plastic material. If desired, to improve its fire resistance capabilities, a fire retardant film can be applied over the logo insert 256 within the interior of the housing 102.

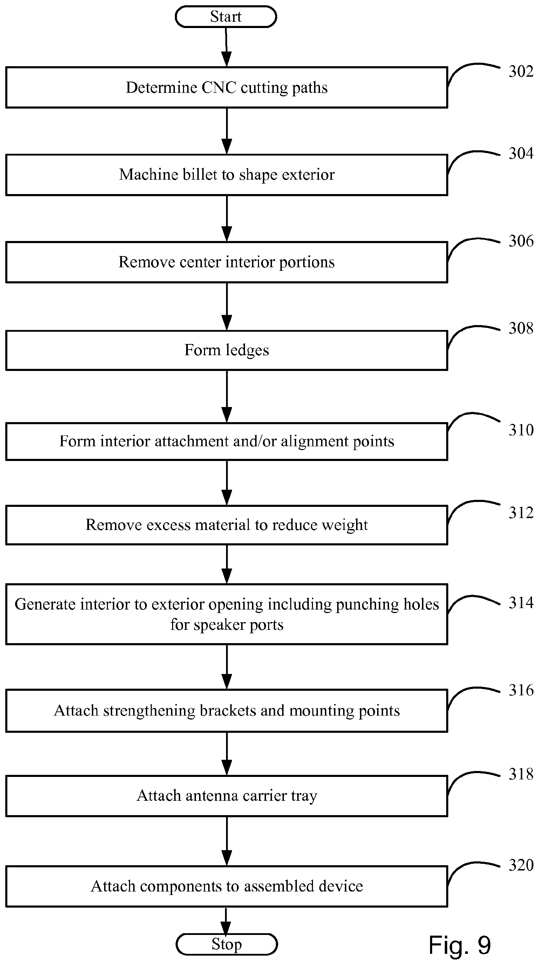

Fig. 9 shows a method 300 of forming a housing for a portable device. In one embodiment, the housing can be formed from a single billet of metal, such as a billet of aluminum. In particular embodiments, the billet can be provided as a rectangular sheet with a nominal thickness of about 11 mm where during the machining process about 90% or more of the billet is removed. After machining, the housing can be less than 1 cm thick.

In 302, the CNC cutting paths can be determined for removing material that allows the final housing shape to be formed. The machining paths can be optimized to minimize the machining time and increase the throughput. In 304, the billet can be machined to form an exterior shape for the housing. As described above, in some embodiments, the exterior shape can form a bottom of the device. Typically, the exterior shape and the interior shape of the housing can be machined separately using different processes.

In 306, machining to form the interior shape of the housing can begin. The initial machining can involve removing bulk interior portions of the housing within its center to form a somewhat rectangular shaped cavity. After the bulk machining is performed, in 308 finer machining can begin. For instance, a ledge can be formed around an outer top portion for supporting a cover. The ledge can be formed undercutting into the side of the billet using an appropriate machining tool, such as a bit with a right angle. The top ledge can be machined to include a surface for receiving the trim bead (see 108).

The machining can involve guiding a tool over a particular path in 3-dimensions. In one embodiment, local relative dimensions can be utilized to guide the path of a machining bit. The use of local relative dimensions can involve determining a path from a reference point on the housing as the housing is being machined as opposed to an absolute position associated with a fixture or another non-local dimension associated with the housing. As an example, when undercuts are generated into the sidewalls, the local thickness dimensions of the sidewalls can be used to determine a machining path for the cutting tools as opposed to a distance from the centerline of the housing so that a desired sidewall thickness is maintained. This process can be repeated at different locations on the housing as different cuts are generated. For instance, when machining a ledge for the logo where the housing thickness is relatively thin, a local thickness of the housing at this location can be used to guide the machining process. Using local relative dimensions can reduce machining errors, which can be important for making sure that cuts, such as sidewall cuts, do not result in a housing that is too thin a particular region.

In 312, interior attachment and/or alignment points can be formed. Interior attachment points can be formed as apertures in the housing. In some embodiments, the apertures can be formed as a raised column or "boss" in the material of the housing. In other embodiments, a recess can be formed in the housing that is configured to receive an additional component with an aperture, such as an aperture lined with metal threads, that can serve as an attachment point. The additional component can be attached to the housing using an adhesive. The apertures can be configured to receive fasteners, such as screws. The attachment points can be used to secure components, such as but not limited to a display assembly, speakers, a SIM tray mechanism and PCBs.

Alignment points can be a cavity, aperture or marking that can be used during the assembly process. For instance, the housing can include a recess configured to receive a portion of an alignment fixture. The alignment fixture can be used to align a component by fitting a portion of the alignment fixture into a recess in the housing and another portion into a recess in the component. The component can then be moved relative to the housing until it is brought into alignment at which point it can be secured. In one embodiment, a recess can be provided in the housing and a recess can be provided in a display assembly that can be used with an alignment fixture to align the display assembly relative to the housing.

In 312, the machining can include removing excess material from the housing. Excess material can be removed from various locations, such as underneath the ledges formed in the housing to lighten the weight of housing. In 314, interior to exterior cutouts can be formed in the housing. For instance, openings can be formed for a data port, SIM card tray, volume switch, a slide switch, power switch and audio jack. In one embodiment, the openings can be formed by machining in a direction normal to the shape of the exterior surface.

In one embodiment, a large number of small holes can be formed in the housing to provide egress for sound generated by one or more internal speakers. The holes can be formed by a hole-punching tool that punches one or more holes at a time. In one embodiment, the holes can be punched along a curved side of the housing from the exterior to the interior of the housing. The holes can be punched over a surface where the curvature is changing, such as a sidewall of the housing. A fixture can be used to rotate the housing such that the holes can be punched proximately normal to the curvature of the exterior surface or to make a cut at some other desired angle.

In particular embodiments, brackets can be coupled to the housing to locally increase the structural integrity of the housing. For instance, a bracket can be mounted near the data port opening on a side of the housing. The data port opening is relatively large and the housing can be thin where the data port is provided. The large opening can weaken the housing. Thus, a support bracket can be added proximate to the data port opening. The support brackets can be bonded to the housing using a bonding agent, such as a liquid adhesive and can be grounded to the housing. In various embodiment, metal brackets can be grounded to the housing using a conductive foam or tape.

In another embodiment, support brackets can be added in corners of the housing. The support brackets can add additional strength that improves the drop test performance of the housing. In one embodiment, the corner brackets can includes a castellation pattern to improve their strength. As previously described, a ledge can be formed around the housing to support a cover. Near the corners, it can be desirable to remove material that forms the ledge in the corner region. The ledge material can be removed so that a mechanism can be installed in the corner. For instance, as described above with respect to Fig. 4, a SIM tray mechanism is installed in one corner of the housing. After the mechanism is installed in a corner where the ledge has been removed, a corner bracket can be attached to form a ledge that lines up with ledges formed on other portions of the housing. The trim bead and then the cover can be attached in the corner using the ledge formed by the corner bracket.

In 318, an RF antenna window can be added to the housing. The RF antenna window can be formed from a radio transparent material, such as a plastic. The antenna carrier can be placed close to an edge of the housing. It can be shaped such that it forms a portion of a continuous exterior portion of the housing. The RF antenna window can be used to mount one or more antenna for receiving wireless data, such as data received from a cellular data network. In 320, additional components, such as the batteries, main logic board, display assembly, trim bead and cover can be attached to the housing until a final assembly configuration is achieved.

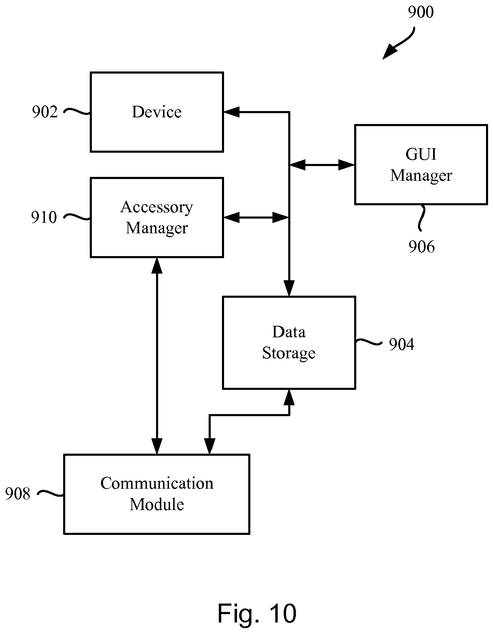

Fig. 10 is a block diagram of an arrangement 900 of functional modules utilized by an electronic device. The electronic device can, for example, be tablet device 100. The arrangement 900 includes an electronic device 902 that is able to output media for a user of the portable media device but also store and retrieve data with respect to data storage 904. The arrangement 900 also includes a graphical user interface (GUI) manager 906. The GUI manager 906 operates to control information being provided to and displayed on a display device. The arrangement 900 also includes a communication module 908 that facilitates communication between the portable media device and an accessory device. Still further, the arrangement 900 includes an accessory manager 910 that operates to authenticate and acquire data from an accessory device that can be coupled to the portable media device.

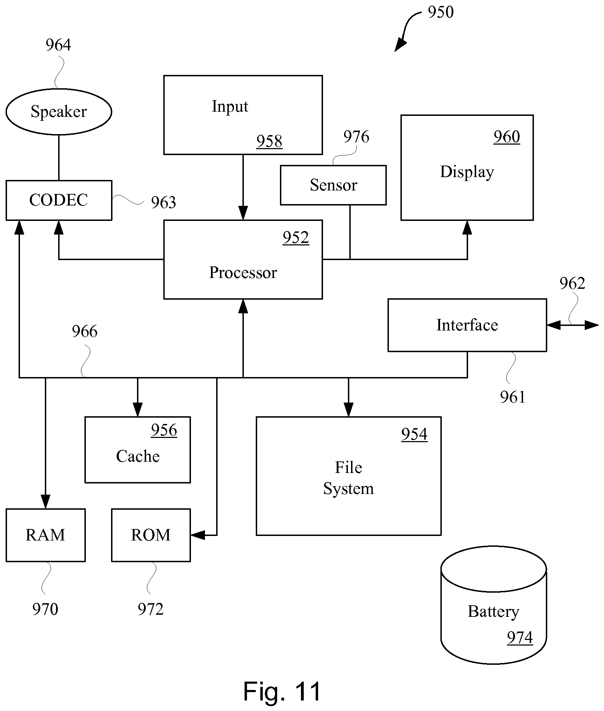

Figure 11 is a block diagram of a electronic device 950 suitable for use with the described embodiments. The electronic device 950 illustrates circuitry of a representative portable media device. The electronic device 950 can include a processor 952 that pertains to a microprocessor or controller for controlling the overall operation of the electronic device 950. The electronic device 950 can be configured to store media data pertaining to media items in a file system 954 and a cache 956. The file system 954 can be implemented using a memory device, such as a storage disk, a plurality of disks or solid-state memory, such as flash memory.

The file system 954 typically can be configured to provide high capacity storage capability for the electronic device 950. However, to improve the access time to the file system 954, the electronic device 950 can also include a cache 956. As an example, the cache 956 can be a Random-Access Memory (RAM) provided by semiconductor memory. The relative access time to the cache 956, such as a RAM cache, can be substantially shorter than for other memories, such as flash or disk memory. The cache 956 and the file system 954 may be used in combination because the cache 956 may not have the large storage capacity of the file system 954 as well as non-volatile storage capabilities provided by the memory device hosting the file system 954.

Another advantage of using a cache 956 in combination with the file system 954 is that the file system 954, when active, consumes more power than does the cache 956. The use of cache 956 may decrease the active time of the file system 954 and hence reduce the overall power consumed by the electronic device. The power consumption is often a concern when the electronic device 950 is a portable media device that is powered by a battery 974.

The electronic device 950 can also include other types of memory devices. For instance, the electronic device 950 can also include a RAM 970 and a Read-Only Memory (ROM) 972. In particular embodiments, the ROM 972 can store programs, utilities or processes to be executed in a non-volatile manner. The RAM 970 can be used to provide volatile data storage, such as for the cache 956.

The electronic device 950 can include one or more user input devices, such as input 958 that allow a user of the electronic device 950 to interact with the electronic device 950. The input devices, such as 958, can take a variety of forms, such as a button, keypad, dial, touch screen, audio input interface, video/image capture input interface, input in the form of sensor data, etc. Still further, the electronic device 950 includes a display 960 (screen display) that can be controlled by the processor 952 to display information to the user. A data bus 966 can facilitate data transfer between at least the file system 954, the cache 956, the processor 952, and the CODEC 963.

In one embodiment, the electronic device 950 serves to store a plurality of media items (e g., songs, podcasts, image files and video files, etc.) in the file system 954. The media items (media assets) can pertain to one or more different types of media content. In one embodiment, the media items are audio tracks (e.g., songs, audio books, and podcasts). In another embodiment, the media items are images (e.g., photos). However, in other embodiments, the media items can be any combination of audio, graphical or video content.

When a user desires to have the electronic device play a particular media item, a list of available media items is displayed on the display 960. Then, using the one or more user input devices, such as 958, a user can select one of the available media items. The processor 952, upon receiving a selection of a particular media item, supplies the media data (e.g., audio file) for the particular media item to one or more coder/decoders (CODEC), such as 963. The CODECs, such as 963, can be configured to produce output signals for an output device, such as speaker 964 or display 960. The speaker 964 can be a speaker internal to the media player 950 or external to the electronic device 950. For example, headphones or earphones that connect to the electronic device 950 would be considered an external speaker.

The electronic device 950 can be configured to execute a number of applications besides media playback applications. For instance, the electronic device 950 can be configured execute communication applications, such as voice, text, e-mail or video conferencing applications, gaming applications, web browsing applications as well as many other different types of applications. A user can select one or more applications for execution on the electronic device 950 using the input devices, such as 958.

The electronic device 950 can include an interface 961 that couples to a data link 962. The data link 962 allows the electronic device 950 to couple to a host computer or to accessory devices. The data link 962 can be provided over a wired connection or a wireless connection. In the case of a wireless connection, the interface 961 can include a wireless transceiver. Sensor 976 can take the form of circuitry for detecting any number of stimuli. For example, sensor 976 can include a Hall Effect sensor responsive to external magnetic field, an audio sensor, a light sensor such as a photometer, a gyroscope, and so on.

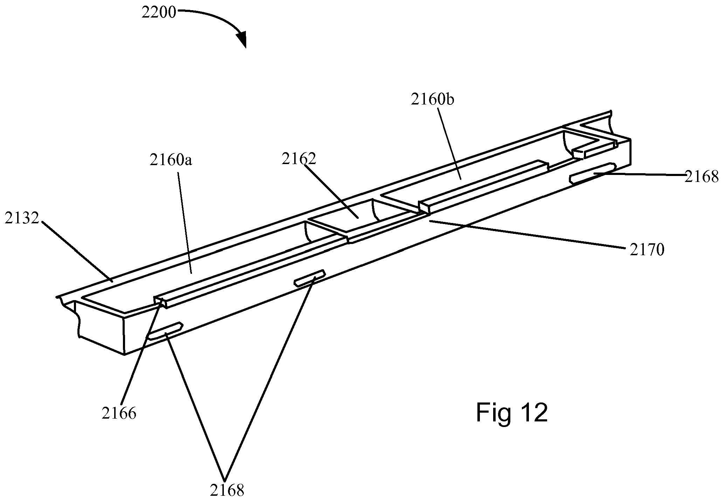

Figure 12 shows a perspective view 2200 of an antenna window 132 mounted to the housing 102 from a different view than shown with respect to Figure 3B. As describe above, the RF antenna window can be configured to support one or more antenna carriers within cavities of the window. As described above, the RF antenna window 132 can optionally include a cavity 2162 for supporting an image capture device and/or sensor assembly.

The housing 102 can include a recessed portion in which the RF antenna window 132 is disposed. In one embodiment, the antenna window 132 can be supported by the support wall 2170 formed in the housing 102. The RF antenna window 132 can include a lip portion 2166 that hangs over the support wall 2170. The lip portion 2166 can help to prevent the antenna tray from being pulled out of the housing. The RF antenna window 132 can be bonded to the housing using an adhesive, such as an epoxy or a PSA tape. The antenna tray 132 can be bonded along the lip portion and exterior facing surfaces of the support wall 2170.

The support wall 2170 can include a number of openings, such as openings 2168. The openings 2168 can be aligned with openings in the RF antenna window 132. The openings can allow wires to be passed through the housing and into the antenna carrier to reach components in the RF antenna window 132, such as one or more antennas and the image capture and/or sensor assembly. In alternate embodiments, an RF antenna window 132 and its associated antennas can be removed. In this embodiment, the support wall 2170 can be removed and the exterior and interior portions of the housing proximate to the antenna location can be formed from the same material as the remaining portions of the housing.

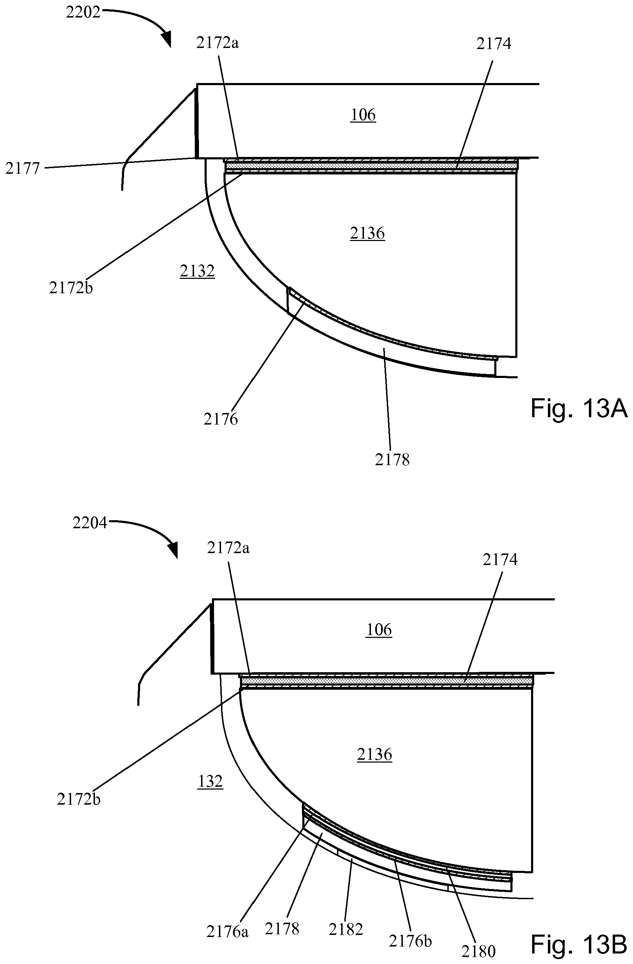

Figures 13A-13C show side views of antenna stack-ups allowing an antenna to be mounted to the bottom of a cover glass 106. In Figure 13A, an antenna 2174 is mounted to a first surface portion of an antenna carrier 2136. The antenna 2174 can be mounted to the antenna carrier 2136 using an adhesive layer 2172b, such as a PSA tape or an epoxy. In one embodiment, the antenna carrier 2136 can be shaped to fit within a particular space available within the housing. For example, in one embodiment, the antenna carrier can be shaped to fit within a cavity, such as 2160a or 2160b, associated with the RF antenna window 132.

In a particular embodiment, a piece of compressible foam 2178 can be bonded to a second surface portion of the antenna carrier 2136 using an adhesive layer, such as 2176. The adhesive layer 2176 can be formed from a bonding agent, such as a PSA tape or a liquid epoxy. After the compressible foam 2178 is secured to the antenna carrier, the antenna carrier 2136 can be placed within a space, such as a space within the RF antenna window 132.

In one embodiment, the adhesive layer 2172a can be provided with a protective film (not shown) to prevent items from sticking to its top before the cover 106 is secured to the antenna stack-up 2202. The cover glass 106 and the antenna 2174 can be aligned with one another and the film can be removed to bond the antenna to the cover glass.

When cover 106 is lowered into place, the adhesive layer 2172a can bond the antenna 2174 to a bottom surface of the cover. The over-all stack up can be configured so that a top height of the stack-up 2202 is higher than the height 2177 at which the bottom of the cover 106 is secured. Thus, when the cover glass 106 is secured into place, a downward force can be exerted on the stack-up by the cover glass. The downward force can result in the foam 2178 decreasing in height such that the foam exerts a force against the bottom of the cover 106.

The upward force exerted by the foam 2178 can push the adhesive layer 2172a against the bottom of the cover and can help to minimize air gaps that can form between the adhesive layer 2172a and the cover 106. Air gaps can affect antenna performance. Thus, minimizing air gaps between the bottom of the cover 106 and the adhesive layer 2172a can help to prevent variations in antenna performance from device to device that can result from a presence of an air gap between the antenna and the cover glass.

The compressible foams described herein can include pores and cavities often referred to as cells. Depending the structure and formulation of the cells, the cells can be described as "open cell," "semi-open cell," and "closed cell." Foam components can be used at a number of different locations within the housing. In different embodiments, the foam formulation that is used, the shape of the foam component and its thickness can vary from location to location.

The force exerted by the foam can increase significantly if the foam is compressed over a certain percentage from its original size, such as to 20% smaller or more from its original size. The compression limit where the force starts increasing significantly can be approached as all of the cells become closed as a result of the compression. The compression limit where forces starts increasing significantly after the foam is compressed beyond a certain limit can vary from foam type to foam type. However, the foam can be sized such that this limit is not reached when the cover is bonded in place over the foam.

In alternate embodiments, rather using a compressible foam or in conjunction with a compressible foam, other mechanisms can be used to push the antenna against the bottom of the cover glass or against some other desired surface to help to form a good seal. In general, there are different configurations of mechanisms that can use force generating components, such as "spring-like" elements, to accomplish this objective of pushing the antenna against the cover glass. As an example, in different embodiments, a mechanism can include the use of a cantilevered spring, a coiled geometry or gas-filled pillows. In addition, if multiple antennas are installed in this manner, the mechanism used to push the antenna a desired surface can vary from location to location.

For antenna consistency, it can be desirable to have a certain amount of force pushing against the antenna during the bonding process to the cover glass. As described above, a force generating mechanism such as a compressible foam can be used to exert the force. However, after the antenna is bonded to the cover glass and the cover glass is secured to the housing, it can be undesirable to have too much force pushing against the antenna and hence the cover glass because the force pushing on the cover via the antenna can potentially reduce the adhesion of the cover glass to the housing resulting in reliability issues.

To prevent too much force being generated after the cover glass is attached to the housing, a nominal force can be selected that accounts for variations in the force that can be generated as a result of assembly tolerances where in the worst case enough force is still provided to the antenna to meet the minimum force requirements needed to generate the desired antenna performance. In the case of foam, assembly tolerances can result in greater or smaller amounts of foam compression and hence greater or smaller amounts of force exerted by the foam on the antenna. To provide the nominal force using foam, a foam thickness can be selected where the amount of compression anticipated to be exerted on the foam is far from the over compression limit and where thickness variations in the foam resulting from assembly tolerances are small relative to the overall foam thickness.

In alternate embodiments, a force generating mechanism can be provided that exerts the nominal force on the antenna during bonding of the antenna to the cover glass but where the nominal force provided by the force generating mechanism is decreased or eliminated after the bonding of the antenna to the cover glass, such as when the cover glass is secured to the housing. As an example, mechanical snaps can be used on an antenna carrier. The mechanical snaps can be configured to push the antenna carrier and the antenna against the glass with a particular force profile, but then snap into place after the cover glass reaches its installed position. After snapping into place, the force exerted by the mechanical snaps can be reduced or eliminated.

In another example, a friction fit process could be used. An antenna carrier can be configured to interfere with a space in which it is to be installed. For instance, the antenna carrier can include a feature, such as a protuberance, a cavity or rubber gasket, that can cause interference with a surrounding space in which it is to be installed. During installation, the antenna carrier can be placed proximate to the space it is to be installed and then the cover glass can be pushed antenna and the antenna carrier. As the antenna carrier is pushed into its installed position, the friction resulting from the interference provides resistance that pushes antenna carrier and hence the antenna against the cover glass. After the antenna carrier reaches its final position, the force exerted by the antenna carrier can be reduced or eliminated.

In yet another example, a semi-rigid, yet deformable material can be placed under antenna carrier, such as a putty or wax. As the antenna carrier is pressed into the deformable material, the nominal force needed to bond the antenna to the glass can be generated. Afterward deformation, the deformable material can set in its deformed shape such that there is no (or little force) pushing against the glass after it is secured into place.

In Figure 13B, an alternate antenna stack-up 2204 is shown. In this embodiment, a proximity sensor 2182 is bonded to the foam layer 2178. In addition, a shielding layer 2180, such as a metal shielding layer, is placed between the proximity sensor 2182 and the antenna 2174. In one embodiment, the shielding layer can be formed from a metal film. In this embodiment, the shielding layer may not be grounded.. The shielding layer 2180 can help to prevent the antenna 2174 from receiving signals generated by the proximity sensor 2182. In another embodiment, the shielding layer can be grounded to a metal portion of the housing.

In one embodiment, the shielding layer 2180 can be disposed between the foam 2178 and the antenna carrier 2136 via adhesive layers 2176a and 2176b. In other embodiments, the shielding layer 2180 can be disposed in another location. For instance, a shielding layer 2180 can be built into the antenna carrier 2136.

The proximity sensor can be used to detect whether an object, such as a human hand, is close to the RF antenna window 132. The portable device can be configured to supply variable amounts of power to the antenna 2174 and hence, affect a strength of the signal emitted by the antenna 2174. In one embodiment, when an object or surface is detected close to the proximity sensor, the portable device can be configured to reduce an amount of power supplied to the antenna 2174. In another embodiment, if the device includes multiple antennas, a proximity sensor can be provided with each antenna and the amount of power supplied to each antenna can be adjusted on an antenna by antenna basis. Thus, in some embodiments, if an object is detected close to one antenna but not another of the antennas, then power can be reduced to one antenna but not the other antenna. In other embodiments, the power can be reduced to both antennas when an object is detected proximate to one or the other antenna.

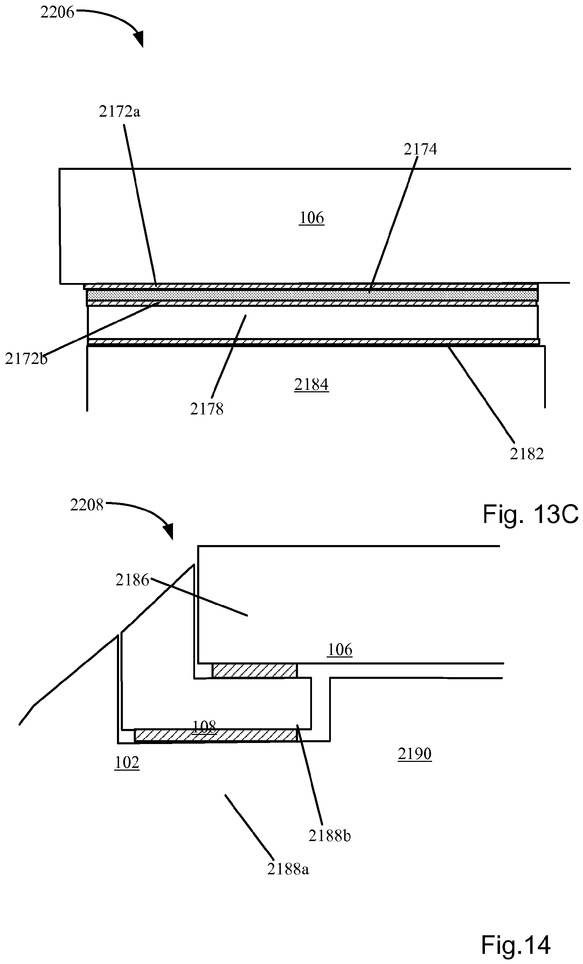

In Figure 13C, another antenna stack-up 2206 is shown. In this embodiment, antenna 2174 is bonded to the foam 2178 via adhesive layer 2172b. The foam 2178 is then bonded to an underlying support structure 2184 via adhesive layer 2182. The foam 2178 can help to generate a good seal with a minimal air gap between the antenna 2174 and the cover 106. As is described in more detail with respect to Figures 13A and 13B, an antenna and foam stack-up, such as 2206, can be bonded to a speaker assembly.

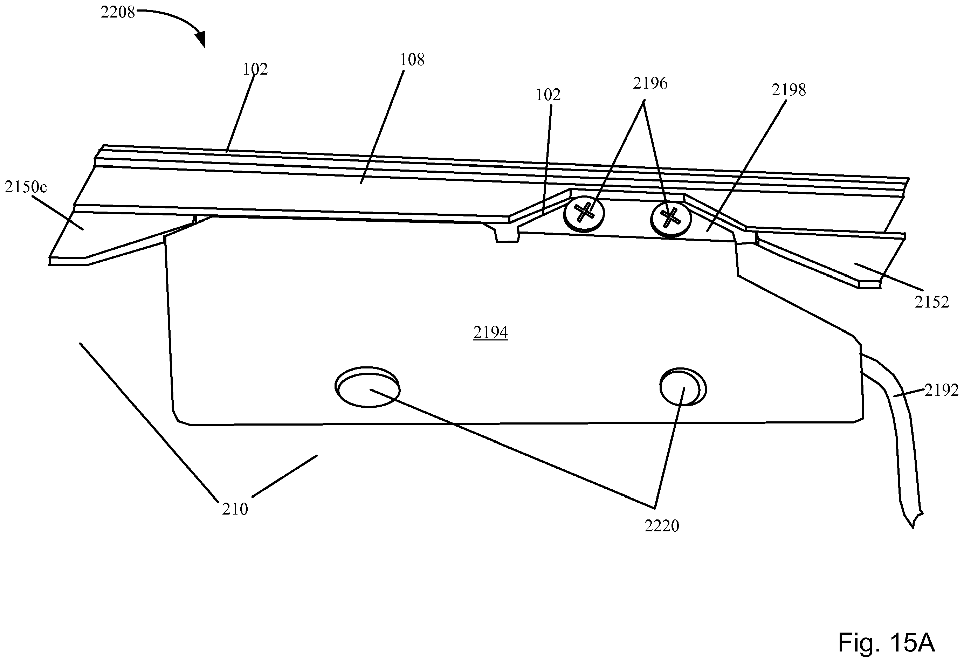

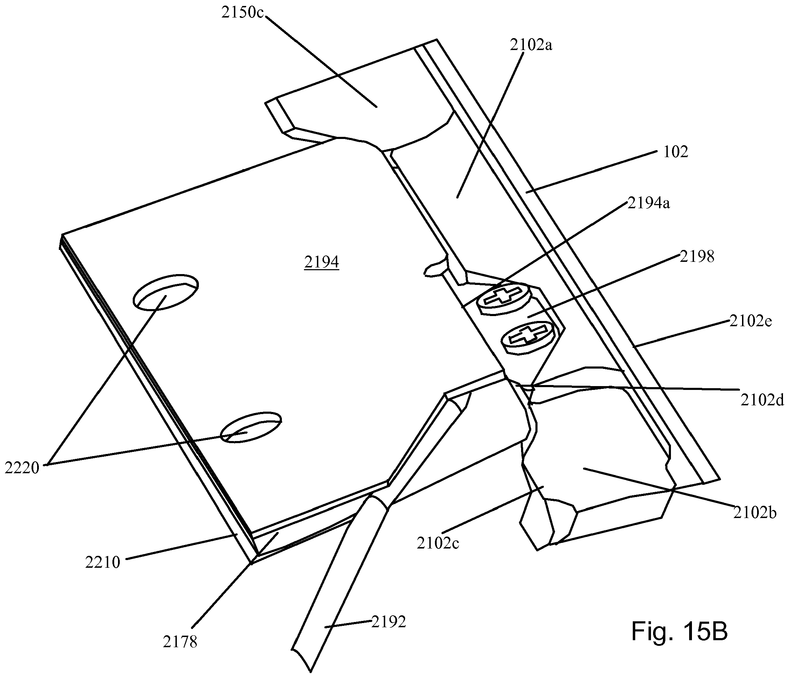

With respect to Figures 14, 15A and 15B, an antenna stack-up configuration is described where the an antenna is secured to the bottom a cover glass close to where the cover glass attaches to the housing. Therefore, with respect to Figure 14, mounting the cover glass to the housing is described in general. When an antenna is mounted close to where the cover glass is attached to the housing, the housing and the apparatus for attaching the cover glass to the housing can be modified. In a particular embodiment, details of these modifications are described with respect to Figures 6A and 6B.

Figure 14 shows a side view of a stack-up 2208 for bonding a cover 106 to the housing 102. The housing 102 can include a surface for receiving a trim bead 108. The trim bead 108 can be mounted to the housing using an adhesive layer, such as 2188a. In one embodiment, the trim bead 108 can be disposed around an outer perimeter of the housing 102. In the embodiment where an antenna window is used, a portion of the trim bead 108 can extend over the antenna window. The cover 106 can be bonded to the trim bead 108 via an adhesive layer, such as 2188b. When the cover 106 is installed it can enclose underlying structures, such as 2190, which can be associated with various device components.

Figure 15A shows a perspective views an antenna stack-up located near an outer edge of the housing 102. In one embodiment, the antenna 2194 can be part of an antenna stack-up including a compressible foam material as was described above with respect to Figure 13C. In one embodiment, the antenna stack-up can be mounted to a speaker assembly 2210. The antenna can include alignment holes 2220 that can be used to align the antenna 2194 to the cover glass. The antenna 2194 can be coupled to a wire 2192 that allows information to be transferred between the antenna and a logic board, such as the main logic board on the device. The information can be related to signals received by the antenna 2194 or signals to be broadcast by the antenna. In one embodiment, the antenna 2194 can be used to implement a wireless protocol, such as Wi-Fi.

To improve wireless performance, it can be desirable to place the antenna close to an edge of the housing. If the housing is formed from a radio opaque material, such as a metal, to improve antenna performance, it can be desirable to thin the housing 102 as much as possible proximate to the antenna while maintaining a relatively uniform thickness of metal next to the antenna. In Figure 15A, an antenna 2194 is mounted close to one edge of the housing between corner bracket 2150c and support bracket 2152 on the housing 102 (see Figure 3B). In other embodiments, the antenna 2194 can be mounted at other locations proximate to the housing. Further, the antenna 2194 can be mounted on top a speaker assembly or on top of some other internal structure. Thus, this example is provided for the purposes of illustration only and is not meant to be limiting.

In Figure 15A, the trim bead 108 includes a cut-out portion. The cut-out portion allows a grounding tab 2198 to be grounded to the housing 102 next the antenna 2194. The grounding tab 2198 can be secured to the housing 102 via one or more fasteners, such as fasteners 2196. In one embodiment, a cover layer (not shown) can be placed over the fasteners after the grounding tab 2198 is secured to the housing. As described above, to improve antenna performance, it can be desirable to thin the housing 102 proximate to the antenna 2194. This feature is illustrated with as follows with respect to Figure 15B.

In Figure 15B, the support bracket 2152 is removed to show the underlying structure of the housing. The housing 102 includes a ledge 2102a for receiving the trim bead 108. Next, to ledge 2102a, another ledge 2102b is located. The ledge 2102b is configured to receive the support bracket 2152 shown in Figure 15A. The ledge 2102b is located below ledge 2102a so that, when the support bracket 2152 is resting on the ledge 2102b, the top of the support bracket is about the same height as ledge 2102a. Then, the trim bead 108 can rest across the top surfaces of bracket 2150c, bracket 2152 and ledge 2102a.

In Figure 15B, the distance between side 2194a and an exterior edge of housing is approximately the distance between locations 2102d and 2102e on the housing. The distance is proximately the thickness of the housing at this location. Along side 2194a of the antenna 2194, the thickness of the housing is relatively constant and is proximately the thickness of the housing between locations 2102d and 2102e. In Figure 15B, it can be seen at location 2102c on ledge 2102b that the housing is thicker at this location relative to the thickness of the housing along 2194a, i.e., location 2102d is closer to the edge of the housing than location 2102c. As described above, providing a relatively thinner housing with a constant thickness proximate to the antenna may help to improve the antenna performance.

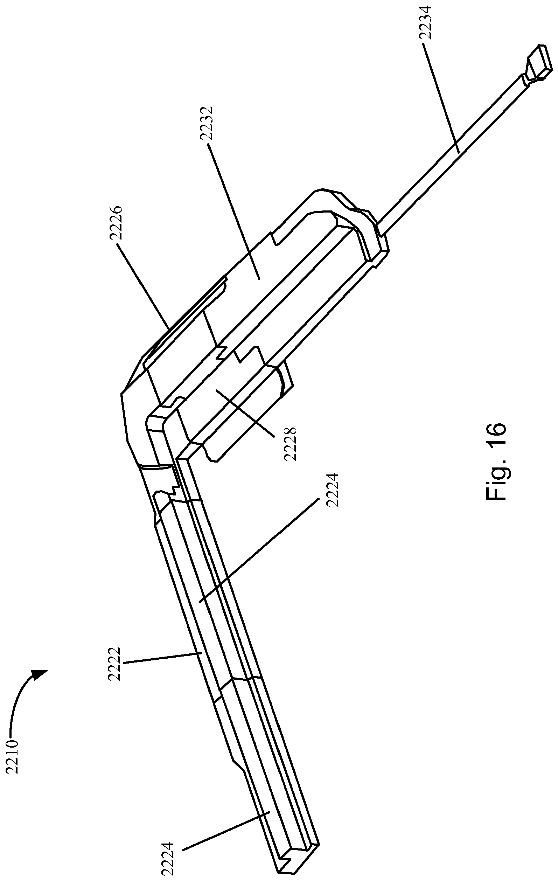

Figure 16 is a perspective view of a speaker assembly 2210. As described above, in one embodiment, an antenna stack-up can be mounted on top of the speaker assembly 2210. For example, the antenna can be mounted to the speaker assembly proximately at location 2232. The speaker assembly 2210 can include a housing 2224 and a connector 2234 that allows the speaker to receive signals that are converted into sound. The housing 2224 can enclose one or more speaker drivers. In one embodiment, the housing 2224 can enclose two speaker drivers.

One concern with mounting an antenna, such as 2194 in Figure 15A, is that magnets in the speaker drivers can generate EMI that can affect the antenna performance. In one embodiment, to mitigate potential EMI from the speaker drivers, each of the drivers can be grounded to a metal portion of the housing 2224. For instance, a first driver can be grounded to metal portion 2222 in housing 2224 and a second driver can be grounded to a metal portion 2226 in housing 2224. Then, a conductive material, such as a conductive tape, can be coupled to each of the metal portions and wrapped around the housing 2224, such that a faraday cage is formed around each speaker driver. For example, conductive tape 2234 is coupled to the metal portion 2222 and wrapped around the housing 2224 and conductive tape 2228 is coupled to the metal portion 2226 and wrapped around housing 2224. Thus, a faraday cage is formed around each of the two drivers. Finally, the conductive tape used to form the faraday cage, such as 2224 and 2228, can be grounded to the housing.

In addition, the use of conductive tape can provide other advantages. For instance, the speaker assembly can include metal components that vary in size, shape and their installed position within the assembly. These variations can affect antenna performance depending on where the antenna is installed relative to the metal components. The conductive tape can provide a constant ground plane between the antenna and the metal components that can help mitigate any effects resulting from variations in the size, shape and position of the metal components of the speaker assembly relative to the antenna. Another example potential advantage of using conductive tap is that the conductive tape can be used to fill gaps and openings between metal objects that can resonate at radio frequencies that reduce antenna performance.

As noted above, grounding can be important for maintaining consistent antenna performance. In addition, other components can be sensitive to EMI and a good grounding scheme can help to mitigate EMI issues. One component that can be sensitive to EMI is a touch panel, such as a capacitive touch sensor. The touch panel can be located over a display module, such as a display module including an LCD display. A few details in regards to grounding the display module to mitigate EMI issues associated with the proximity of the touch panel to the display module as well as grounding the display module to mitigate EMI issues associated with the proximity of the display module to the one or more antennas is described in more detail as follows.

To meet overall thickness objective for the portable computing device, it can be desirable to minimize the thickness of various device components. For example, a display module without a front bezel can used to make the display module thinner. As another example, for a portable device with a touch panel, the touch panel can be placed relatively close to display components associated with the display module, such as an LCD glass associated with an LCD display. In a particular embodiment, a touch panel layer can be located less 1 mm in distance from an EMI generating layer in the display module. The EMI generating layer or layers in a display module can vary depending on the display technology that is utilized and the example of an LCD glass is provided for the purposes of illustration only.

As noted above, the EMI generating layer or layers in the display module can be grounded to mitigate EMI effects on the touch panel. In the case of the display module, it is desirable to perform this grounding while not increasing or at least adding a minimum amount of the thickness to the display module. Towards this objective, in one embodiment, a conductive tape can be used to ground the EMI generating display circuitry within the display module to a metal portion of the display module housing, such as grounding thin-film traces on an LCD glass to the metal portion of the housing. In a particular embodiment, the thin-film traces can be ITO traces.

The conductive tape can be less than .1 mm thick. In a particular embodiment, the conductive tape can be about .06 mm thick. The conductive tape can use an adhesive that does not corrode or damage in any manner the substrate to which it is bonded, such as a thin film formed on an LCD glass. The conductive tape can be formed with a color that is cosmetically acceptable. For example, in one embodiment, a visible portion of the conductive tape can be a "black" color.

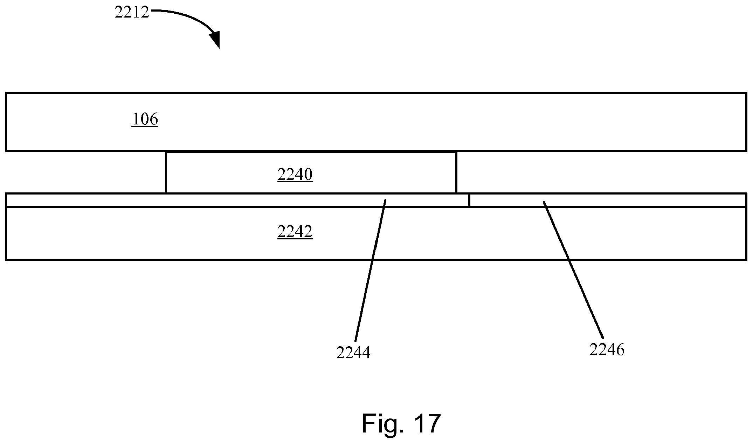

An embodiment of a grounding scheme for a display module is described as follows. Figure 17 shows a side view of a stack-up 2212 for providing imaging services and touch recognition capabilities. The display module 2242 can be disposed beneath the cover glass 106. A touch panel 2246 can be located above the display module 2242. A layer of conductive tape 2244 can be provided to ground EMI generating display circuitry in the display module 2242, such as a thin film with circuit traces on an LCD glass, that can affect the touch panel 2246. In one embodiment, a dust shield layer 2240 can be disposed above the conductive tape 2244 and beneath the cover 106.

In a particular embodiment, one end the conductive tape 2244 can be coupled to one or more layers of the EMI generating display circuitry in the display module 2242, such as a film with circuit traces on an LCD glass. Then, the conductive tape 244 can be attached to a metal portion of a housing for the display module 2242. For instance, if the metal portion of the housing extends up the sides of the display module 2242, then the conductive tape can be extended over a top of the display 2244 and partially around the side and attached to the metal portion on the side. If the metal portion is on the bottom portion of the display module 2242 and does not extend around the sides, then the conductive tape can be extended over a top of the display 244, around the side and partially onto the bottom portion of the display module. One advantage of using a conductive tape layer, such as 244, is that it may be thinner than using a corresponding metal structure for grounding purposes.

To control interference and antenna resonances between the display circuitry associated with the display module 2242 and one or more antennas, the metal chassis of the display module can be grounded to the antenna's ground plane. In one embodiment, this grounding can be accomplished by cutting slits in the conductive tape associated with the display module 2242, such as 2244, adhering a conductive foam to the display module 2242 proximate to the slits and then the compressing the foam into a gap where the foam can contact a conductive surface associated with the antenna's ground plane. The foam can be compressed in this manner during the installation of the display module 2242. In a particular embodiments, foam can be used at multiple locations to ensure good grounding between the display module and the antenna ground plane.

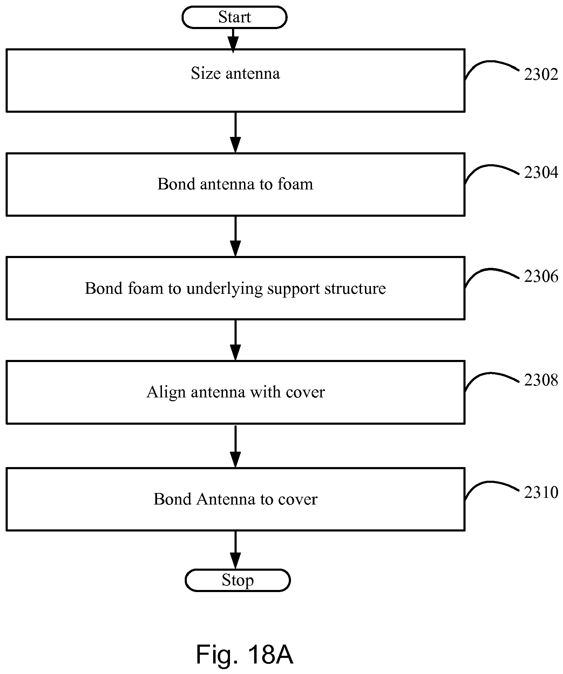

Figure 18A shows a method of generating an antenna stack-up for a portable device. In 2302, a shape and a size of the antenna can be determined. The shape and size can be based upon such factors as packaging restrictions and wireless performance considerations. In 2304, the antenna can be bonded to a compressible foam. A bonding agent, such as a pressure sensitive adhesive (PSA), can be used to bond to the antenna to the foam. In 2306, the foam can be bonded to an underlying support structure. In one embodiment, previously described with respect to Figure 13C, the foam can be bonded to the support structure associated with a speaker assembly.

In 2308, the antenna can be aligned with a cover, such as a cover glass for the portable electronic device. The cover glass can be both transparent to visible light and radio waves. In one embodiment, the antenna assembly can include alignment holes for receiving alignment points on the cover. The cover glass and the antenna can be aligned as part of bonding the cover to the housing. In 2310, the antenna can be bonded to the cover. The antenna can be bonded to the cover using an adhesive, such as a PSA tape.

When the antenna is placed against the cover, the foam can be sized such that the foam is compressed. The compression of the foam can exert a force that presses the antenna against the bottom of the cover. The pressure exerted by the foam can help to form a good seal between the cover and the antenna, such as a seal where the air gaps between the antenna and the cover are minimized and relatively constant across the interface between the antenna and the cover, i.e., air bubbles that affect antenna performance are minimized.

The force exerted by the foam can increase significantly if the foam is compressed over a certain percentage from its original size, such as to 20% smaller or more from its original size. The limit can be reached when all the open cells of the foam are compressed. The compression limit where forces starts increasing significantly after the foam is compressed beyond a certain limit can vary from foam type to foam type. However, the foam can be sized such that this limit is not reached when the cover is bonded in place over the foam.

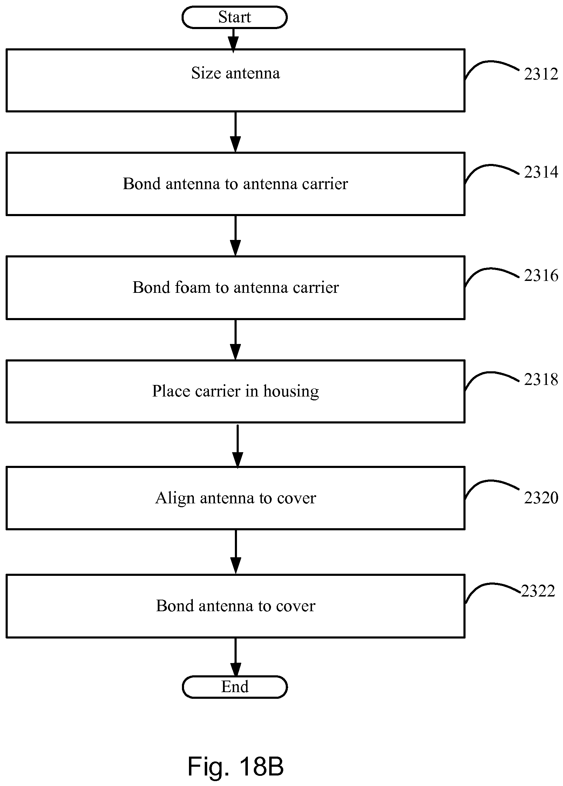

Figure 18B shows another embodiment of a method of generating an antenna stack-up for a portable device. In 2312, the antenna can be sized and shaped. In 2314, the antenna can be bonded to one side of an antenna carrier (e.g., see 2136 in Figures 13A and 13B. The shape of the antenna can be varied. Typically, the shape can be selected to fit within some space specified within the housing where the specified shape can be varied.

In 2314, the antenna can be bonded to one surface portion of the antenna carrier. In 2316, a compressible foam, such as an open cell foam, can be bonded to another surface portion of the antenna carrier. In one embodiment (see Figure 13B), a component such as a proximity sensor and a shield material can be bonded to compressible foam. The shield material can shield the antenna from EMI generated by the component. In 2316, the antenna carrier including the antenna can be placed within the housing, such as within a cavity associated with an RF antenna window. In 2320, the antenna can be aligned with a cover glass and then, in 2322, the antenna can be bonded to cover glass. When cover glass is secured into position, the foam can be compressed such that a force is exerted through the antenna carrier that presses the antenna against the cover. Again, the force exerted by the foam can improve the sealing between the antenna and the cover, such as by minimizing the air gaps. Minimizing the air gaps can limit variations in wireless performance from device to device that can result from having air gaps that vary from device to device. Large variations in wireless performance from device to device can be undesirable.

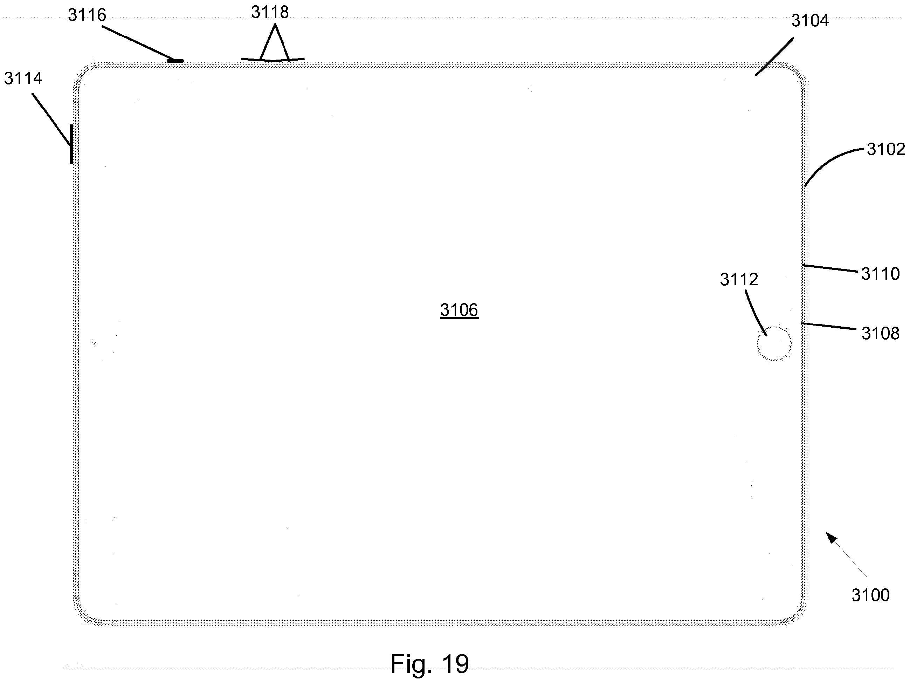

Figure 19 illustrates a specific embodiment of portable computing device 3100. More specifically, Figure 19 shows a full top view of fully assembled portable computing device 3100. Portable computing device 3100 can process data and more particularly media data such as audio, video, images, etc. By way of example, portable computing device 3100 can generally correspond to a device that can perform as a music player, game player, video player, personal digital assistant (PDA), tablet computer, camera, and/or the like. With regard to being handheld, portable computing device 3100 can be held in one hand by a user while being operated by the user's other hand (i.e., no reference surface such as a desktop is needed). For example, the user can hold portable computing device 3100 in one hand and operate portable computing device 3100 with the other hand by, for example, operating a volume switch, a hold switch, or by providing inputs to a touch sensitive surface, such as a display or pad.

Portable computing device 3100 can include single piece housing 3102 that can be formed of any number of materials, such as plastic or metal, which can be machined, forged, molded, or otherwise processed into a desired shape. In those cases where portable computing device 100 has a metal housing and incorporates RF based functionality, it may be advantageous to provide at least a portion of housing 3102 in the form of radio (or RF) transparent materials, such as ceramic or plastic to permit transmission of RF signals therethrough. In any case, housing 3102 can be configured to have a cavity for at least partially enclose any suitable number of internal components associated with the portable computing device 3100. For example, housing 3102 can enclose and support internally various structural and electrical components (including integrated circuit chips and other circuitry) to provide computing operations for portable computing device 3100. The integrated circuits can take the form of chips, chip sets, or modules, any of which can be surface mounted to a printed circuit board (PCB) or other support structure. For example, a main logic board (MLB) can have integrated circuits mounted thereon that can include at least a microprocessor, semi-conductor (such as FLASH) memory, various support circuits and so on.

Housing 3102 can include opening 3104 for placing internal components therein and may be sized to accommodate a display assembly or system suitable for providing a user with at least visual content, such as, for example, via a display. In some embodiments, the display system can include touch sensitive capabilities providing the user with the ability to provide tactile inputs to portable computing device 3100 using touch inputs.

A display system can be formed of a number of layers. A separate transparent protective layer 3106 formed of polycarbonate or other appropriate plastic or highly polished glass can be positioned over the display system. Using highly polished glass, protective layer 3106 can take the form of cover glass 3106 substantially filling opening 3104. Trim bead 3108 can be used to form a seal between cover glass 3106 and housing 3102. Trim bead 3108 can be formed of a rigid plastic material. In this way, trim bead 3108 can provide protection to the edge of the cover glass 3106. The trim bead 3108 can be injection molded plastic with a very thin cross-section so it can be very difficult to handle, control, and measure. The trim bead 3108 can also be very difficult to mold consistently to the same size, as variations in temperature and humidity at the molding site can cause a big percentage increase or decrease in the size of the trim bead 3108. Thus, different bins of housings and trim beads can be sorted and then matched so that the correct housings and trim beads can be matched to minimize the gap between the housing 3102 and trim bead 3108 to be about 0.05 mm.

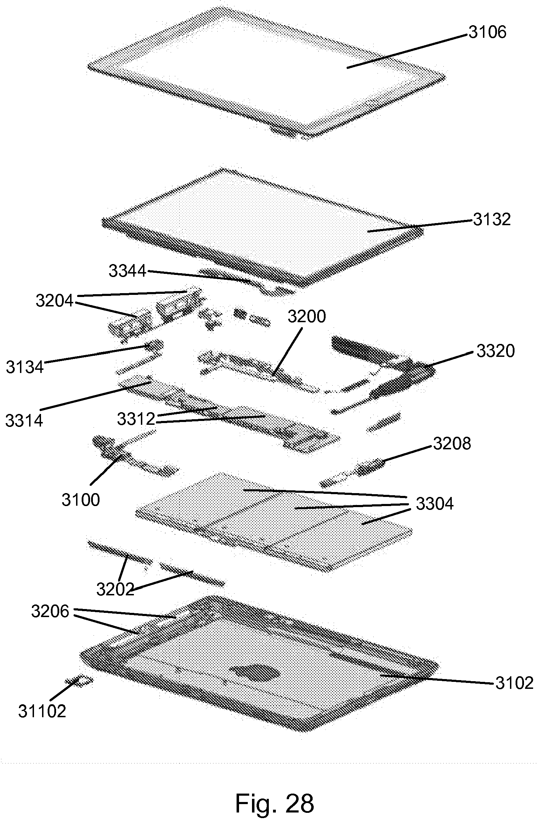

In this embodiment, racetrack 3110 can be defined as the uppermost portion of the housing 3102 that surrounds cover glass layer 3106. In order to maintain the desired aesthetic look and feel of portable computing device 3100, it is desirable that any offsets between the housing 3102 and cover glass 3106 be minimized by centering racetrack 3110. A display panel (shown in Figure 28) underlying cover glass 3106 can be used to display images using any suitable display technology, such as LCD, LED, OLED, electronic or e-inks, and so on.

Portable computing device 3100 can include a number of mechanical controls for controlling or otherwise modifying certain functions of portable computing device 3100. For example, power switch 3114 can be used to manually power on or power off portable computing device 3100. Slide switch 3116 can be used to mute any audio output provided by portable computing device 3100 whereas volume switch 3118 can be used to increase/decrease volume of the audio output by portable computing device 3100. In the described embodiment, the slide switch 3116 can be a sliding switch and the volume switch 3118 can be a rocker switch. In other embodiments, slide switch 3116 can be provided for other functions. It should be noted that each of the above described input mechanisms are typically disposed through an opening in housing 3102 such that they can couple to internal components.

Portable computing device 3100 can include a mechanism for wireless communications, as either a transceiver type device or receiver only, such as a radio. Portable computing device 3100 can include an antenna that can be disposed internal to a radio transparent portion of housing 3102. In some embodiments, an antenna can be incorporated into the trim bead 3108 or cover glass 3106. In other embodiments, a portion of housing 3102 can be replaced with radio transparent material in the form of an antenna window 3140 described in more detail below. The radio transparent material can include, for example, plastic, ceramic, and so on. The wireless communications can be based on many different wireless protocols including for example 3G, 2G, Bluetooth, RF, 802.11, FM, AM, and so on. Any number of antennae may be used, which can use a single window or multiple windows depending on the needs of the system. In one embodiment, the system can include at least first and second antenna windows built into the housing.

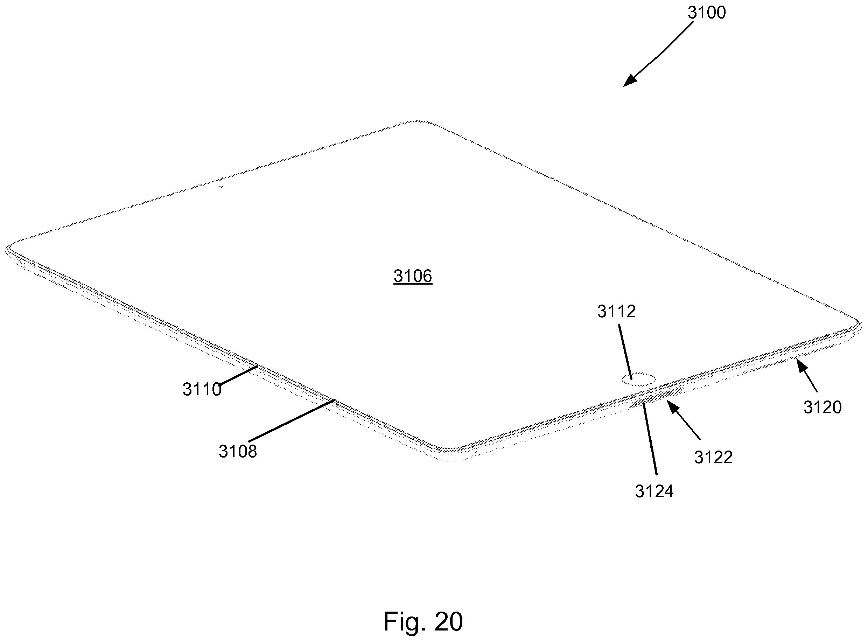

Figure 20 shows a perspective top view of portable computing device 3100 in accordance with the described embodiments. As shown in Figure 20, portable computing device 3100 can include one or more speakers 3120 used to output audible sound. Portable computing device 3100 can also include one or more connectors for transferring data and/or power to and from portable computing device 3100. For example, portable computing device 3100 can include multiple data ports, one for each configuration of portrait mode and landscape mode. However, the currently described embodiment includes a data port 3122 that can be formed of connector assembly 3124 accommodated within an opening formed along a first side of housing 3102. In this way, portable computing device 3100 can use data port 3122 to communicate with external devices when portable computing device 3100 is mounted in a docking station. It should be noted that in some cases, portable computing device 3100 can include an orientation sensor or an accelerometer that can sense the orientation or movement of portable computing device 3100. The sensor can then provide an appropriate signal which will then cause portable computing device 3100 to present visual content in an appropriate orientation. Such sensors can be coupled to a sensor board 3200, which will be described in more detail below.

Connector assembly 3124 can be any size deemed appropriate such as, for example, a 30 pin connector. In some cases, the connector assembly 3124 can serve as both a data and power port thus obviating the need for a separate power connector. Connector assembly 3124 can be widely varied. In one embodiment, connector assembly 3124 can take the form of a peripheral bus connector, such as a USB or FIREWIRE connector. These types of connectors include both power and data functionality, thereby allowing both power delivery and data communications to occur between the portable computing device 3100 and the host device when the portable computing device 3100 is connected to the host device. In some cases, the host device can provide power to the media portable computing device 3100 that can be used to operate the portable computing device 3100 and/or charge a battery included therein concurrently with the operating.

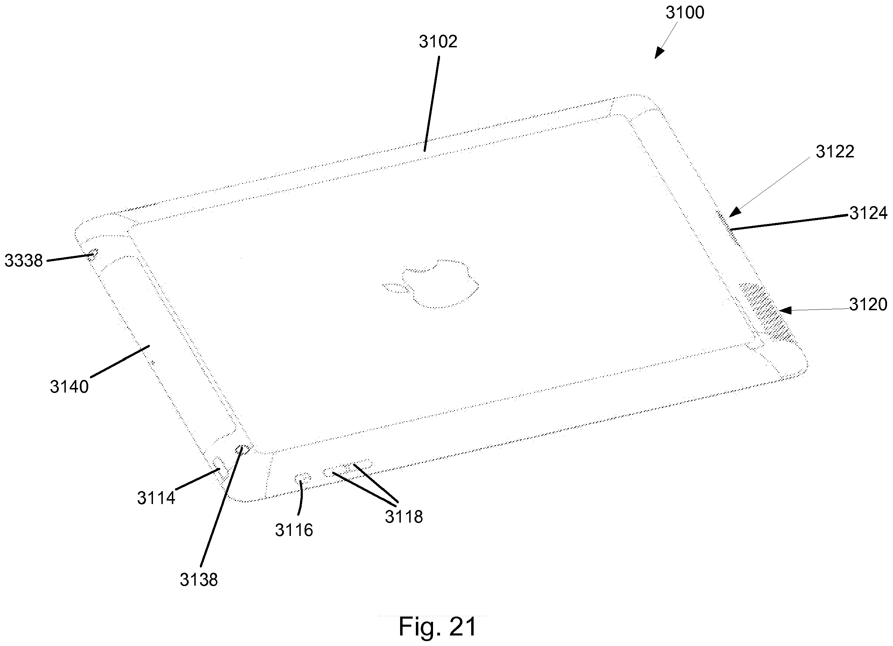

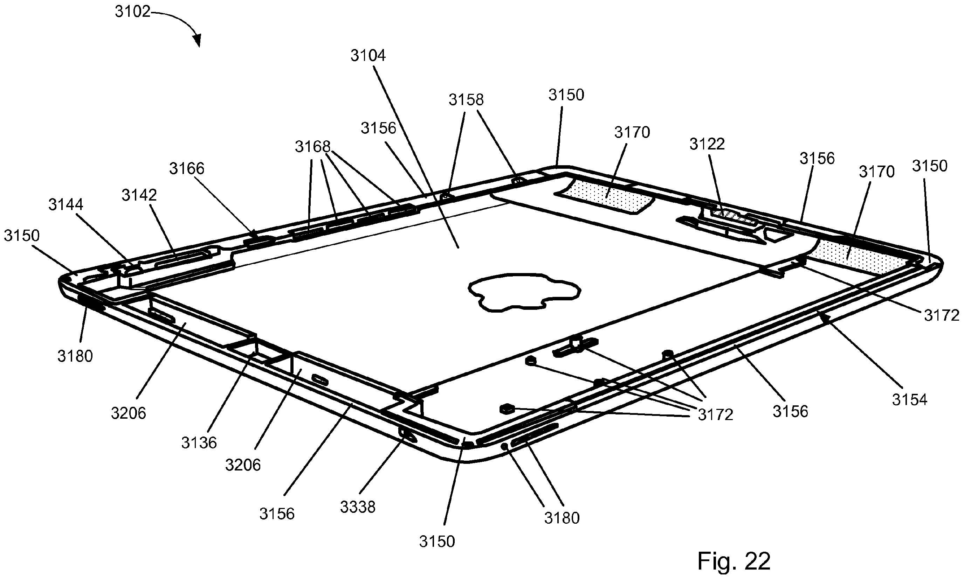

Figure 21 shows a perspective bottom view of a portable computing device in accordance with the described embodiments. A perspective interior view of a housing 3102 suitable for enclosing operational components of the portable computing device 3100 can be seen in Figures 22, 26, and 28. As shown in Figure 22, the housing 3102 is formed with an opening 3104 into which the internal components are placed. A cavity in the center of the housing 3102 provides space for battery cells 3304 and the MLB 3312. Other components are arranged generally in the periphery around the battery cells 3304 and the MLB 3312. Some of the components can be positioned in smaller recesses formed in the edge portion or ledge 3156 of the housing 3102. For example, an RF antenna 3204 is positioned in an RF antenna recess 3206 and a camera 3134 is positioned in a camera recess 3136. Magnets 3202 that cooperate with a cover can be positioned in slots 3168 along an edge of the housing 3102. Figure 22 also shows openings 3142, 3144 in the housing 3102 to accommodate the slide switch 3116 and volume switch 3118.

A corner bracket 3150 can be added to the single piece housing 3102 in each corner to strengthen and add stiffness to the housing 3102 in those areas. The housing 3102 can also be provided with openings or holes 3180 for buttons and switches, including a slide switch 3116 and volume switch 3118. Speaker holes or a speaker grill 3170 can also be formed in the housing 3102. Speaker attachment features 3158 can also be provided on the ledge 3156 for attaching the speaker module 3320. In the described embodiment, speaker attachment features 3158 are provided for attaching a substantially L-shaped speaker module 3320. The housing 3102 can also be formed with additional features 3172 for attaching or aligning components, such as the MLB 3312.

The shape of the housing can be asymmetric in that an upper portion of the housing can be formed to have a substantially different shape than that exhibited by a lower portion of the housing. For example, the upper portion of the housing can have surfaces that meet at distinct angles forming well defined boundary whereas the lower portion can be formed to have a substantially flat bottom surface. The transition zone between the upper portion having distinct edges and the lower, substantially flat portion can take the form of an edge having a rounded, spline shape providing both a natural change from the upper portion of the housing (i.e., the area of distinct edges) and the smoother, substantially flat surface presented by the lower portion of the housing. It should also be noted that in addition to providing a more aesthetically pleasing transition, the rounded, spline shape of the edge in the transition zone can provide a more comfortable feel when being held in a user's hand either during use or merely being carried about. One of the advantages to using metal for the housing is ability of metal to provide good electrical grounding for any internal components requiring a good ground plane. For example, performance of a built in RF antenna can be substantially improved when a good ground plane is provided. Moreover, a good ground plane can be used to help mitigate the deleterious effects caused by, for example, of electromagnetic interference (EMI) and/or electrostatic discharge (ESD).

Housing 3102 can include a number of features used to facilitate the installation of internal components used in the assembly of portable computing device 3100, as shown in Figure 22. These features are integral with the single body construction of the housing 3102, and do not need to be individually mounted to the housing 3102. Assembly of the portable computing device 3100 is therefore simplified. In the described embodiment, single piece housing 3102 can be formed from a single sheet or block of metal (such as aluminum) and formed into an appropriate shape using, for example, core metal forming techniques well known to those skilled in the art.

For example, recess 3206 can be formed in housing 3102 suitably sized and located for an RF antenna. In the case where recess 3206 is used for placing an RF antenna, recess 3206 can support an RF antenna support assembly formed of at least some radio transparent material. For example, the RF antenna support assembly may be foam that is pre-loaded into the recess 3206 before the RF antenna 3204 is placed in the recess 3206. The foam RF support assembly can bias the RF antenna 3204 against the display assembly 3132 so that there is a consistent distance between the RF antenna 3204 and the display 3132 to improve performance of the RF antenna 3204. The RF antenna 3204 can be adhered to the display assembly 3132 using, for example, PSA. By providing an RF antenna support assembly and an RF antenna window 3140 formed of at least some radio transparent material, the RF antenna support assembly and RF antenna window 3140 can facilitate unimpeded transmission and reception of RF energy in support of any number of wireless protocols such as WiFi, Blue Tooth, and so on. It should be noted the ability to provide unfettered RF functionality is especially important when housing 3102 is formed of radio opaque materials such as most metals.

The following discussion describes specific approaches to both minimizing the Z height of the assembled components and maximizing component density within housing 3102. In other words, the Z stack associated with installed internal components is such that the components can be easily accommodated by the cavity in the housing 3102 without the need to resort to lengthy and time consuming assembly procedures. The reduced Z stack and improved component density can be accomplished in many ways, such as configuring the structure of an internal component to perform multiple functions.

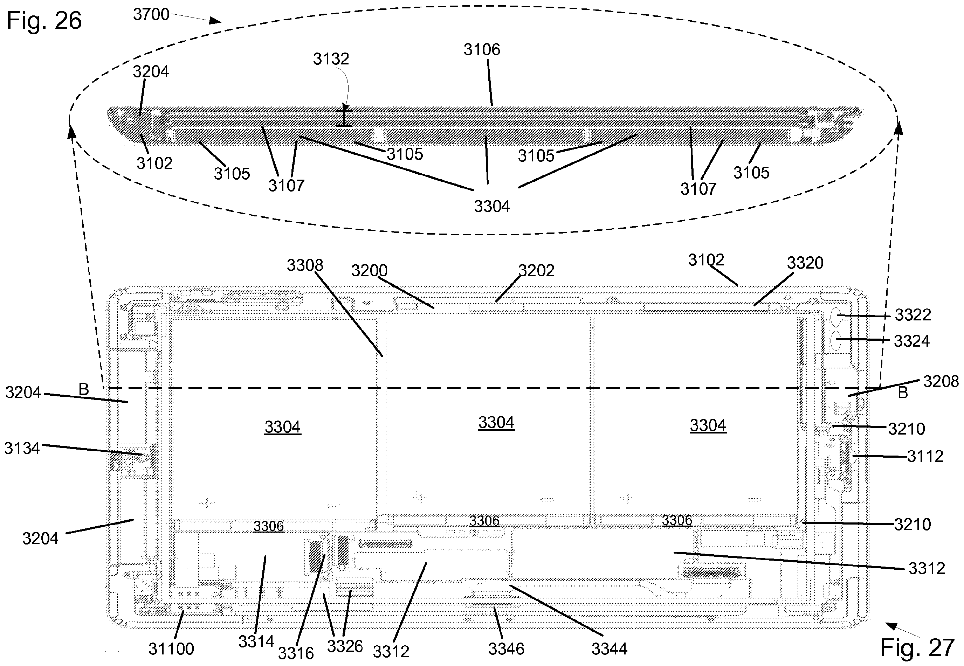

For example, portable computing device 3100 can include a battery assembly. The battery assembly can, in turn, include battery cells 3304 that can be directly attached to the interior of the bottom wall of the housing 3102. In an embodiment, strips of pressure sensitive adhesive (PSA) 3105, as shown in Figure 26, can be used to adhere a battery cell 3304 directly to the housing 3102 without a conventional battery pack or frame. In the described embodiment, two strips of PSA 3105 are used to adhere each battery cell 3304. The direct attachment of each battery cell 3304 to housing 3102 obviates the need for a separate battery support/protection structure, such as a battery case that is typically used in a conventional battery pack. Such battery cases are typically plastic enclosures around the battery cells. The plastic enclosures are separate from the computer or device housing. In the described embodiment, a protective enclosure for the battery cells 3304 can be provided by the housing 3102 and the display 3132 that is directly mounted to the housing 3102. By eliminating a separate battery case, the overall weight and z stack height of the power supply assembly can be reduced over that required for a conventional battery pack.

In the described embodiment, all of the battery cells 3304 are directly soldered to the same battery management unit (BMU) 3306. In other embodiments, the individual battery cells 3304 can be electrically connected to each other by way of a flexible connector, or flex. The flexible connector can, in turn, be soldered to the BMU 3306. The BMU 3306 can be used for some or all of the battery cells in the device.

A gap (referred to as a swell gap) 3107 can be provided to accommodate swelling anticipated to occur during normal operation of the battery cells 3304. A swell gap 3107 can be provided between a bottom wall of housing 3102 and a lower surface of the battery cell 3304 in the space between the strips of PSA. A swell gap 3107 can also be provided in the space above the battery cells 3304 between the top surfaces of the battery cells 3304 and the bottom surface of the display assembly 3132. By providing a swell gap 3107 below the battery cells 3304, space between the battery cells 3304 and the housing 3102 that would otherwise be wasted can be used in a productive manner. According to an embodiment, all of the battery cells 304 can be soldered onto the same BMU 3306.

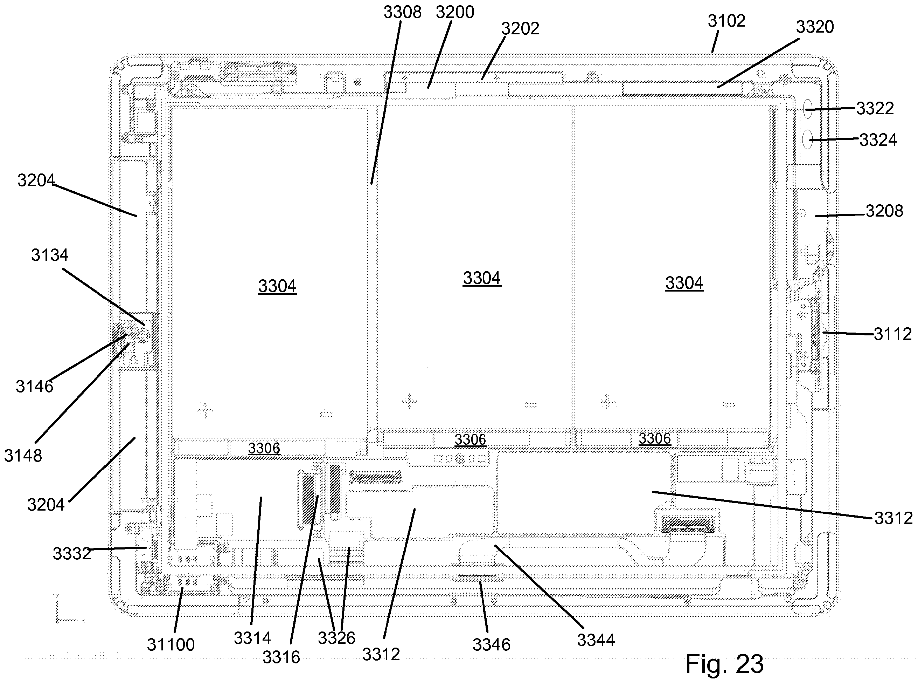

As shown in Figure 23, there are generally no structures between the battery cells 3304, which are held in their desired positions on the housing 3102 by adhesive. To utilize the space between the battery cells 3304, a connector cable 3308 may be positioned between two cells, as shown in Figure 23. In the illustrated embodiment, this particular connector cable 3308 connects the MLB 3312 and the sensor board 200, which can be coupled to sensors. The sensors can be designed to sense things that lead to intelligent decisions by the portable computing device 3100. In essence, the sensors can provide information or cues that help predict the portable computing device's future use or user's needs so that the device 3100 can be configured accordingly. In most cases, the sensors are configured to sense one or more environmental attributes surrounding the portable computing device 3100. Such environmental attributes may, for example, include temperature, ambient light, motion, vibration, pressure, touch, pressure, noise, orientation, time, force, and/or the like.

Thus, the sensors can include antenna proximity sensors, a compass, an accelerometer, a gyroscope, and a Hall Effect sensor mounted on the sensor board 3200. The sensor board 3200 can extend from the area of the magnets 3202 all the way along the peripheral edge of the battery cells 3304 to the corner of the device 3100 near one of the RF antennae 3204, as shown in Figure 23. It should be noted that the compass should be positioned on the sensor board 3200 as far away from the magnets 3202 as possible to prevent interference. The sensor board 3200 can also be connected to the camera 3134, the ambient light sensor (ALS) 3146 and the thermal sensor 3148 as well as the slide switch 3116 and volume switch 3118. The connector cable 3308 provides a way to connect all of the components coupled with the sensor board 3200 with the MLB 3312. By positioning the cable connector 3308 in the space between two battery cells 3304, which would have been otherwise unused, minimizes the overall footprint of the components in the cavity and at the same time keeps the Z stack height minimized by using space in a more efficient manner. Furthermore, it is important for the accelerometer and gyroscope to be as far away from the MLB 3312 and its power traces as possible to minimize cross talk, so the connector cable 3308 positioned between battery cells 3304 is an efficient and clean way to connect the accelerometer and gyroscope to the MLB 3312 while keeping them as far away as possible. The sensor board 3200 can be rigidly bonded to the housing 3102 using PSA with a foam layer on its top surface to bias the sensor board 3200 down to the housing 3102.

Component density can also be increased. For example, circuits that would otherwise be considered separate can be combined to share a single connector. For example, as discussed above, all of the components coupled to the sensor board 3200 can be coupled to the MLB 3312 by a single connect, which, in this case, is connector cable 3312. Furthermore, an audio module can include both a microphone and associated circuitry that can share a flex connector with an audio circuit used to produce audio output. In this way, both the number and overall footprint of the internal components can be substantially reduced without adversely affecting overall functionality. In this way, the overall component density can be enhanced while at the same time reducing the number of interconnects used.

Figures 23 - 30 illustrate the operational components of portable computing device 3100. The operational components are organized substantially in a single layer to minimize the Z stack height of the portable computing device 3100. Thus, most of the internal components of the portable computing device 3100 are substantially in a single plane. As described in more detail below, most of the components can be mounted directly to the housing 3102. In this way, minimizing the Z stack height, portable computing device 3100 can have a thin profile and be extremely compact, sturdy, aesthetically pleasing and ergonomic at relatively low cost.

Figure 23 presents a top internal view of portable computing device 3100 showing a specific arrangement of various internal components. In the illustrated embodiment, the internal components can include at least a battery assembly that can include three individual battery cells 3304. Individual battery cells 3304 can be attached directly to the housing 3102 using adhesive, such as PSA strips. Other types of adhesives or mounting methods may also be used to attach the battery cells 3304 to the housing 3102.

The internal components can also include main logic board (MLB) 3312 that can include a number of operational circuits, such as a processor, graphics circuits, (optional) RF circuitry, semiconductor memory, such as FLASH, and so on. MLB 3312 can receive power from the battery cells 3304 by way of electrical connectors. As shown in Figure 23, the battery cells 3304 and the MLB 3312 are positioned in the center of the cavity in the housing 3102 with most of the other internal components positioned in substantially the same plane around the periphery of the cavity. As described in more detail below, space is conserved by using thin connectors, such as flex connectors, and by fitting connectors in spaces that would be otherwise unused. In this way, the overall footprint of the internal components as well as the Z stack height can be minimized. Arranging some components in the periphery also serves to isolate certain components from others to improve performance of those components by preventing, for example, cross-talk.

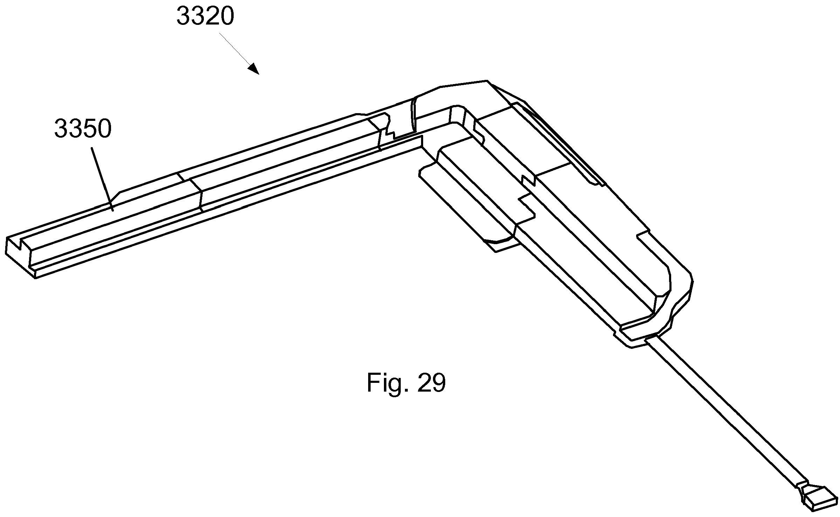

The internal components can also include speaker module 3320 that can include audio circuits arranged to provide an audio signal to audio drivers 3322 and 3324, which can be positioned under the speaker grill 3120. Audio drivers 3322 and 3324, in turn, can provide audible output to speaker 3120. Figure 29 shows a more detailed view of the speaker module 3320 of the illustrated embodiment. It will be understood that the audio drivers 3322 and 3324 are not visible in the view shown in Figure 29. Shock absorbing foam 3350 can be placed on the top and bottom of the speaker module 3320 on the end positioned closest to the sensors on the sensor board 3200 to protect the sensors, especially the gyroscope, by dampening the vibrations from the speaker module 3320. The foam 3350 on the bottom of the speaker module 3320 can also be used to create the acoustic seal to the housing 3102 so all the sound from the speaker module 3320 is directed out of the portable computing device 100 and not into it.

Portable computing device 3100 can also include a number of antennae used for both transmission and reception of RF energy. For example, at least one RF antenna 3204 can be incorporated into recess 3206 in the housing 3102. In the illustrated embodiment, there are two RF antennae 3204, one positioned in each recess 3206. A radio-transparent window 3140 may be provided in the housing 3102 in the area of the RF antennae 3204 for better overall reception/transmission. Another antenna 3208 for supporting the wireless WiFi protocol can be provided near the peripheral edge of the housing for better antenna performance. A connector cable 3210 can couple the WiFi antenna 3208 to the MLB 3312.

In some embodiments, portable computing device 3100 can support a number of different wireless standards. For example, in those cases where portable computing device 3100 supports a particular wireless standard (such as the 3G standard), portable computing device 3100 can include wireless circuitry appropriate for the particular wireless standard. For example, if portable computing device 100 is 3G compliant, the MLB 3312 can include 3G wireless circuitry coupled to an appropriately placed and sized RF antenna 3204. Alternatively, in the illustrated embodiment, the RF antennae can be coupled to a radio board 3314. In the illustrated embodiment, the radio board 3314 is coupled to the MLB 3312 via a flex connector 3316, as shown in Figure 23. It should be noted, as discussed above, that a portion of housing 3102 is typically replaced with a radio transparent window 3140 in cooperation with the RF antenna 3204.

In the illustrated embodiment, display bus 3344 can connect display driver circuitry to MLB 3312 by way of display connector 3346, as shown in Figure 23. In the described embodiment, display bus 3344 can take the form of a low voltage differential signaling (LVDS) bus. In the illustrated embodiment, display bus 3344 can be figured to connect the display driver circuitry with the MLB 3312 while maintaining a thin-profile because the display bus 3344 is configured to be flat despite the number of wires required in such a LVDS bus. In an embodiment, the display bus 3344 contains 30 wires that can be bundled in certain portions and then fanned out to a single layer or two layers in other portions.

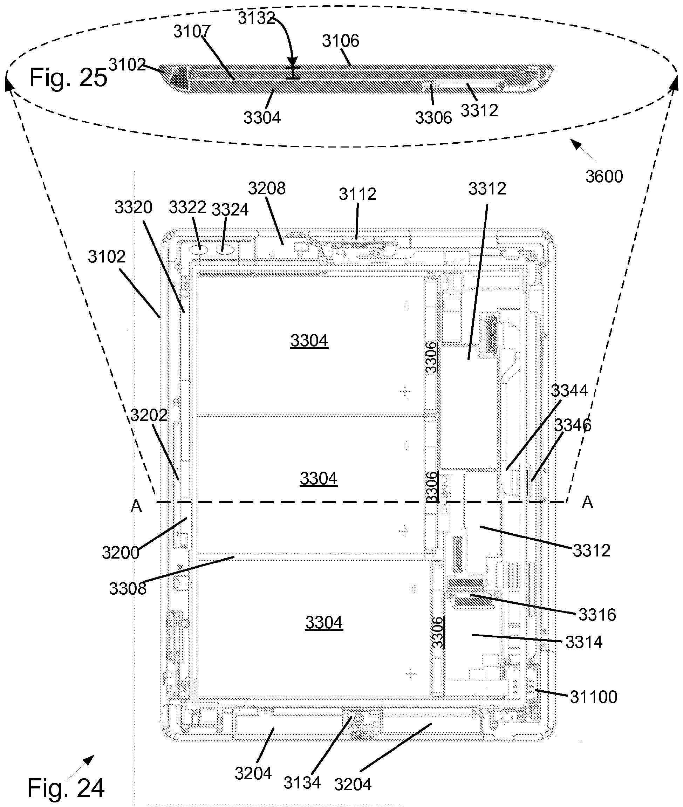

Figure 25 shows cross-section 3600 along line AA of Figure 24 bisecting battery cells 3304 and MLB 3312. Figure 26 shows cross-section 3700 along line BB of Figure 27 bisecting battery cells 3304. In particular, cross-sections 3600 and 3700 illustrate the compact nature and reduced z stack height of the assembled internal components. As shown in Figures 26 and 27, the components, including the battery cells 3304 and the MLB 3312, under the display 3132 are substantially in the same plane. As illustrated, these components are mounted to the substantially flat bottom surface of the housing 3102. In order to avoid unnecessary interference with RF transmissions from the RF antenna 3204, the antenna window 3140 can be formed of radio transparent material, such as plastic, glass, ceramic and so on. Display module circuit 3506 can be connected to LVDS bus 3344 by way of connector 3346 and be used to drive display panel 3132. Figure 28 shows an exploded perspective view of major internal components of portable computing device 3100. Figure 28 also shows a perspective interior view of a housing 3102 suitable for enclosing operational components of the portable computing device 3100 described herein.

Display assembly 3132 may be placed and secured within the cavity using a variety of mechanisms. In one embodiment, the display system 3132 can have alignment holes that can be lined up with alignment holes on the housing 3102 to accurately align the display 3132. A temporary fixture can used to align the alignment holes in the display 3132 with the alignment holes in the ledge 3156 of the housing 3102 so that the display is well-centered. While the temporary fixture is in place, an operator is able to screw the display 3132 to the housing 3102. The display may be placed flush with the adjacent portion of the housing 3102. In this way, the display can present visual content that can include video, still images, as well as icons such as graphical user interface (GUI) that can provide information the user (e.g., text, objects, graphics) as well as receive user provided inputs. In some cases, displayed icons can be moved by a user to a more convenient location on the display. For example, GUI can be moved by the user manually dragging GUI from one location to a more convenient location. The display can also provide a user with tactile feedback provided by a number of haptic actuators usually, but not always, arranged in an array of haptic actuators incorporated into the display. In this way, the haptic actuators can provide the user with tactile feedback.

In some embodiments, a display mask (not shown) can be applied to, or incorporated within or under cover glass 3106. The display mask can be used to accent an unmasked portion of the display used to present visual content. The display mask can be used to make less obvious home button 3112 used to provide a specific input such as change display mode, for example to portable computing device 3100. The display mask can render home button 3112 less obvious by, for example, being closer in tone or color to home button 3112. For example, if home button 3112 is formed of a material that is somewhat darker (such as gray or black) than cover glass 3106, then using a similarly colored display mask can reduce the visual impact of home button 3112 when compared with the unmasked portion of cover glass 3106. In this way, the visual impact of home button 3112 can be reduced by being integrated into the overall look of the display mask. Furthermore, the display mask can provide a natural mechanism for directing the attention of a viewer to the unmasked area of the display used to present visual content. PSA can also be applied to the backside of cover glass 3106 in the area of the display mask to provide support and also act as safety glass in the event the cover glass 3106 is broken.

Figure 23 also shows an embodiment of SIM card release mechanism 31100 in accordance with the described embodiments. SIM card release mechanism 31100 can include tray 31102 (Figure 28) suitable for securing a SIM card when placed thereon. Embedded magnets 3202 may also be provided in the housing 3102 at magnet slots 3168 at an edge of the housing 3102. The magnets 3202 can be used in conjunction with a segmented cover assembly that can be used for what is referred to as a peek mode of operation of portable computing device 3100. When a segment of the cover assembly is lifted from glass cover 3106, sensors in portable computing device 3100 can detect that the segment of the cover assembly and only that segment has been lifted from glass cover 3106. Once detected, portable computing device 3100 can activate only the exposed portion of the display 3132. For example, portable computing device 3100 can utilize a Hall Effect sensor to detect that the segment has been lifted from glass cover 3106. In the illustrated embodiment, the Hall Effect sensor can be mounted on the sensor board 3200. Figure 22 shows an attachment point 3166 for the Hall Effect sensor. Additional sensors, such as optical sensors, can then detect if only the segment has been lifted or if additional segments have been lifted. Such sensors are located near and coupled to the sensor board 3200, which is adjacent the magnets 3202.

The portable computing device 3100 can include one or more button assemblies by which the user of the portable computing device 3100 can activate various functions. Button assemblies can be mounted through the surface of the cover glass 3106 in the portable computing device 3100 or through a front, side or back portion of the single piece housing 3102 of the portable computing device 3100. The button assemblies can be designed to provide a desired tactile feedback to the user when activating the button assembly's function. In addition, the button assemblies can be designed, in conjunction with designs of both outer surfaces of and inner connection points within the portable computing device 3100, to be positioned approximately flush with the outer surfaces in neutral, "non-depressed" state, even with internal circuit boards located at a distance from a top portion of the button assembly.

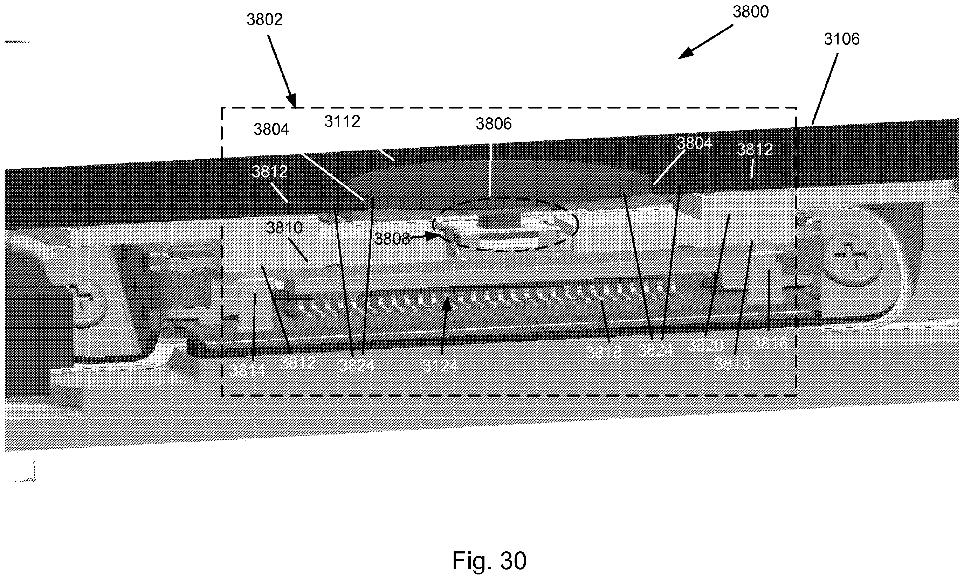

Figure 30 illustrates a first cross-sectional perspective view 3800 of a home button assembly 3802 mounted through cover glass 3106 of a portable computing device 3100 in accordance with the described embodiments. The home button assembly 3802 can include an external flat or curved button body 3112 that rests approximately flush with an exterior surface of cover glass 3106. Flanges 3804 can be mounted on the underside of (or integrally formed with) the external button 3112 and extend beneath the underside of cover glass 3106. A central post 3806 can be mounted to the underside of (or be integrally formed with) the external button body 3112 positioned above a tactile switch unit 3808, which can be mounted to a bracket 3820. The bracket 3820 can be formed of a metal, such as stainless steel, and can be adhered to the cover glass 3106 using an adhesive 3826, such as, for example, PSA. In a neutral, "non-depressed" state, the central post 3806 can be at a distance from the tactile switch unit 3808. Upon depressing the external button body 3112, the central post 3806 can contact the tactile switch unit 3808 in a manner that results in closing a contact circuit within the tactile switch unit 3808. The use of the tactile switch unit 3808 can allow a user of the portable computing device 3100 to experience a different "feel" when pressing at different locations on the surface of the external button body 3112, as the external button body 3112 can pivot about the top of the tactile switch unit 3808.

The internal components of the portable computing device 3100 can include a flexible circuit or flex 3818 through which signals can be conducted as a result of depressing the external button 3802. The flex 3818 can be located at a distance from contact points of the tactile switch unit 3808. The distance can be such that the tactile switch unit 3808 cannot be mounted directly on the flex 3818, as the travel distance of the center post 3806 of the external button body 3112 can be too short to reach the tactile switch unit 3808 when depressed to activate a function. The flex 3818 can also include components in a region directly beneath the external button body 3112 that preclude mounting the tactile switch unit 3808 directly to the flex 3818. Instead, a connection can be made between the flex 3818 and the tactile switch unit 3808.

As shown in Figure 30, the tactile switch unit 3808 can be mounted to an intermediate printed circuit board 3810. In some implementations, the intermediate printed circuit board 3810 can be connected to the flexible circuit or flex 3818 through a flexible cable; however, such a connection can complicate the assembly process. In some embodiments, the flexible cable connection can preclude a simple machine automated assembly and require manual assembly by a technician. The representative embodiment shown in Figure 30 avoids manual assembly by enabling a connection from the intermediate printed circuit board 3810 to the flex 3818 through a pair of conductive posts 3814/3816 and a pair of conductive pads 3812/3813. A first conductive post 3814, for example, can be connected to a DC power level supplied through the flex 3818, while the second conductive post 3816 can be connected to a GND level in the flex 3818. Conductive posts 3814 and 3816 can be connected to separate conductive pads 3812 and 3813 respectively mounted on the underside of the intermediate printed circuit board 3810. A stiffener can be positioned underneath the conductive posts 3814 and 3816 to improve rigidity.

Depressing the external button body 3112 can close a circuit within the tactile switch unit 3808 connecting the first conductive post 3814 to the second conductive post 3816 and thereby permitting current to flow, which can activate directly or indirectly a function of the portable computing device 3100. In addition to providing a conductive path, the conductive posts 3814 and 3816 can be sized and positioned between the intermediate printed circuit board 3810 and the flex 3818 to "tune" the tactile feel of the button assembly 3802 for the user of the portable computing device 3100. For example, the conductive posts 3814 and 3816 can be positioned closer together or further apart, and the thickness of the intermediate printed circuit board 3810 can be varied to increase or decrease flexing that can occur when depressing the external button 3802 to contact the tactile switch unit 3808.

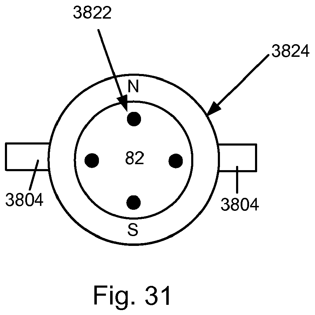

As shown in Figure 30, the intermediate circuit board 3810 can be mounted to the tactile switch unit 3808. Figure 31 illustrates a simplified top view of the home button assembly with the flanges 3804 extending a bit from underneath the external button body 3112. The top of the external button body 3112 can include directional markers 3822 that can assist a user in locating the external button body 3112 as well as guide the user into applying pressure at appropriate locations on the external button body. The directional markers 3822 can take different forms including tactile raised dots and compass point (for example north (N) and south (S)) markers. During operation of the portable computing device 3100, the user can apply pressure off center on the surface of the home button body 3112. A flexure or anti-rotation ring 3824 can be provided around the directional markers 3822.

Button assemblies can also be mounted through a portion of the single piece housing 3102 that encloses the portable computing device 3100. As the single piece housing 3102 can be relatively thin to reduce weight of the portable computing device 3100, openings in the housing 3102 can impact the structural integrity of portions of the housing 3102 near the opening. For relatively large openings, a structural support section can be included inside the housing 3102 to improve rigidity; however, a button assembly can still require access through the structural support section. It can be desirable to minimize the size of openings through the structural support section, thereby retaining a desired strength of structural support, when using a relatively larger exterior button that can use a relatively larger opening in the housing 3102.

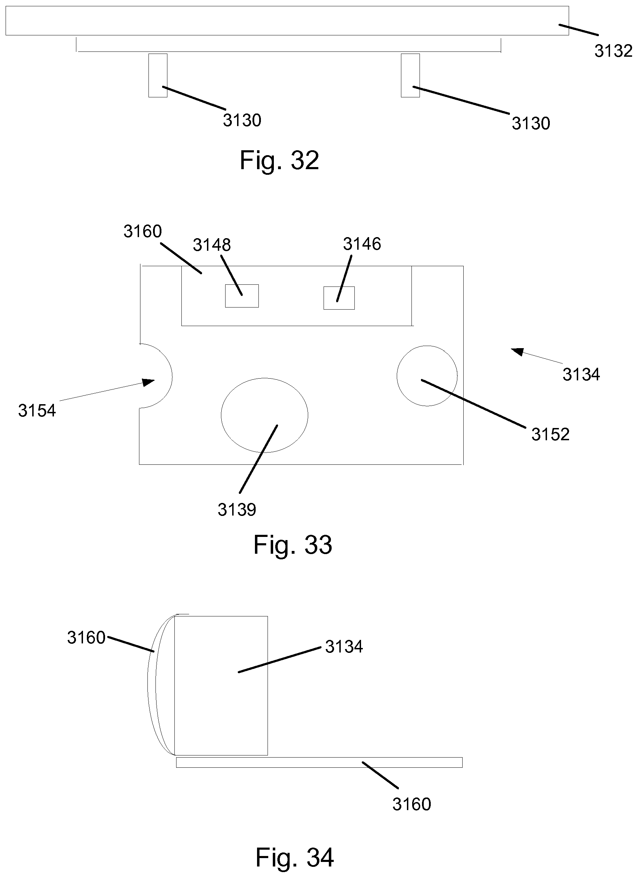

In some embodiments, portable computing device 3100 can include a camera module 3134 configured to provide still and video images. The placement may be widely varied and may include one or more locations, including for example front and back of the device, i.e., one through the back housing, the other through the display window. As shown in Figure 21, there can be a rear camera window 3138 through the housing 3102. A front camera window 3139 (Figure 33) can also be provided for a front-facing camera through the display window. Figure 23 shows a camera window through the display window in the front of the device 3100 at the camera module 3134.

The camera module 3134 can be aligned with the display 3132 by using alignment pins 3130 provided on the bottom surface of the display 3132, as shown in Figure 23. These alignment pins 3130 line up with a hole 3152 and a slot 3154 in the top surface of the camera module 3134 shown in Figure 23. The alignment pins 130 and corresponding hole 3152 and slot 3154 in the camera module help to align the camera 3134 to the display 3132 in the x and y directions. As shown in Figure 34, a flex connector 3160, which extends under the camera module 3134 and wraps around the side to the top of the camera module 3134, can couple the camera module 3134, ALS 3146, and thermal sensor 3148 all to the sensor board 3200, which in turn is connected to the MLB.

An ambient light sensor (ALS) 3146 and a thermal sensor 3148 can also be provided on the area of the camera module 3134. The ALS 3146 can sense when the device 3100 is in a dark environment or when the device 3100 is in a light environment. Ambient light can include the light surrounding the portable computing device 3100 that is produced by sunlight, incandescent light, fluorescent light and the like. If the portable computing device 3100 is in a dark environment, the display 3132 of the portable computing device 3100 can be powered down to be dimmer and to save battery power. Conversely, if the portable computing device 3100 is in a light environment, the display 3132 can be powered up to be brighter. For example, the display 3132 can be dimmed when the ALS 3146 senses that the ambient light level decreases a certain amount or reaches a predetermined or specified darkness level, and the display 3132 can be brightened when the ALS 3146 senses that the ambient light level increases a certain amount or reaches a predetermined or specified lightness level.

In some cases, multiple ambient light sensors may be used. This may help produce a more accurate reading of ambient light as, for example, through averaging. This may also help in determining whether the portable computing device 3100 is actually in a dark environment as opposed to when light is being blocked from getting to the ALS 3146 (*e.g.,* if one sensor is blocked, another sensor is still sensing the ambient environment).

The thermal sensor 3148 can provide temperature data for the device 3100 to prevent thermal runaway. The thermal sensor 3148 can distinguish between external heat and internal heat. For example, the thermal sensor 3148 can distinguish between solar heat received by the device 3100 from the sun versus heat produced by the components internal to the device 3100.

The camera module 3134, with the ALS 3146 and thermal sensor 3148, can be mounted to the housing by first pre-loading a foam support into the recess 3136 before the camera module 3134 is placed in the recess 3136. The foam support can bias the camera module 3134 against the display assembly 3132, with the camera module 3134 adhered to the display assembly using, for example, PSA. With the ALS 3146 and thermal sensor 3148 close to the cover glass 3106, there is no need for a light pipe or light guide. The sensors may be placed proximate the display 3132 thereby utilizing the window and cover glass 3106 that typically covers and protects the display 3132. In this way, the sensors are also hidden from view. A light diffuser can also be provided.

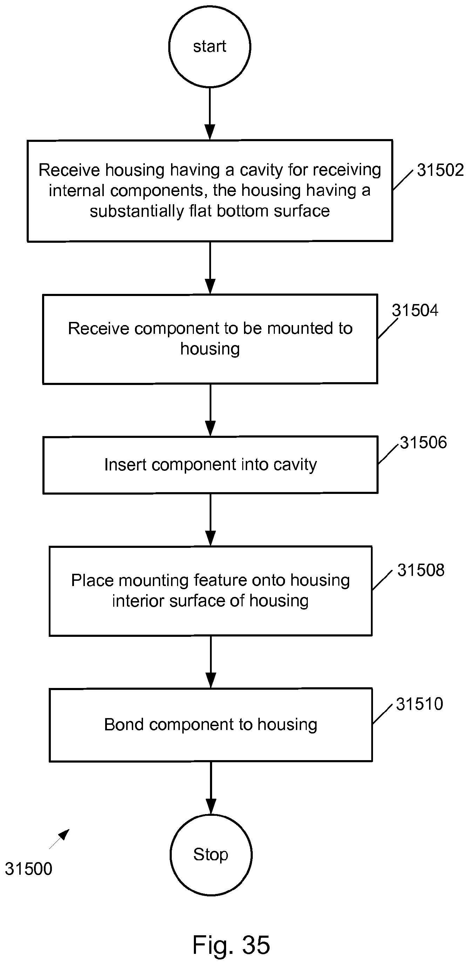

Figure 35 illustrates a flow diagram describing process 31500 for assembling internal components for a portable computing device in accordance with the described embodiments. Process 31500 begins at 31502 by receiving housing suitable for enclosing and supporting internal components of the portable computing device. In the described embodiment, the housing can be formed to have a cavity that has a substantially flat bottom surface. The housing can also be formed to have smaller recesses along a peripheral edge portion for receiving components. The components can include, for example, a battery assembly, a main printed circuit board, a main logic board, buttons, speaker module, and so on. The housing can be formed using any well-known machining operation. Once the housing has been received at 31504, the component can be inserted into the cavity at 31506 and placed in direct contact with the interior surface of the housing at 31508. Once placed directly onto the substantially flat interior surface of the housing, the component can be attached to the housing at 31510 using any well known attaching process, such as adhering, bonding, epoxy, welding, and so on.

High volume manufactured portable electronics devices can include computer numerically controlled (CNC) machined metal alloy parts with various geometrically shaped surfaces. Representative portable electronic devices can include portable media players, portable communication devices, and portable computing devices, such as an iPod®, iPhone° and iPad® manufactured by Apple, Inc. of Cupertino, CA. Both the tactile and visual appearance of a portable electronics device can enhance the desirability of the portable electronic device to the consumer. Metal alloys can provide a lightweight material that exhibits desirable properties, such as strength and heat conduction well suited for casings of portable electronic devices. A representative metal alloy can include an aluminum alloy. Both the tactile and visual appearance of a portable electronics device can enhance the desirability of the device to the consumer. A cosmetic outer layer machined from a metal alloy can be cut to a desired shape and polished to a desired reflective and/or matte appearance. In some embodiments, a continuously smooth shape having a uniformly visually smooth appearance can be desired.

High volume manufacturing can also require minimal processing time. Machining an aluminum billet to form the exterior surface of a casing of a portable electronic device using a single cutting tool can reduce the processing time required. Machining with a single continuous optimized path can result in a "rough" cut surface that can require minimal sanding and polishing to produce a visually smooth finish with no visually discernible breaks between regions having different cross sections. Curved regions can transition smoothly into flat regions including along corner areas without any visual change in surface appearance.

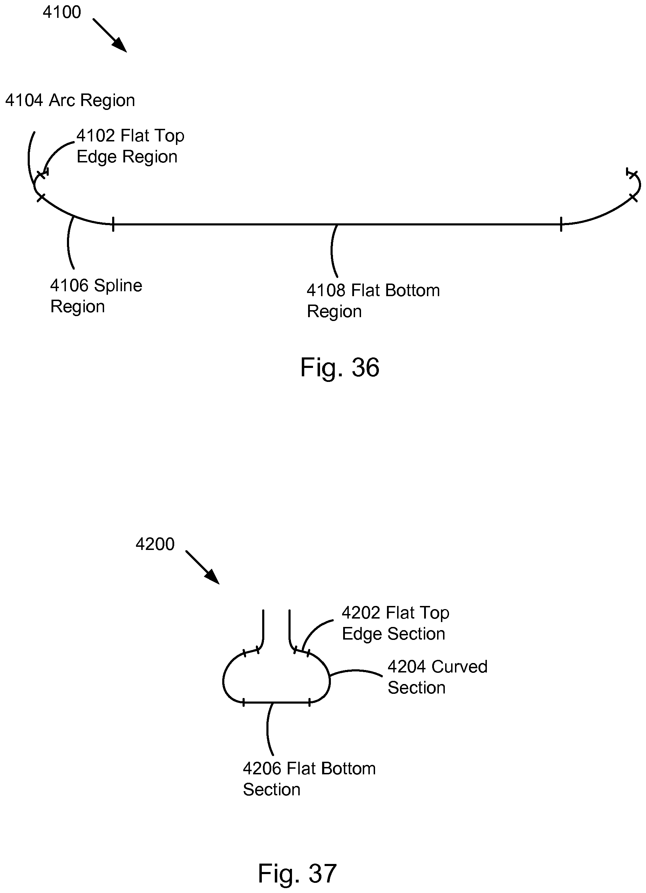

Figure 36 illustrates a cross section of a representative embodiment of a casing 4100 for a portable electronic device. The cross section illustrates a shape for the surface of the casing 4100 that can include four distinct regions including a first flat top edge region 4102 that can be linear in cross section adjacent to an opening in the top of the casing 4100 into which components for the portable electronic device can be placed. The flat top edge region 4102 can face a user of the portable electronic device when viewed directly from above a display mounted in the portable electric device. The flat top region 4102 can be shaped by a single continuous cut of a machining tool and polished to a highly reflective surface appearance. The flat top region 4102 can also be referred to as a "race track" edge. The cross section of the casing 4100 can also include two curved regions connected together, an arc-shaped region 4104 that can transition from the flat top edge region 4102 to a spline-shaped region 4106. The arc region 4104 can have a relatively higher curvature than the spline region 4106. The cross section of the casing 4100 can also include a flat bottom region 4108, which can transition smoothly from the spline region 4106. A single cutting tool having multiple cutting surfaces can be used to shape the exterior surface of the casing 4100 to have the cross section illustrated in Figure 1 using a single continuous cutting path as described herein.

Figure 37 illustrates a cross section of a representative cutting tool 4200 having three different sections, each section can be shaped to provide a cutting surface to machine one or more of the regions of the casing 4100 of the portable electronic device shown in Figure 36. The cutting tool 4200 can be mounted in a CNC machine, rotated at a constant velocity and positioned in different orientations within a three dimensional coordinate system to shape a metal alloy billet into a desired exterior surface shape. In particular the CNC machinery can allow movement in a "z" direction to provide a plunge (negative "z") and a rise (positive "z"). The CNC machinery can also permit movement in an "x-y" direction tracing a pre-determined continuous path. A flat top edge section 4202 of the cutting tool 4200 can be used to shape the flat top edge region 4102 of the casing 4100. A curved section 4204 of the cutting tool 4200 can be used to shape the arc region 4104 and the spline region 4106, while a flat bottom section 4206 of the cutting tool 4200 can be used to shape the flat bottom region 4108 of the casing 4100. The curved section 4204 of the cutting tool 4200 can be convex shaped, as can be the curved regions of the casing 4100 shaped by the curved section 4204 of the cutting tool 4200. Each of the adjacent regions of the cutting tool 4200 can be used consecutively one after the other, with the cutting tool 4200 moving along a continuous pre-determined path. Varying the "z" direction of the path carefully can minimize abrupt transitions between regions along the surface of the casing 4100 when changing between using different sections of the cutting tool 4200. The "z" direction can be normal to the bottom surface of the casing 4100, while the "x-y" directions can be along the edge and bottom surfaces of the casing 4100.

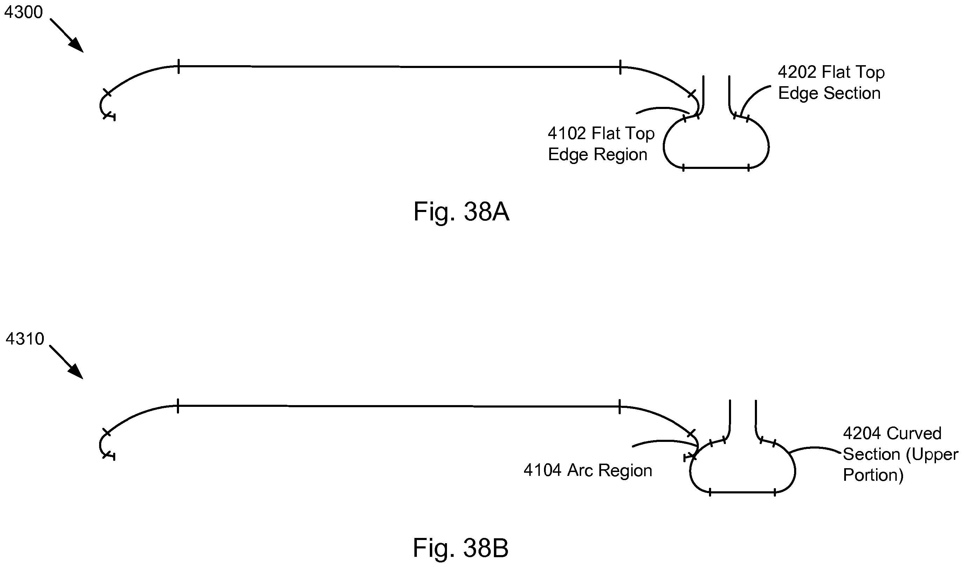

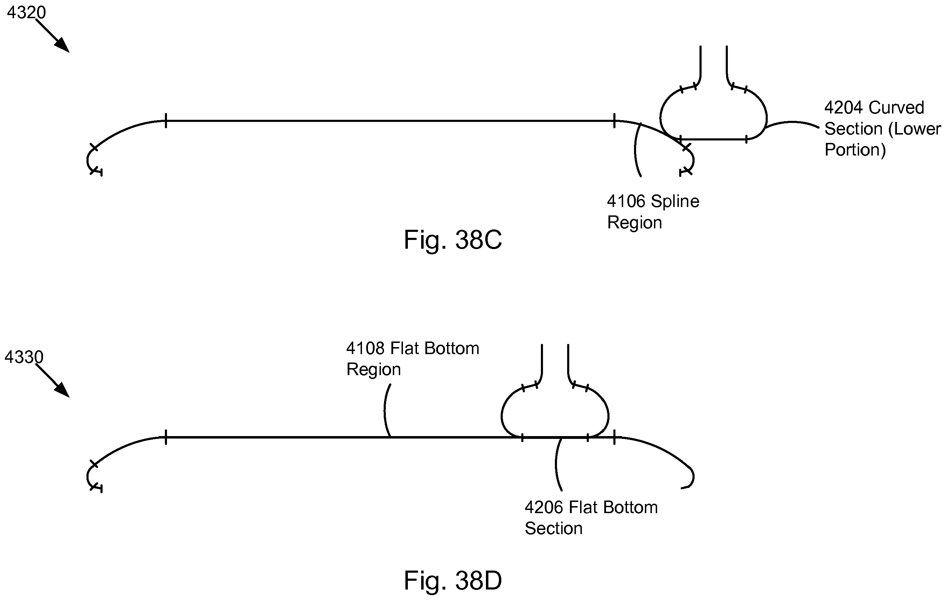

Figures 38A-D illustrates several positions for the cutting tool 4200 to shape different regions of the casing 4100 using different surfaces of the cutting tool 4200. As shown by diagram 4300 in Figure 38A, the flat top edge section 4202 closest to the neck of the cutting tool 4200 can be positioned to shape the flat top edge region 4102 of the casing 4100. The flat top edge region 4102 can be formed along one continuous path. After shaping the flat top edge region 4102, the cutting tool 4200 can transition to shape the curved regions of the casing 4100. As shown by diagram 4310 in Figure 38B, an upper portion of the curved section 4204 of the cutting tool 4200 closest to the flat top edge section 4202 can be used to form the arc region 4104 of the casing 4100. As shown by diagram 4320 in Figure 38C, a lower portion of the curved section 4204 of the cutting tool 4200 can be used to shape the spline region 4106 of the casing 4100. The curved section 4204 of the cutting tool 4200 can continuously shift in orientation with respect to the casing 4100 as the CNC machinery moves the cutting tool 4200 along the surface of the exterior of the casing 4100. As the CNC machinery lifts the cutting tool 4200 to rise in the "z" direction, different portions of the curved section 4204 of the cutting tool 4200 can contact and shape different regions of the casing 4100. While not shown in the diagram, the CNC machinery can also tilt the cutting tool at different angles when cutting the surface of the casing 4100. As shown by diagram 4330 in Figure 38D, the flat bottom section 4206 of the cutting tool 4200 can be used to form the flat bottom region 4108 of the casing 4100. The CNC machinery can move the cutting tool 4200 in a continuous spiral path to form the flat top region 4102, the arc region 4104 and the spline region 4106. The rise in the "z" direction can be varied to ensure a uniform surface for the shaped casing 4100 with no visible joins or transitions after sanding and polishing the rough cut surface of the casing 4100 formed by the machining.

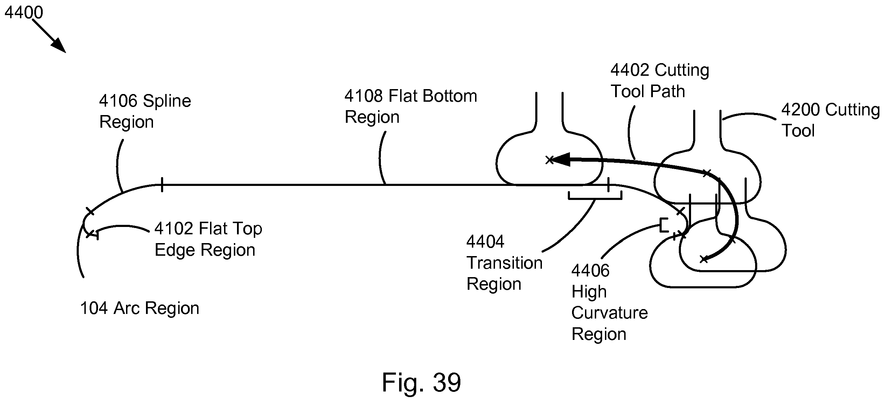

The path of the cutting tool 4200 can be chosen to provide transitions between different regions of the casing 4100 without abrupt changes in a frictional force of contact between the cutting tool 4200 and the casing 4100. By ensuring a uniform smoothly changing frictional load and constant force of contact between the cutting tool 4200 and the casing 4100 during the transition between regions, the surface of the casing 4100 can be shaped without irregular cuts, such as gouges, indentations or surface warps that can mar the finish of the surface of the casing 4100. A continuous spiral path for the cutting tool 4200 can maintain a smooth transition between different regions. The frictional load experienced by the cutting tool 4200 can vary with the amount of surface area contacted between the cutting tool 4200 and the casing 4100. Critical regions of the surface of the casing 4100 at which special care can be taken to determine the cutting tool path include the transition regions between different shapes of the cross section of the surface of the casing 4100. Narrowing the spacing between successive circuits for a continuous spiral path taken by the cutting tool 4200 can minimize abrupt changes in the frictional load thereby ensuring a uniform cut surface of the casing 4100. Transition regions can include the transition from the flat top edge region 4102 to the arc region 4104, the arc region 4104 to the spline region 4106, and the spline region 4106 to the flat bottom region 4108. Figure 39 illustrates a diagram 4400 of a transition region 4404 between the spline region 4106 and the flat bottom region 4108 for a cutting tool path 4402, which indicates a movement of a center of the cutting tool 4200. Cross sectional areas of the surface of the casing 4100 that can include high curvature, such as a high curvature region 4406 in the arc region 4104 can also benefit from a narrowing of the spacing between successive circuits of the continuous path of the cutting tool 4200.

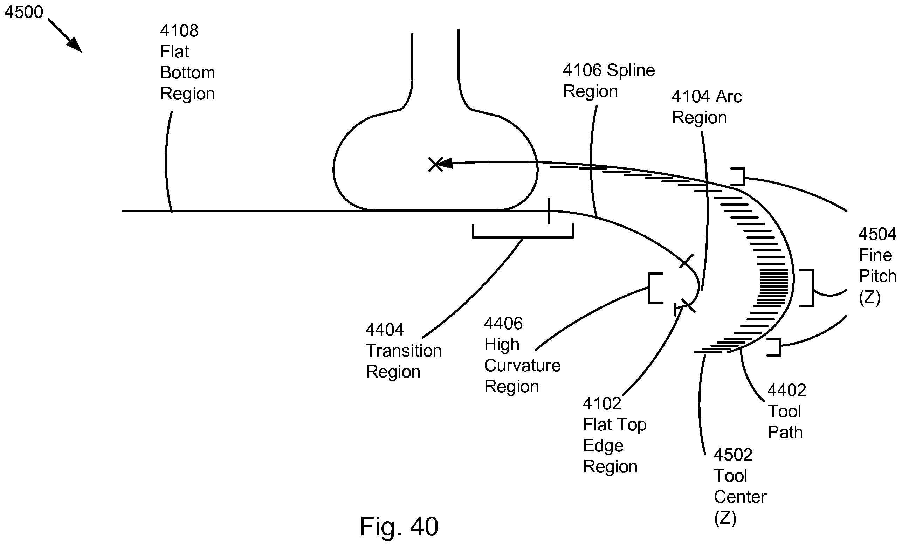

Figure 40 illustrates a diagram 4500 with the tool path 4402 having variable pitch in the "z" direction that can be used for successive circuits of the cutting tool 4200 along the continuous spiral path. The tool path center 4502 can approximately follow the shape of the surface of the casing 4100 as the cutting tool 4200 shapes the casing 4100 from a solid metal alloy block, such as an aluminum billet. The cutting tool 4200 can follow a continuous spiral path about the casing 4100, slowly increasing the "z" height as the cutting tool 4200 traverses along the continuous spiral path. Figure 40 illustrates how the "z" height 4502 of the center of the cutting tool 4200 can vary for successive circuits about the continuous spiral path. When transitioning from the flat top edge region 4102 to the arc region 4104, the tool path 4402 can step in the "z" direction narrowly with a fine pitch 4504. Following the transition the tool path 4402 can step in the "z" direction more widely to speed machining of the casing 4100. The narrow spacing of successive circuits of the cutting tool 4200 can minimize and avoid abrupt changes in friction between the cutting tool 4200 and the surface of the casing 4100.

In addition to fine spacing in transition regions, the CNC machining through the high curvature region 4406 of the arc region 4104 can use a fine pitch 4504 "z" spacing between successive circuits of the continuous spiral path. Spacing the circuits close together can avoid sharp transitions in frictional contact and provide a smooth even cutting in the arc region 4104. Similar to the fine spacing in the transition between the flat top edge region 4102 to the arc region 4104, the cutting tool path 4402 can also be spaced with a fine pitch 4504 in the "z" direction throughout the transition region 404 from the spline region 4106 to the flat bottom region 4108. The surface area of the cutting tool 4200 in contact with the surface of the casing 4100 can increase substantially from the spline region 4106 to the flat bottom region 4108, and by spacing the circuits closer together the transition from minimal contact to broader contact can proceed smoothly to avoid gouging the casing 4100 while machining. Close spacing of the paths in the transition region 4404 can also eliminate visible transitions between the curved surface of the spline region 4106 and the flat surface of the flat bottom region 4108. After cutting, sanding and polishing, the casing 4100 of the mobile device can have a uniform smooth appearance without noticeable differences between the curved edge surfaces and the flat bottom surface and no visible joins. Once the flat bottom section 4206 of the cutting tool 4200 is completely within the flat bottom region 4108 of the casing 4100, the continuous path taken by the cutting tool 4200 can change from a spiral path to a zigzag path, i.e. a path with alternating linear paths, across the flat bottom region 4108. The zigzag path can minimize warping that can occur due to temperature changes in the metal alloy on the surface of the casing 4100 during machining. With the careful placement of the tool path 4502 using fine pitch spacing along select regions, the sanded and polished surface of the casing 4100 can have a visually continuous surface without edges or corners when viewed from the back.

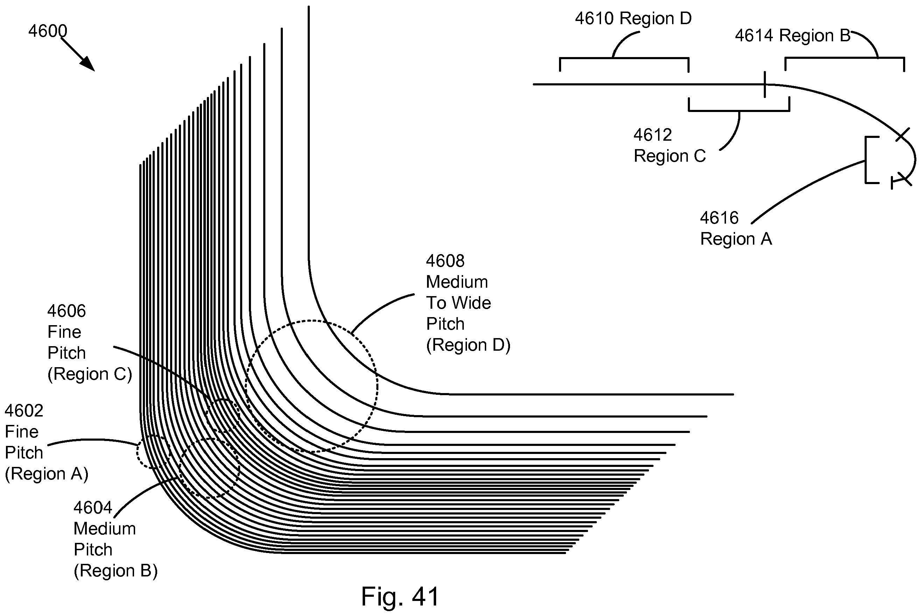

Figure 41 illustrates a diagram 4600 of a portion of successive circuits of a continuous spiral path of the cutting tool 4200 along the surface of the casing 4100 matching pitch of spacing to different regions of the casing 4100. In a region A 4616 of the casing 4100, which can include the flat top edge region 4102 and the arc region 4104, adjacent circuits of the continuous spiral path can be spaced with a fine pitch 4602. The fine pitch 4602 can ensure a smooth transition between the flat top edge region 4102 and the arc region 4104 as well as smooth transitions throughout the high curvature region 4406 of the arc region 4104. In a region B 4614 of the casing 4100 that can be completely contained within the spline region 4106, the spacing of successive circuits of the continuous spiral path can use a medium pitch 4604. The curvature of the spline region 4106 can be less than the curvature in the arc region 4104 and the curvature can change more slowly within the spline region 4106 as well. Wider spacing of successive circuits of the continuous spiral path in the region B 4614 can speed machining of the casing 4100 rather than using a narrow spacing of successive circuits as used in region A 4616.

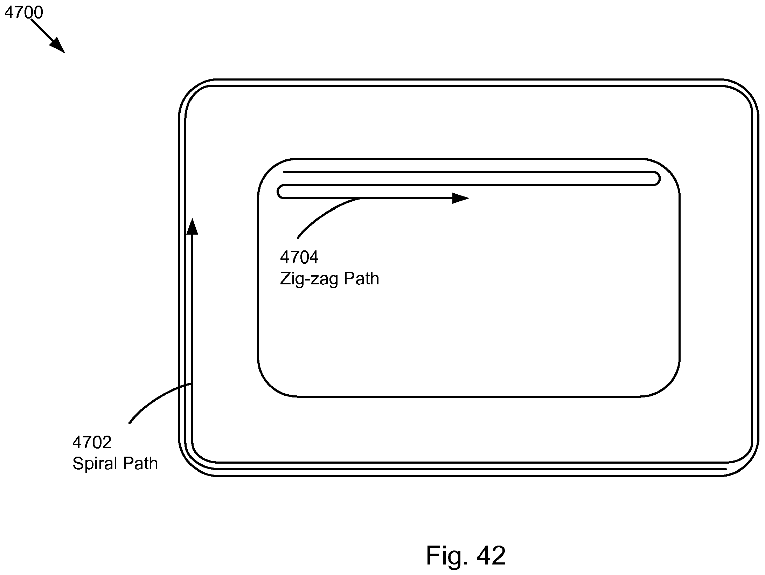

As the spline region 4106 joins up to the flat bottom region 4108, the cutting tool 4200 can transition from using the curved section 4204 to using the flat bottom section 4206. The amount of contact between the cutting tool 4200 and the surface of the casing 4100 can increase substantially throughout the transition in a region C 4612 that spans from the spline region 4106 to the flat bottom region 4108. The spacing between successive circuits of the continuous spiral path can be spaced with a fine pitch 4606 within region C 4612 in order to increase the contact slowly and to avoid a sudden change in frictional force encountered by the cutting tool 4200 while shaping the surface of the casing 4100 in region C 4612. Within region D 4610 of the flat bottom region 4108, the spacing between adjacent paths can increase gradually from the fine pitch used in region C 4612 to a wider pitch suitable for the flat bottom region 4108. After reaching approximately one quarter of the distance into the flat bottom region 4108, the CNC machinery can execute a large radius turn to transition from the continuous spiral path used for the curved edge regions 4104/4106 of the casing 4100 to a continuous zigzag path used for the bottom region 4108 of the casing 4100. The large radius turn can avoid a sharp turn transition that can affect the shaped surface of the casing 4100. As shown by the bottom view diagram 4700 in Figure 42, the continuous path can include a spiral path 4702 for the curved edge regions 104/106 and a zigzag path 4704 for the center of the flat bottom region 4108. The spacing between adjacent paths in the zigzag path 4704 can be wider than the spacing of adjacent circuits of the spiral path 4702.

In one embodiment, the rotational speed and the translational speed along the continuous path of the cutting tool 4200 can be fixed. In some embodiments, one or more properties of the cutting tool 4200 can be selected (fixed or variable along the cutting path) from the following: the properties can include but can be not limited to (1) feed rate (translational speed in one or more of the x-axis, y-axis and/or z-axis directions), (2) spindle speed (rotational speed), (3) pitch (spacing between adjacent cutting paths), (4) cutting tool 4200 shape and size, e.g. diameter, (5) cutting tool 4200 cutting material and (6) cutting tool 4200 rake angle (angular orientation of cutting tool 4200 with respect to casing 4100 surface). The properties of the cutting tool 4200 can be chosen to affect the machining time and resulting properties of the cut surface of the machined casing 4100. The rotational and translational speeds can be selected to minimize machining time while ensuring a quality of surface cut by the machining tool that can result in a preferred surface finish. A fine and tight control of the variation in pitch between circuits of the continuous spiral path can be used in areas with higher curvature, in areas with a higher rate of change in curvature and/or in areas of transition between regions of the surface having different curvatures. A coarser control of the spacing between adjacent paths can be used in flat regions, in regions with low curvature and in regions with a low rate of change in curvature. A medium control can be used in areas of moderate curvature, and the pitch can change continuously and smoothly between regions of fine narrower pitch and regions of coarse wider pitch. While using a fine control of pitch throughout the continuous path can provide a finished surface having a desired uniformity, the time for machining can be longer. Instead the pitch can be controlled to finely step where required to ensure smooth transitions between regions with different cross sectional shapes.

In one embodiment, a single cutting tool 4200 can be used to shape the entire exterior surface of the metal alloy casing 4100 rather than multiple separate tools to shape the flat and curved regions. The single cutting tool 4200 can transition smoothly between different sections on the cutting tool 4200 to shape different regions of the metal alloy casing 4100 while maintaining continuous contact with the surface of the casing 4100. Multiple cutting tools can require additional time to mount and dismount them on the CNC machinery. In addition different cutting tools can result in a mismatch in surface elevation across the shaped casing 4100 with undesirable step transitions that can be difficult to remove during the final finishing of the surface of the casing 4100. The shaped casing 4100 when sanded and polished to a final exterior finish can have a more uniform and seamless appearance using the single cutting tool 4200 with a single continuous path as described herein.

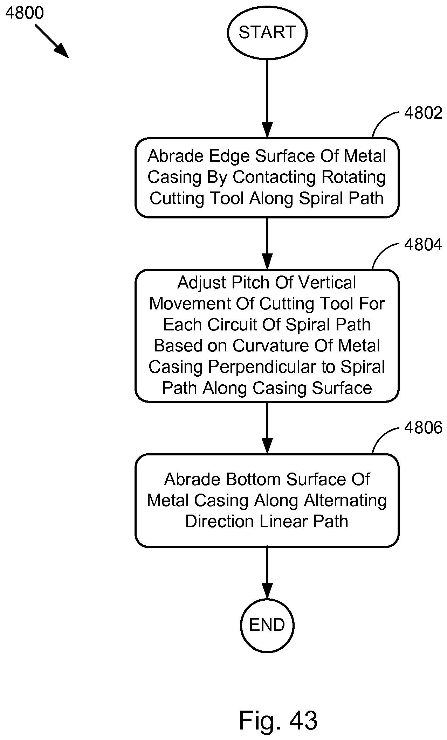

Figure 43 illustrates a representative method to machine an edge surface and a bottom surface of the metal alloy casing 4100 of a portable electronic device. The method can include abrading the edge surface of the metal alloy casing 4100 by contacting a rotating cutting tool 4200 along a first pre-determined continuous spiral path against the edge surface. The vertical height of the cutting tool 4200 can be adjusted using CNC machinery. Successive circuits of the spiral path of the cutting tool 4200 can be spaced differently along different regions of the surface of the metal alloy casing 4100. The pitch of vertical movement, which can affect the spacing between adjacent paths in the continuous spiral path, can be adjusted based on the curvature of the metal alloy casing 4100 resulting from the shaping by the cutting tool 4200. Areas of high curvature can have closely spaced adjacent paths, as can areas of transition between curved regions and flat regions. The method can also include abrading the bottom surface of the metal alloy casing 4100 by contacting the rotating cutting tool 4200 along a second pre-determined path having alternating linear paths (i.e. a continuous zigzag path) against the bottom surface of the casing 4100. The spacing between adjacent paths along the bottom surface can be spaced further apart than the spacing between adjacent paths in the spiral path along the edge surface of the metal alloy casing 4100.

The various aspects, embodiments, implementations or features of the described embodiments can be used separately or in any combination. Various aspects of the described embodiments can be implemented by software, hardware or a combination of hardware and software. The described embodiments can also be embodied as computer readable code on a computer readable medium for controlling manufacturing operations or as computer readable code on a computer readable medium for controlling a manufacturing line used to fabricate thermoplastic molded parts. The computer readable medium is any data storage device that can store data which can thereafter be read by a computer system. Examples of the computer readable medium include read-only memory, random-access memory, CD-ROMs, DVDs, magnetic tape, optical data storage devices, and carrier waves. The computer readable medium can also be distributed over network-coupled computer systems so that the computer readable code is stored and executed in a distributed fashion.

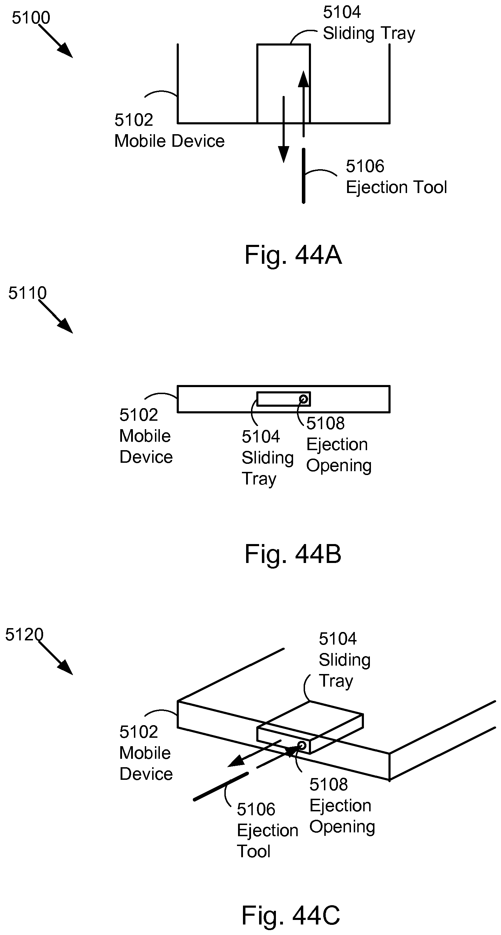

Figure 44A illustrates a top view 5100 of a related art mobile device 5102 having a sliding tray 5104 that can be ejected from the mobile device 5102 upon the insertion of an ejection tool 5106. The ejection tool 5106 can be inserted in a direction along an axis perpendicular to an edge surface of the mobile device 5102, and the sliding tray 5104 can be ejected at least partially from the mobile device 5102 in a direction along an axis substantially parallel to the axis of insertion of the ejection tool. The axis can be parallel to a flat top surface and/or flat bottom surface of the mobile device 5102. The top and bottom surfaces can be perpendicular to the edge surface of the mobile device 5102.

Figure 44B illustrates a front view 5110 of the mobile device 5102. The front view 5110 shows an ejection opening 5108 positioned in the surface of the sliding tray 5104 through which the ejection tool 5106 can be inserted. The ejection opening can be circular to minimize its area. The length of the sliding tray 5104 can be longer than the height of the mobile device 5102, thus necessitating the orientation of the sliding tray parallel to the surface of the mobile device so that the sliding tray can be completely enclosed within the mobile device when inserted.

Figure 44C further illustrates a perspective view 5120 of the mobile device 5102 shown in Figures 44A and 44B. The edge surface of the mobile device 5102 can be perpendicular to the top surface, and the sliding tray 5104 can be inserted and removed along a direction perpendicular to the edge surface. Similarly the ejection tool 5106 can be inserted through the ejection opening 5108 along an axis perpendicular to the edge surface. The insertion axis can be parallel to the ejection axis.

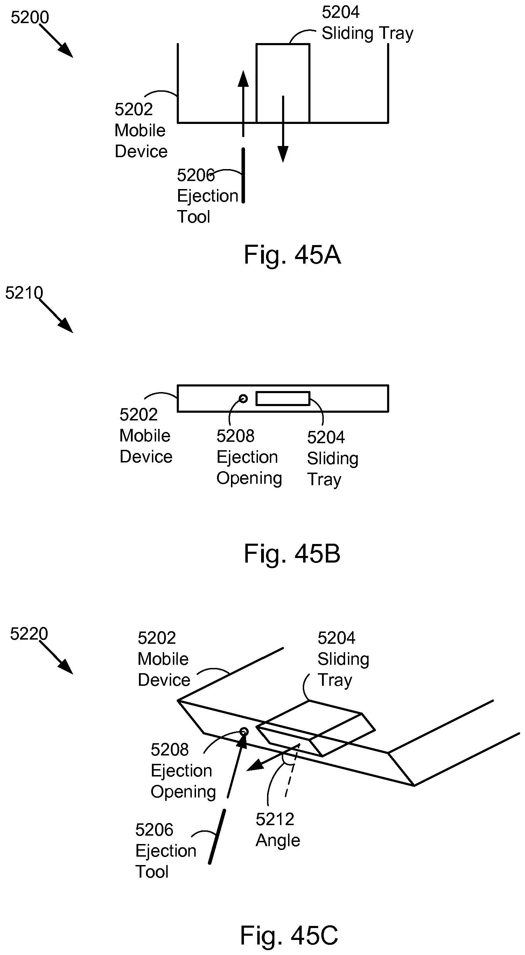

Figure 45A illustrates a top view 5200 of a mobile device 5202 having a sliding tray 5204 that can be ejected from the mobile device 5202 upon the insertion of an ejection tool 5206. The ejection tool can be inserted in a direction along an axis perpendicular to an edge surface of the mobile device 5102, and the sliding tray 5104 can be ejected at least partially from the mobile device 5102 in a direction along an axis substantially parallel to a flat top surface and/or flat bottom surface of the mobile device 5202. The edge surface can be not perpendicular to the flat top surface or the flat bottom surface of the mobile device 5202.

Figure 45B illustrates a front view 5210 of the mobile device 5202 including an ejection opening 5208 in a casing of the mobile device 5202 adjacent to the sliding tray 5204. The ejection opening 5208 can be separate from the sliding tray 5204 in the mobile device 5202 to accommodate different axis orientations to those used in the prior art mobile device 5102 illustrated in Figures 44A-C.

Figure 45C illustrates a perspective view 5220 of the mobile device 5202 including the edge surface that is not perpendicular to the flat top surface or the flat bottom surface of the mobile device. The ejection opening 5208 can be oriented such that the ejection tool 5206 can be inserted in a direction along an axis normal to the edge surface of the mobile device. The axis of the insertion of the ejection tool 5206 can subtend an angle 5212 to an axis parallel to the direction along which the sliding tray 5204 can be ejected from the mobile device 5202. If the axis of the ejection tool were oriented parallel to the axis of movement of the sliding tray 5204, an ejection opening in the angled edge surface of the mobile device 5202 would be larger than the ejection opening 5208 shown in Figure 45C. A circular ejection opening 5208 can be smaller than an elliptical ejection opening (not shown), thereby minimizing the ejection opening through the casing of the mobile device 5202 to provide an aesthetically pleasing edge surface with minimal interruptions.

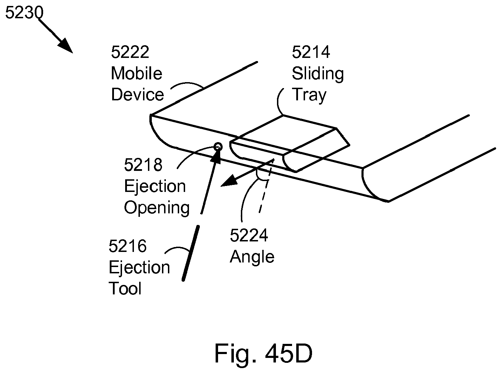

While Figure 45C illustrates an angled edge surface for the casing of the mobile device 5202, a curved edge surface can also be accommodated as shown by the perspective view 5230 of a mobile device 5222 in Figure 45D. A sliding tray 5214 in the mobile device 5222 can have a curved edge surface along its front surface that can be continuous with the curved edge surface of the mobile device 5222 providing a smooth uninterrupted edge surface for the mobile device 5222. The sliding tray 5214 can be ejected along an axis parallel to the top surface of the mobile device 5222, while a center of an ejection opening 5208 can be perpendicular to the edge surface of the mobile device. As with the mobile device 5202 depicted in Figure 45C, an ejection tool 5216 can be inserted through an ejection opening 5218 in the casing of the mobile device 5222 in a direction along an axis at an angle 5224 to the direction of movement of the sliding tray 5214.

An apparatus that can convert a force due to an insertion of the ejection tool 5206/5216 into the ejection opening 5208/5218 into a force to push outward the sliding tray 5204/5214 can be realized using a few mechanical parts. The apparatus can accommodate repeated ejections, removals and re-insertions of the sliding tray 5204/5214 (or any similar flat object that can slide along guides outward from the mobile device 5202/5222. Because the amount of space available in the device is limited the apparatus can be designed to convert a short push by ejection tool 5216 into a longer push of sliding tray 5204/5214, thereby ejecting the sliding tray 5204/5214 a sufficient amount so that a user can easily remove sliding tray 5204/5214 from the mobile device 5202/5222. As the volume available to accommodate the apparatus within the casing of the mobile device 5202/5222 can be limited, the apparatus can include relatively small parts manufactured from strong materials to withstand forces received upon repeated ejections. One or more surfaces of the parts can be coated with a lubricant to ensure smooth operation. For example, the ejection end of the arm upon rotation of the arm increases the distance the tray is pushed out by at least a factor of 1.5 as compared to a distance the ejection tool is pushed against the force receiving assembly.

While the description herein uses a sliding tray in a representative embodiment, any substantially flat object can be ejected using the apparatus and method described herein. The flat object can include multiple parts, such as a tray that can hold a secondary flat object, for example a memory card or subscriber identity module (SIM) card as used in a mobile communication device. The flat object can include recessed areas, joints, hollow areas, open sections and other features that can provide areas for pushing or pulling the flat object from the casing of the mobile device as well as guiding the flat object when ejected from or inserted into the casing of the mobile device. No particular limitation is intended by the use of the term sliding tray herein, and a person skilled in the art can understand the flat object to include equivalent objects suitable for ejection from and insertion into a mobile device.

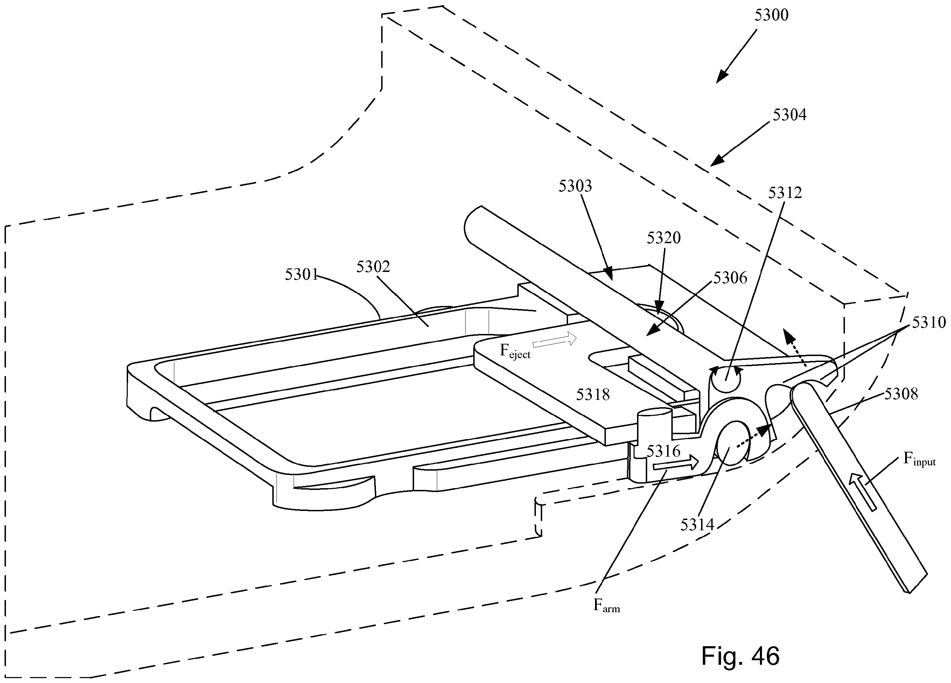

Figure 46 illustrates a perspective view of a representative embodiment of an ejection apparatus arranged to eject a sliding tray 5301 that includes tray body 5302 and tray contact area 5303 through an edge surface 5304 of a mobile device (not shown). The apparatus can include a first pivot element (also referred to as crank) 5306 that can receive an ejection tool 5308 in an ejection tool acceptance region 5310. The ejection tool 5308 can be inserted through an opening in the edge surface 5304 of the mobile device at an angle substantially perpendicular to the edge surface 5304 of the mobile device. The edge surface 5304 can be angled or curved with respect to the top surface of the mobile device, and thus the direction of insertion of the ejection tool 5308 is generally not parallel to the top surface of the mobile device. The ejection tool acceptance region 5310 can be shaped to capture a blunt end of the ejection tool 308. In one embodiment, the ejection tool acceptance region 5310 can be concave shaped. In one embodiment, the ejection tool acceptance region 5310 can be shaped in the form of a groove. In one embodiment, the ejection tool acceptance region 5310 can be shaped to include at last two similarly lobe shaped regions.

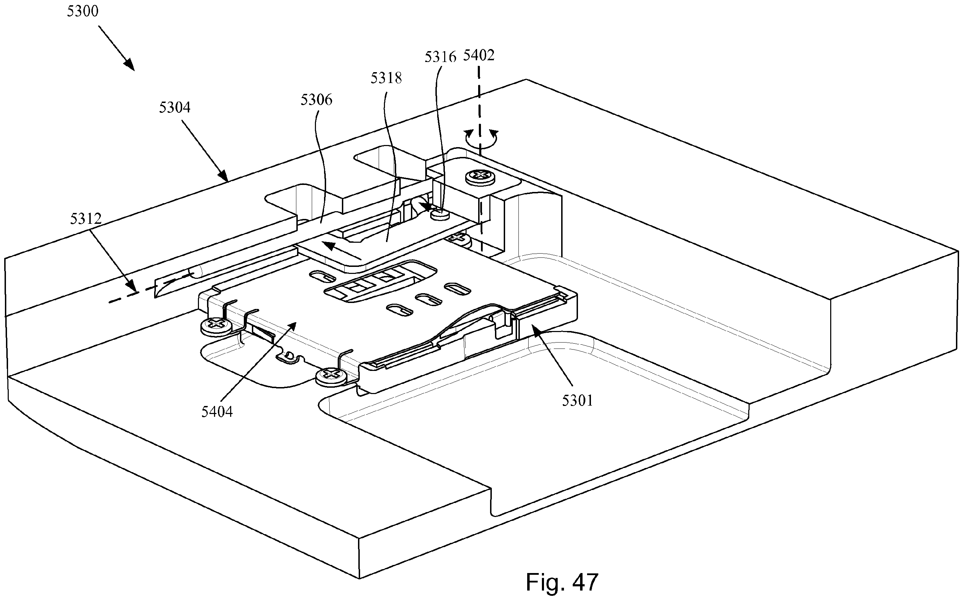

The first pivot element 5306 can rotate about a first rotational axis 5312 causing the ejection tool acceptance region 5310 to rotate upward and a cylindrical section 5314 of the first pivot element 5306 connected to link 5316 to rotate upward causing link 5316 to exert force Fₐᵣₘ onto arm 5318 causing arm 5318 to rotate about second rotational axis 5320 (shown in Figures 46 and 47). Ejection end 5320 of Arm 5318 can contact tray contact area 5303. Upon rotation of arm 5318 about second rotational axis 5320, ejection force F_{eject} can be directly applied to tray contact area 5303 by ejection end 5320 causing tray 5301 to move in the direction of ejection force F_{eject}. The movement of ejection end 5320 of arm 5318 in contact with tray contact area 5303 can push against the tray contact area 5303 thereby displacing tray 5301 outward through edge surface 5304 of the mobile device that can be along a direction substantially parallel to the top surface of the mobile device. The tray contact area 5303 can be displaced a distance out of the edge 5304 of the mobile device sufficient to remove the sliding tray manually from the mobile device. In one embodiment, the bottom of sliding tray contact area 5303 can include an indentation sized and shaped to accept a removal tool (such as a portion of a finger or fingernail) for grasping and removing the tray 5301 from the mobile device. In one embodiment and depending upon the size of the indentation, the sliding tray can move about 0.9 mm to about 1.5 mm away from edge surface 5322.

In one embodiment the ejection tool insertion force can be approximately 6 Newtons, and the sliding tray ejection force can be approximately 3 Newtons. In one embodiment the first pivot element 5306 and arm 5318 can occupy a limited space inside the casing of the mobile device with limited travel distance available for rotational motion. In one embodiment, any section of the link 5316 can travel less than .20 mm in linear distance upon rotation of first pivot element 5306.

To operate for numerous ejections and insertions of the sliding tray 5301, the first pivot element 5306 and arm 5318 can be manufactured from a material having sufficient strength to receive and transmit forces required. In one embodiment, the material can include precipitation hardened martensitic stainless steel. In another embodiment, the first pivot element 5306 and arm 5318 can be formed by a metal injection molding process and be composed of a "613 type" alloy stainless steel having a "condition 900" precipitation hardening. The precipitation hardening can also be known as secondary hardening and age hardening and can be used to significantly increase the yield strength of the metal alloy.

Figure 47 shows another perspective view of ejection apparatus 5300. Figure 46 shows the entire device from a different angle, showing the relationship of second rotation axis 5402 to first rotation axis 5312 and arm 5318. It shows how first pivot element 5306 is supported by the housing of the portable device. Sliding tray housing 5404 is also depicted, and is used to ensure the flat object stored in sliding tray 5301 stays in place without regard to the orientation of the device.

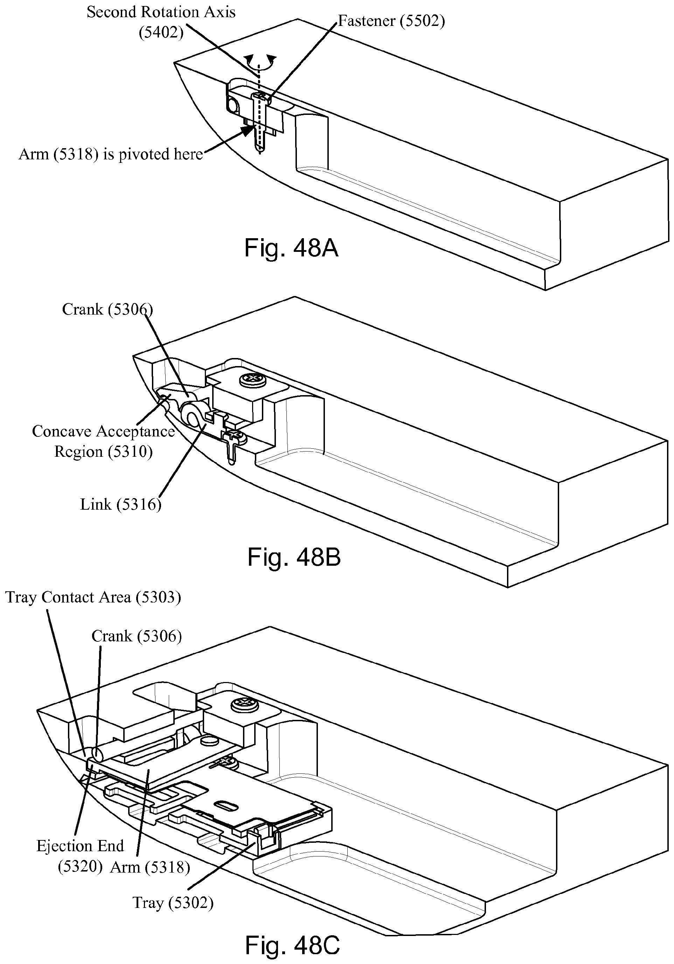

Figure 47 shows an exploded view of ejection apparatus 5300 highlighting the relationships between various components. More specifically Figure 48A shows how fastener 5502 is anchored into the device housing. Figure 48B shows how the concave acceptance region 5310 and crank 5306 fit into the device housing and how link 5316 moves and interacts with crank 5306 as it traverses across the inside of the device housing. Figure 48C shows how arm 5318 fits underneath crank 5316, and gives a better idea for how ejection end 5320 contacts tray contact area 5303.

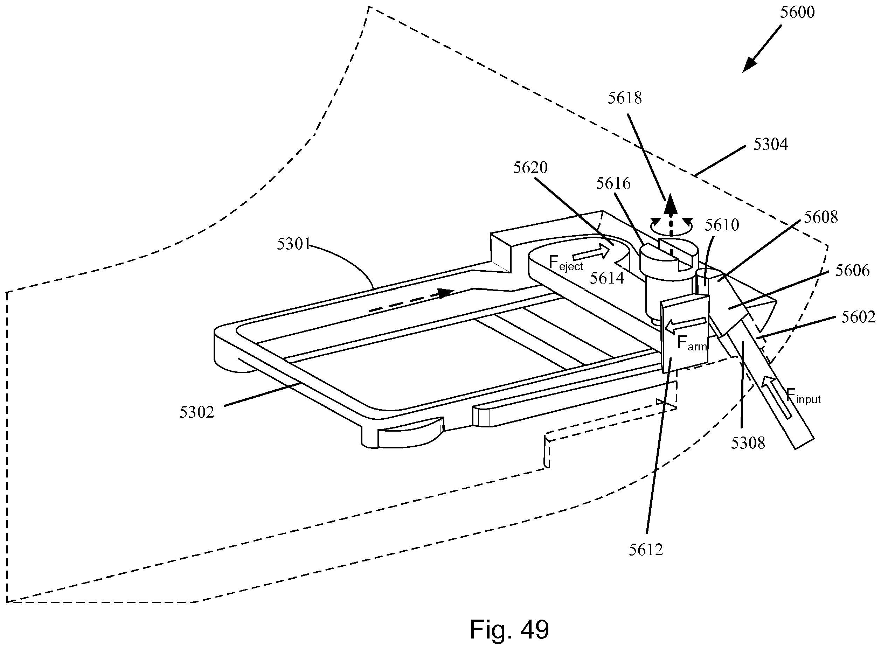

Figure 49 illustrates a perspective view of a representative embodiment of ejection apparatus 5600 arranged to eject a sliding tray 5301 that includes tray body 5302 and tray contact area 5303 through an edge surface 5304 of the mobile device (not shown). Ejection tool 5308 can be inserted into channel 5602 formed to accommodate plunger 5604. Plunger 5604 can have body 5606 formed to snugly fit within channel 5602 having little likelihood of falling out from channel 5602 since ejection tool insertion hole can be made narrower than the width of plunger 5604. In one embodiment plunger 5604 can have head portion 5608 integrally formed with body 5606. In one embodiment head portion 5608 can be shaped to include angled surface 5610 that can come into direction contact with arm input position 5612 of arm 5614 pivotally connected to the housing of the portable device by way of fastener 5616. In one embodiment, angled surface 5610 can be shaped in such a way that the motion of ejection tool 5308 normal to the surface of the housing of the portable device can be redirected such that force Fₐᵣₘ can be essentially directly parallel to a top (or bottom surface) of the portable device. Force Fₐᵣₘ when applied to arm input position 5612 of arm 5614, can cause arm 5614 to rotate about rotation axis 5618 at fastener 5616. In one embodiment, the rotation of arm 5614 about rotation axis 5618 can cause ejection end 5620 of arm 5614 to move in a substantially opposite direction than that of arm input position 5612 of arm 5614. In one embodiment, ejection end 5620 can be shaped to conform to tray contact area 5303 of tray 5301 such that the movement of ejection end 5620 can cause tray 5301 to move a predetermined distance from edge 5304 to expose a pre-selected amount of tray contact area 5303 and in particular, the indentation in tray 5301. In one embodiment, the predetermined distance can be on the order of about 0.9 to about 1.5 mm depending upon an amount of exposure desired for the indentation in tray 5301. This distance is enough to allow a user to easily remove the tray with a fingertip.

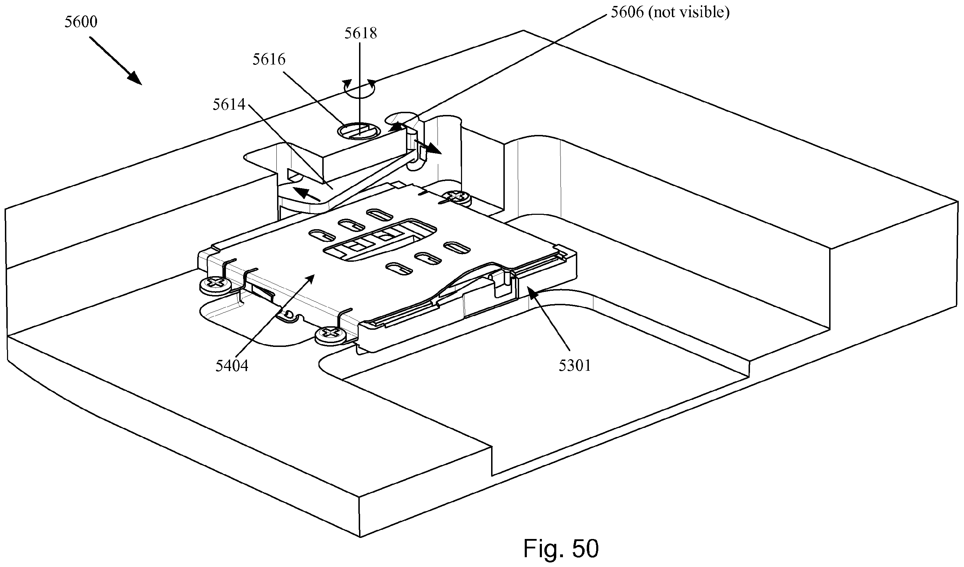

Figure 50 shows another perspective view of ejection apparatus 5600. Figure 50 shows the device from a different angle, showing the relationship of rotation axis 5618 to arm 5614. Figure 50 shows how fastener 5616 is attached to the device housing. Sliding tray housing 5404 is also depicted, and is used to ensure the flat object stored in sliding tray 5301 stays in place without regard to the orientation of the device.

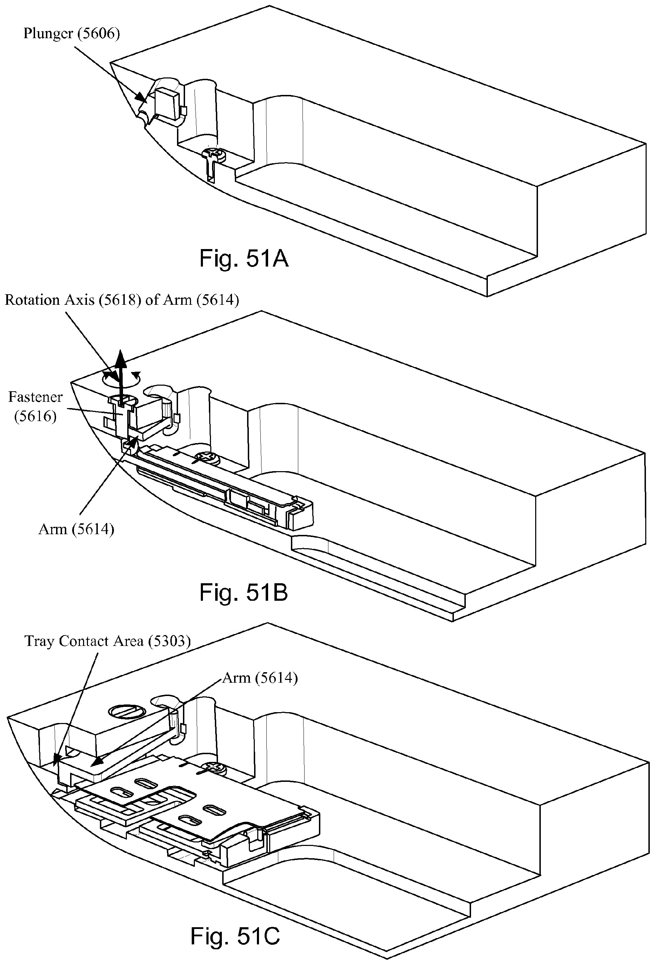

Figures 51A-51C show an exploded view of ejection apparatus 5600 highlighting the relationships between various components. More specifically Figure 51A shows a cross section of plunger 5604 and how it fits into channel 5602. Figure 51B shows how fastener 5616 goes through arm 5614, and is anchored into the device housing. Figure 51C shows how ejection end 5320 contacts tray contact area 5303.

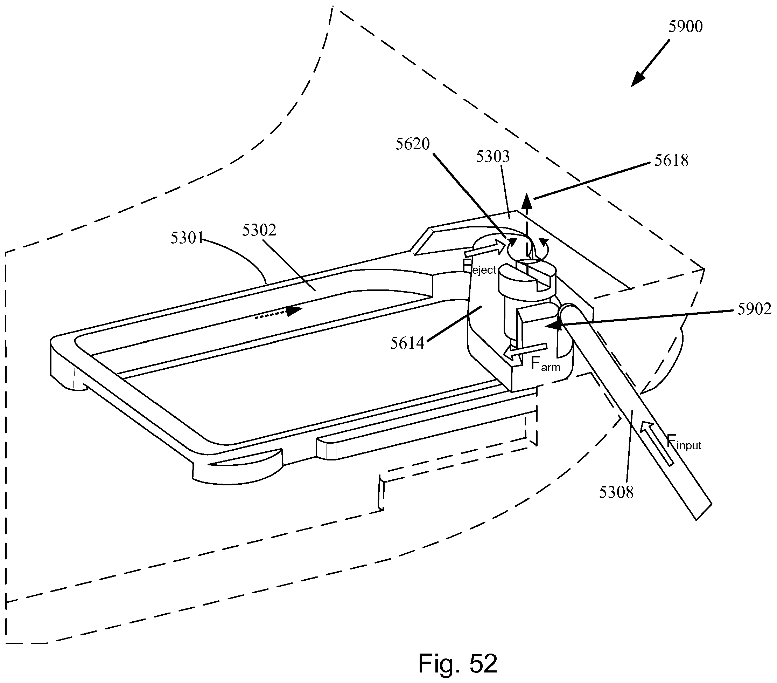

Figure 52 shows a perspective view of a representative embodiment of ejection apparatus 5900 arranged to eject a sliding tray 5301 that includes tray body 5302 and tray contact area 5303 through an edge surface 5304 of the mobile device (not shown). Ejection apparatus 5900 works much the same way to eject tray 5301 as apparatus 5600, except that the plunger has been eliminated such that ejection tool 5308 directly applies ejection force Fₐᵣₘ to ejection tool contact area 5902 of arm 5614 thereby reducing the number of components required.

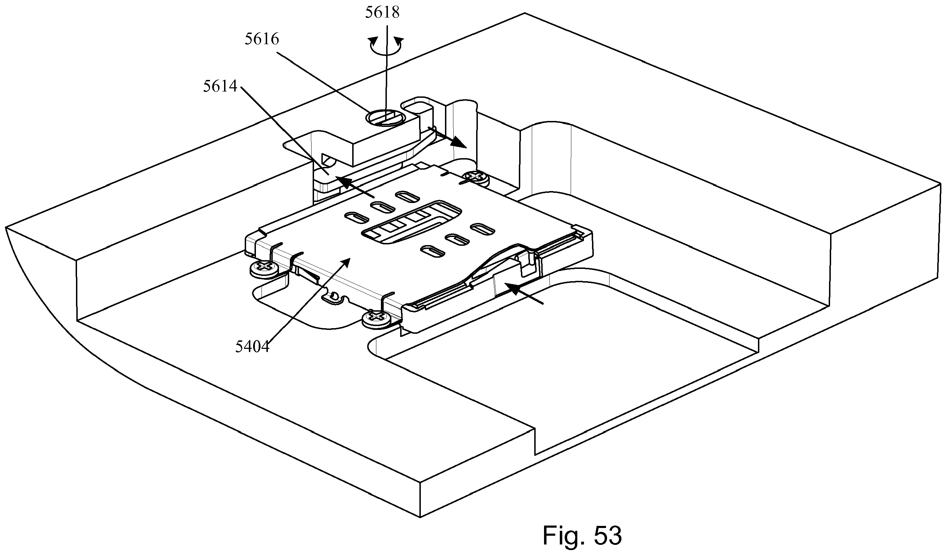

Figure 53 shows another perspective view of ejection apparatus 5900. Figure 53 shows the device from a different angle, showing the relationship of rotation axis 5618 to arm 5614. Figure 53 shows how fastener 5616 is attached to the device housing. Sliding tray housing 5404 is also depicted, and is used to ensure the flat object stored in sliding tray 5301 stays in place without regard to the orientation of the device.

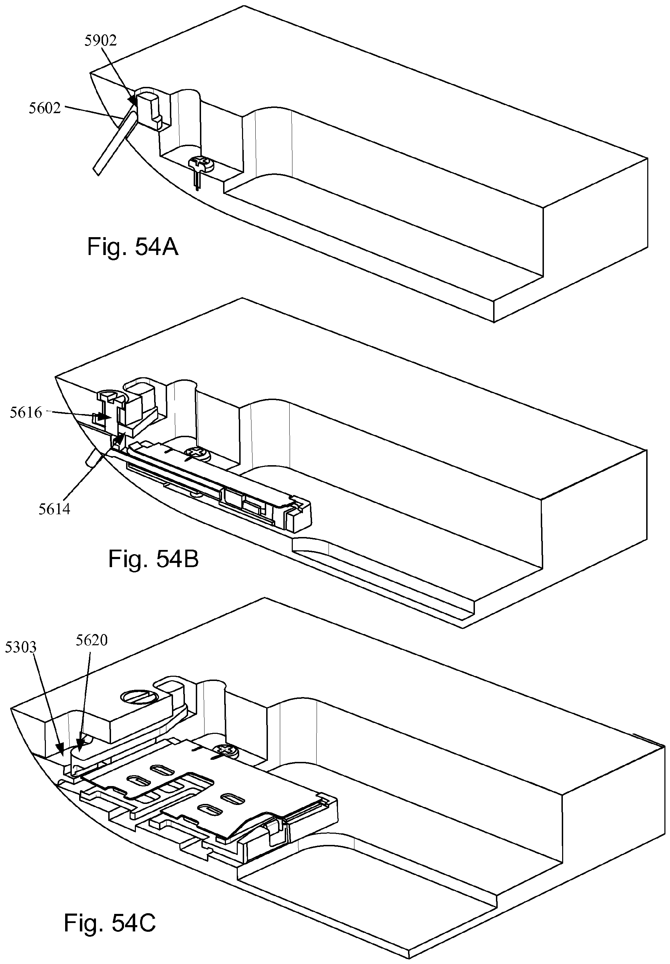

Figures 54A-54C show an exploded view of ejection apparatus 5900 highlighting the relationships between various components. More specifically Figure 54A shows a cross section of ejection tool contact area 5902 and how it is lined up with channel 5602. Figure 54B shows how fastener 5616 goes through arm 5614, and is anchored into the device housing. Figure 54C shows how ejection end 620 of arm 5318 contacts tray contact area 5303.

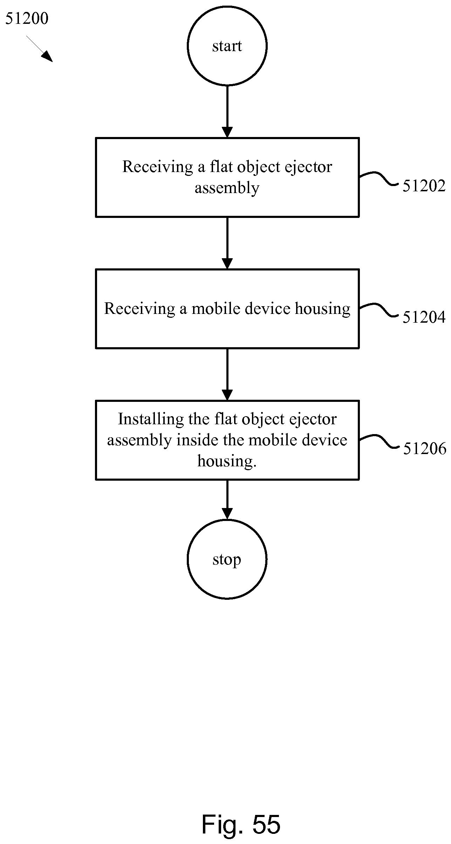

Figure 55 shows a flowchart detailing a manufacturing process 51200 for installing a flat object ejector into a mobile device. Process 51200 begins at step 51202 by receiving a flat object ejector assembly. The flat object ejector assembly can include any of the three embodiments described above. In step 51204 a mobile device housing is received. The mobile device can include, for example, smart phones, tablet devices, portable media players, and so on. In step 51206 the flat object ejector assembly is installed within and attached to the mobile device housing.

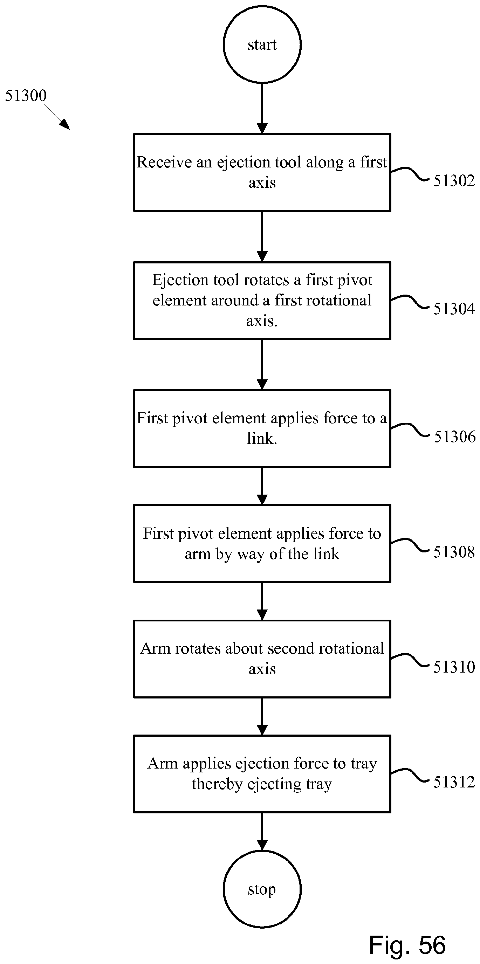

Figure 56 illustrates steps in a representative embodiment of a method to eject a flat object from the casing of a mobile device. These steps show the process for carrying out the steps from the most complex embodiment. The flat object can include a memory card, a tray that can hold a SIM card or similar object. In step 51302, an apparatus in the mobile device can receive an ejection tool inserted along a first axis. The ejection tool can be received in a concave section of a first pivot element. In one embodiment, the direction of insertion of the ejection tool can be along an axis perpendicular to the center of an opening in the casing of the mobile device. The casing of the mobile device can be shaped along a curve in an area surrounding the opening. In one embodiment, the first axis of insertion can be not parallel to a top surface or bottom surface of the casing of the mobile device. The first axis can also be not parallel to a circuit board positioned inside the casing of the mobile device adjacent to the opening. In step 51304 the first pivot element can rotate about a first rotational axis in response to the insertion of the ejection tool. The first pivot element can engage a link 51306 connected to an arm. In step 51308, rotation of the first pivot element can apply ejection force Fₐᵣₘ to the arm by way of the link, causing the arm to rotate about a second axis substantially perpendicular to the first axis in 51310. The rotation of the arm can cause ejection force F_{eject} to eject the SIM tray at 51312.

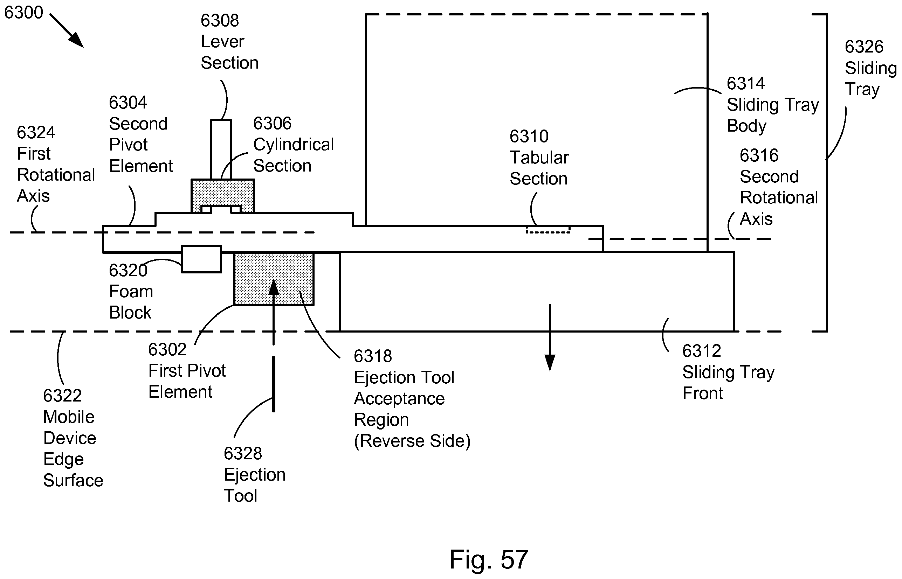

Figure 57 illustrates a top view 6300 of a representative embodiment of an apparatus arranged to eject a sliding tray 6326 through an edge surface 6322 of a mobile device (not shown). The apparatus can include a first pivot element 6302 that can be received an ejection tool 6328 in an ejection tool acceptance region 6318 (on a reverse side to the top view shown). The ejection tool can be inserted through an opening in the edge surface 6322 of the mobile device at an angle substantially perpendicular to the edge surface 6322 of the mobile device. The edge surface 6322 can be angled or curved with respect to the top surface of the mobile device, and thus the direction of insertion of the ejection tool 6328 can be substantially not parallel to the top surface of the mobile device. The ejection tool acceptance region 6318 can be shaped to capture a blunt end of the ejection tool. In one embodiment, the ejection tool acceptance region 6318 can be concave shaped.

The first pivot element 6302 can rotate about a first rotational axis 6324 causing the acceptance region 6318 to tilt upward and a cylindrical section 6306 of the first pivot element 6302 to tilt downward toward a lever section 6308 of a second pivot element 6304. The cylindrical section 6306 can be connected continuously to a U-shaped section of the first pivot element 6302, and together the cylindrical section 6306 and the U-shaped section of the first pivot element 6302 can surround the lever section 6308 of the second pivot element 6304. Upon rotation of the first pivot element 6302, the cylindrical section 6306 of the first pivot element 6302 can depress the lever section 6308 of the second pivot element 6304 thereby causing the second pivot element 6304 to rotate about a second rotational axis 6316. The U-shaped section and the cylindrical section 6306 of the first pivot element 6302 can surround the lever section 6308 of the second pivot element 6304 to minimize lateral translational movement of the second pivot element 6304 along the second rotational axis 6316.

A tabular section 6310 of the second pivot element 6304 can contact a back surface of the sliding tray front 6312, and as the second pivot element 6304 rotates about the second rotational axis 6316, the tabular section 6310 can push against the sliding tray 6326 thereby displacing the sliding tray body 6314 and sliding tray front 6312 outward through the edge surface 6322 of the mobile device. The sliding tray 6326 can be displaced along a direction substantially parallel to the top surface of the mobile device. The sliding tray body 6314 and sliding tray front 6312 can be displaced a distance out of the casing of the mobile device sufficient to remove the sliding tray manually from the mobile device. In one embodiment, the sliding tray front 6312 can include an indentation to accept a removal tool (such as a portion of a finger or fingernail) to grasp and remove the sliding tray from the mobile device. The lever section 6308 of the second pivot element 6304 can magnify the force of the ejection tool 6328 presented to the first pivot element 6302 resulting in a force of the tabular section 6310 of the second pivot element 6304 against the sliding tray 6326 that can be greater than the force of the ejection tool 6328 against the ejection tool acceptance region 6318 of the first pivot element 6302. In one embodiment the force of the sliding tray ejection can be at least 1.5 times the force of the ejection tool insertion. In one embodiment the ejection tool insertion force can be approximately 10 Newtons, and the sliding tray ejection force can be approximately 20 Newtons. In one embodiment the first pivot element 6302 and the second pivot element 6304 can occupy a limited space inside the casing of the mobile device with limited travel distance available for rotational motion. In one embodiment, any section of the first pivot element 6302 and the second pivot element 6304 can travel less than 20 mm in linear distance upon rotation.

The apparatus can also include a foam block 6320 adjacent to the second pivot element 6304. The foam block 6320 can be compressed by a front portion of the second pivot element 6304 when the second pivot element 6304 rotates to eject the sliding tray 6326 in response to the force of the ejection tool 6328 on the first pivot element 6302. In a "closed" neutral home position, in which the sliding tray 6326 can be contained completely within the casing of the mobile device, the tabular section 6310 of the second pivot element 6304 can be in a position substantially perpendicular to the sliding tray body 6314 and parallel to a rear facing section of the sliding tray front 6312 against which the tabular section 6310 can contact and push upon rotation of the second pivot element 6304. In an "open" ejected position, in which the sliding tray can be partially contained within the casing of the mobile device and partially extended outside of the casing of the mobile device, the tabular section 6310 of the second pivot element 6304 can be rotated at an angle that can be not perpendicular to the sliding tray body 6314 and also not parallel to the rear facing section of the sliding tray front 6312. When the ejection tool 6328 can be removed from the casing of the mobile device, thereby releasing the force on the first pivot element 6302 that can rotate the first pivot element 6302 (which in turn can rotate the second pivot element 6304), the foam block 6320 can decompress pressing against a front section of the second pivot element 6304. The decompression of the foam block 6320 can cause the second pivot element 6304 to rotate back toward the "closed" neutral home position. The tabular section 6310 of the second pivot element 6304 can be positioned after the decompression of the foam block 6320 such that the sliding tray body 6314 can not contact the tabular section 6310 of the second pivot element 6304 upon reinsertion of the sliding tray 6326 into the casing of the mobile device. The rotation of the tabular section 6310 of the second pivot element 6304 can thus be used to eject at least partially the sliding tray 6326 from the mobile device while not contacting the sliding tray 6326 upon reinsertion to the mobile device.

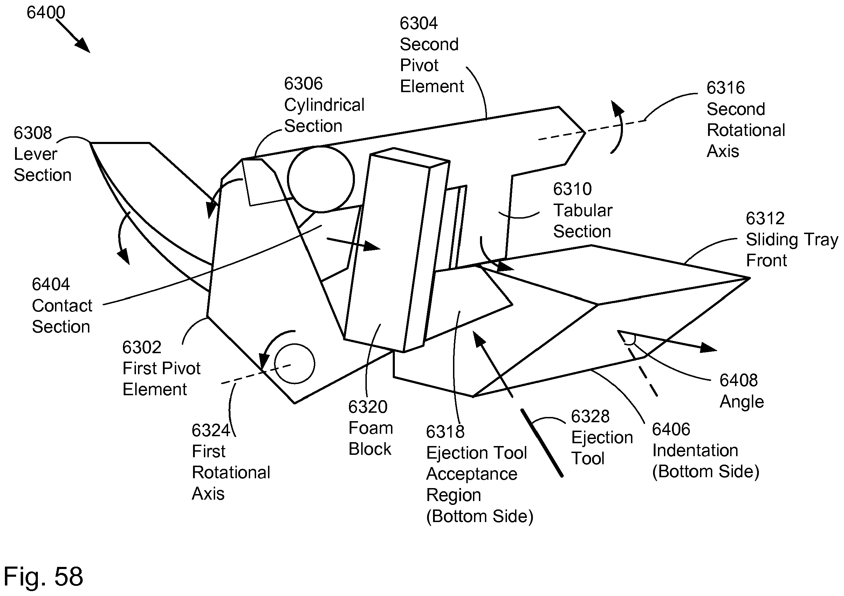

Figure 58 illustrates a perspective view 6400 of a portion of the apparatus depicted in Figure 57 arranged to eject the sliding tray from the casing of the mobile device. The first pivot element 6302 can receive the ejection tool 6328 in a direction along a first axis into the ejection tool acceptance region 6318. The direction of insertion of the ejection tool 6328 can be perpendicular to at least a portion of the edge surface of the casing (not shown) of the mobile device. The direction can be not parallel to a top surface of the mobile device, not parallel to a direction of movement of the sliding tray in the mobile device, and not parallel to a circuit board positioned above or below the sliding tray in the mobile device. A force of the ejection tool 6328 against the ejection tool acceptance region 6318 of the first pivot element 6302 can cause the first pivot element 6302 to rotate in a counter-clockwise direction about the first rotational axis 6324. The counter-clockwise rotation of the first pivot element 6302 can contact the cylindrical section 6306 of the first pivot element 6302 against the lever section 6308 of the second pivot element 6304. In one embodiment, the lever section 6308 of the second pivot element 6304 can be curved. The cylindrical section 6306 of the first pivot element 6302 can contact and slide along the curved lever section 6308 of the second pivot element 6316 as the first and second pivot elements 6302/6304 rotate in a counter-clockwise direction about the first and second rotational axes 6324/6316 respectively.

As the second pivot element 6304 rotates about the second rotational axis 6316, the tabular section 6310 of the second pivot element 6304 can contact a rear facing section of the sliding tray front 6312, thereby pushing the sliding tray in a direction outward from the casing of the mobile device in which the sliding tray can be situated. The tabular section 6310 can begin in a "neutral" home position that can be perpendicular to the top surface of the casing of the mobile device and parallel to the rear facing section of the sliding tray front 6312 against which the tabular section 6310 can contact upon ejection of the sliding tray. Upon rotation, the tabular section 6310 can be in a "tilted" ejected position that can be not perpendicular to the top surface of the casing (i.e. not perpendicular to the direction of movement of the sliding tray). The sliding tray 6326 can be ejected a distance from the casing of the mobile device sufficient for a user of the mobile device to retrieve the sliding tray 6326 by manually pulling the sliding tray 6326 from the mobile device. The sliding tray front 6312 can include an indentation 6406 along the bottom surface in which a user can insert a removal tool to grab the sliding tray. A representative removal tool can be a finger or fingernail of the user of the mobile device.

Rotation of the second pivot element 6304 in response to the force exerted by the ejection tool 6328 on the first pivot element 6302 can also push a contact section 6404 of the second pivot element 6304 against a surface of the foam block 6320, thereby compressing the foam block 6320. In the absence of the foam block 6320, after removal of the ejection tool 6328, the second pivot element 6304 can remain rotated with the tabular section 6310 in the "tilted" position. Upon reinsertion of the sliding tray 6326 into the casing of the mobile device, a portion of the sliding tray body 6314 can contact the tabular section 6310 in the "tilted" position. To avoid this contact between the sliding tray 6326 and the tabular section 6310 of the second pivot element 6304, upon removal of the ejection tool 6328, the foam block 6320 can decompress against the contact section 6404 of the second pivot element 6304, thereby causing the second pivot element 6304 to rotate in the clockwise direction about the second rotational axis 6316. This clockwise rotation can return the tabular section 6310 of the second pivot element 6304 to the "neutral" position. When inserting the sliding tray 6326 into the mobile device, the sliding tray body 6314 and the sliding tray front 6312 can be positioned to not contact the tabular section 6310 of the second pivot element 6304, permitting a smooth insertion without irregular contact or scraping of the tabular section 6310 against the sliding tray 6326 (or against a flat object such as a memory card contained therein). The foam block 6320 can also minimize excess movement of the first and second pivot elements 6302/6304 against one another to minimize "rattling" sounds when changing orientation of the mobile device. When installed, the sliding tray 6326 can be positioned adjacent to a circuit board and/or a connector in the mobile device. In one embodiment, the sliding tray 6326 can include a subscriber identity module (SIM) card positioned to contact at least a portion of the circuit board and/or a connector in the mobile device thereby providing a path for an electrical connection between the SIM card and circuitry within the mobile device.

To operate for numerous ejections and insertions of the sliding tray 6326, the first and second pivot elements 6302/6304 can be manufactured from a material having sufficient strength to receive and transmit forces required. In one embodiment, the first and second pivot elements 6302/6304 can be manufactured from precipitation hardened martensitic stainless steel. In one embodiment, the first and second pivot elements 6302/6304 can be formed by a metal injection molding process and be composed of a "613 type" alloy stainless steel having a "condition 900" precipitation hardening. The precipitation hardening can also be known as secondary hardening and age hardening and can be used to significantly increase the yield strength of the metal alloy. As the cylindrical section 6306 of the first pivot element 6302 can contact at least a portion of a surface of the lever section 6308 upon rotation, at least part of the cylindrical section 6306 and at least part of the lever section 6308 can be coated with a dry film lubricant. In one embodiment, the entire first pivot element 6302 and the entire second pivot element 6304 can be coated with the dry film lubricant. The dry film lubricant in combination with the curved surface of the lever section 6308 and the curved surface of the cylindrical section 6306 can provide smooth contact as the cylindrical section 6306 of the first pivot element 6302 slides along the lever section 6308 of the second pivot element 6304 when the first and second pivot elements 6302/6304 rotate along the first and second rotational axes 6324/6316 respectively. In one embodiment the dry film lubricant coating can be applied by dipping the first and second pivot elements 6302/6304 into an aqueous solution that includes alcohol and the dry film lubricant, wherein the alcohol can evaporate leaving the dry film lubricant coating the metal alloy part first and second pivot elements 6302/6304. The dry film lubricant on the metal alloy part first and second pivot elements 6302/6304 can improve performance of the ejection apparatus including smooth operation with minimal friction between contacting surfaces. The dry film coating can eliminate migration of lubricant inside the mobile device, can avoid dust collection on the moving parts and can avoid contamination of lubricant to other components contained in the mobile device. In one embodiment the ejection apparatus can sustain at least 2000 repeated ejections and insertions.

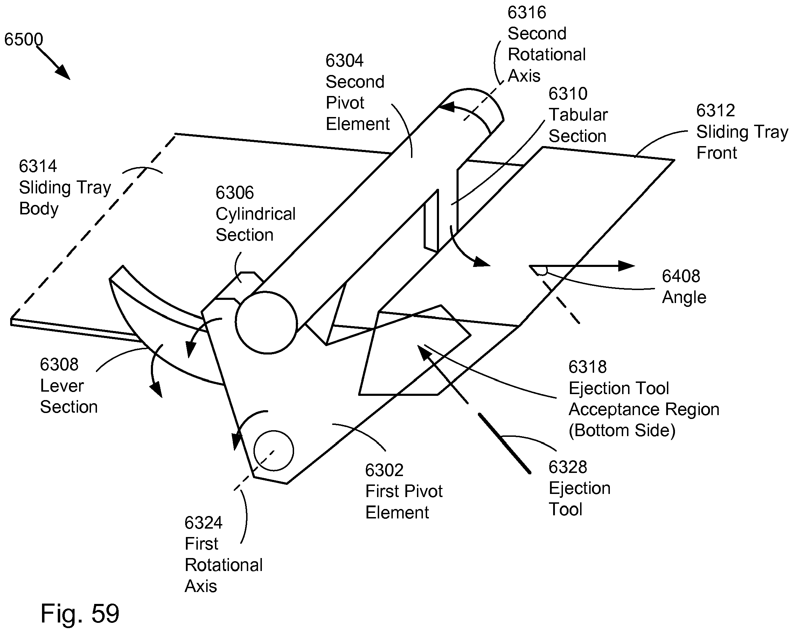

Figure 59 illustrates an additional perspective view 6500 of the embodiment of the apparatus for ejection of the sliding tray in the mobile device. As described above, the ejection tool 6328 can be inserted through an opening in the casing of the mobile device and can be received in the ejection tool acceptance region 6318 of the first pivot element 6302. The ejection tool 6328 can force a rotation of the first pivot element 6302 about the first rotational axis 6324 causing the cylindrical section 6306 of the first pivot element 6302 to contact and slide along the curved lever section 6308 of the second pivot element 6304. The second pivot element 6304 can in turn rotate about the second rotational axis 6316 thereby pushing the tabular section 6310 against a rear facing section of the sliding tray front 6312 ejecting the sliding tray 6326 at least partially out of the casing of the mobile device. The sliding tray body 6314 can contain a hollow area in which a memory card, such as a SIM card, can be installed. The SIM card can electrically contact a circuit board positioned beneath (or above) the sliding tray 6326. As shown in Figure 59, the first rotational axis 6324 and the second rotational axis 6316 can be parallel to each other, while an axis along the insertion direction of the ejection tool 6328 and an axis along the direction of movement of the sliding tray 6326 during ejection can be not parallel to one another. In one embodiment, the angle 408 between the ejection tool 6328 insertion and the sliding tray 6326 ejection can be between approximately 40 to 50 degrees. The angle 408 can depend upon a curvature of the edge surface of the casing at the point of insertion of the ejection tool 6328.

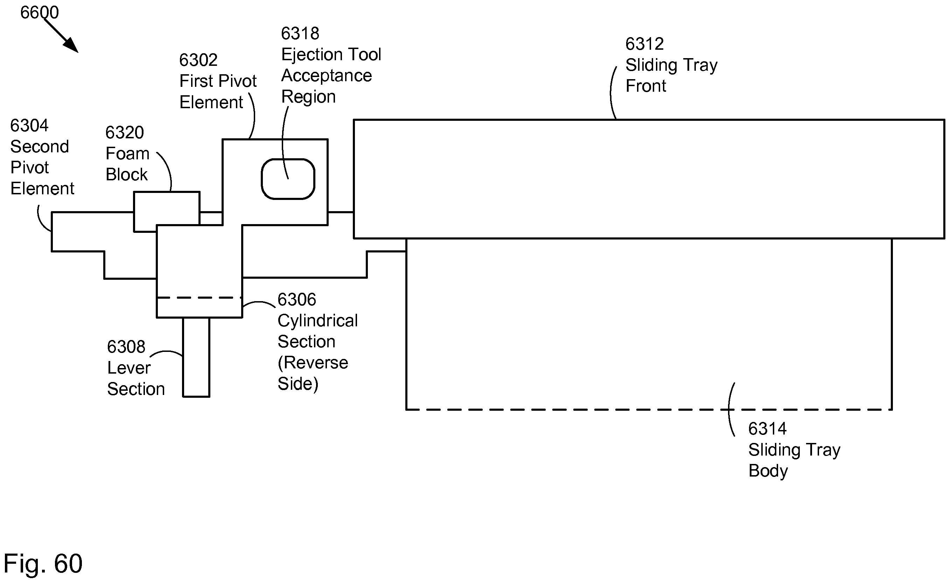

Figure 60 illustrates a bottom view 6600 of an embodiment of the apparatus for ejecting the sliding tray 6326 through the casing of the mobile device. The ejection tool acceptance region 6318, situated on the bottom surface of the first pivot element 6302 can accept the ejection tool 6328 in a direction along a first axis. The first pivot element 6302 can rotate pressing and sliding the cylindrical section 6306 of the first pivot element 6302 against and along the lever section 6308 of the second pivot element 6304. The tabular section 6310 (not shown) of the second pivot element 6304 can rotate pushing the sliding tray front 6312 in a direction along a second axis. The first and second axes can be not parallel to each other.

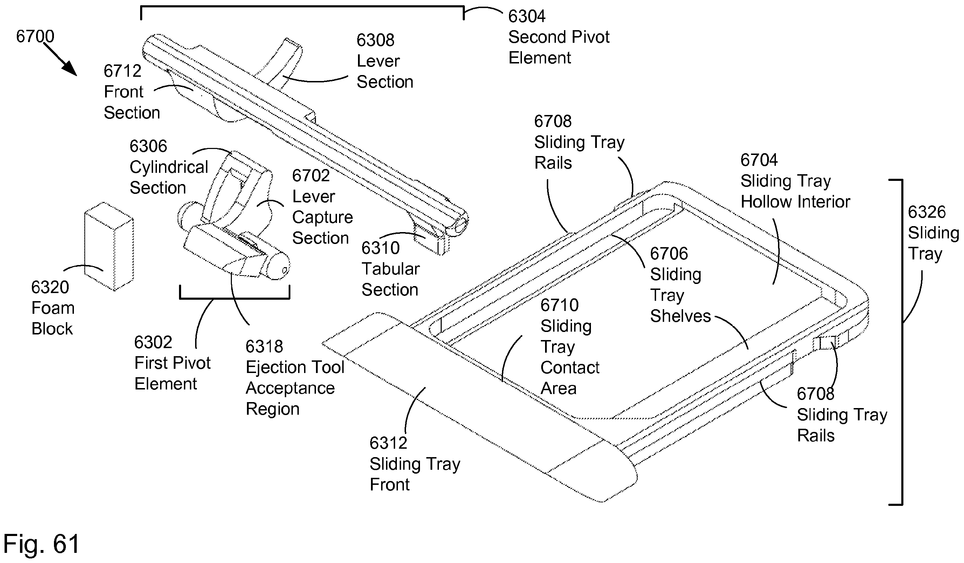

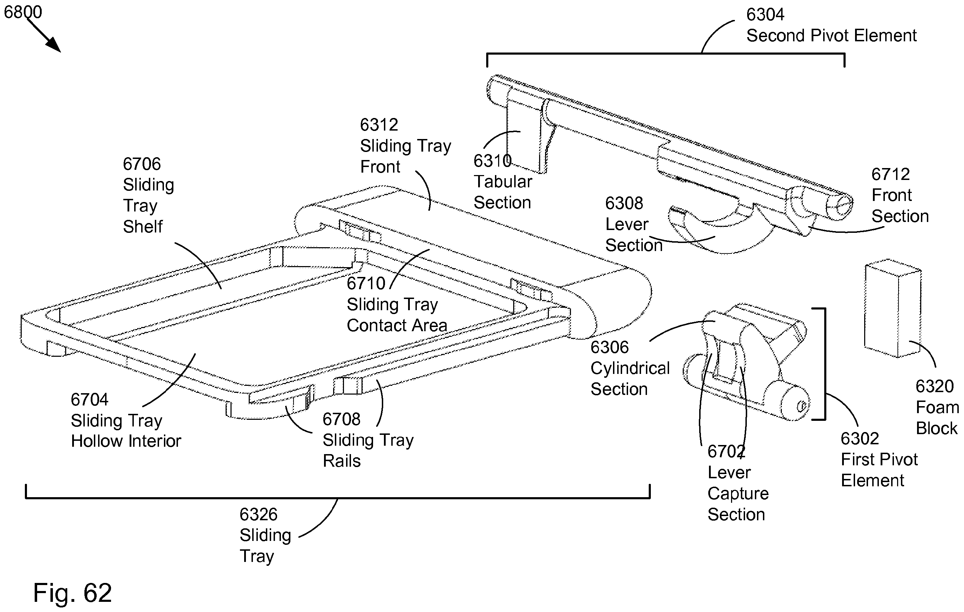

Figures 61 and 62 illustrate in detail a front perspective view 6700 and rear perspective view 6800 of four elements included in one embodiment of the apparatus for ejecting the sliding tray 6326 through the casing of the mobile device. The sliding tray 6326 includes a sliding tray contact area 6710 at a rear facing portion of the sliding tray front 6312 against which the tabular section 6310 of the second pivot element 6304 can contact upon rotation. The sliding tray body 6314 includes a hollow interior 6704 through which electrical contacts on a secondary flat object, such as a SIM card, can contact a circuit board mounted beneath the sliding tray 6326. Shelves 6706 along the interior sides of the sliding tray 6326 can hold the SIM card in position. Rails 6708 along the exterior sides of the sliding tray 6326 can guide the sliding tray 6326 when moving inward to or outward from the mobile device.

The first pivot element 6302 can include a lever capture section 6702 that can surround the lever section 6308 of the second pivot element when assembled together in the mobile device. The cylindrical section 6306 of the first pivot element 6302 can depress and slide along the lever section 6308 when the first pivot element 6302 rotates in response to the ejection tool 6328 (not shown) being pushed against the ejection tool acceptance region 6318 of the first pivot element 6302. The second pivot element 6304 can rotate pressing the tabular section 6310 against the sliding tray contact area 6710 of the sliding tray 6326 thereby ejecting the sliding tray 6326 at least partially out of the casing of the mobile device. The foam block 6320 can be placed against a front section 6712 of the lever section 6308 on the second pivot element 6304. When rotated, the second pivot element 6304 can compress the front section 6712 against the foam block 6320. When removing the ejection tool 6328, foam block 6320 can decompress against the front section 6712 causing the second pivot element 6304 to rotate back towards the original "neutral" home position. This rotation can return the tabular section 6310 to an upright orientation from a "tilted" position that ejects the sliding tray 6326 from the mobile device.

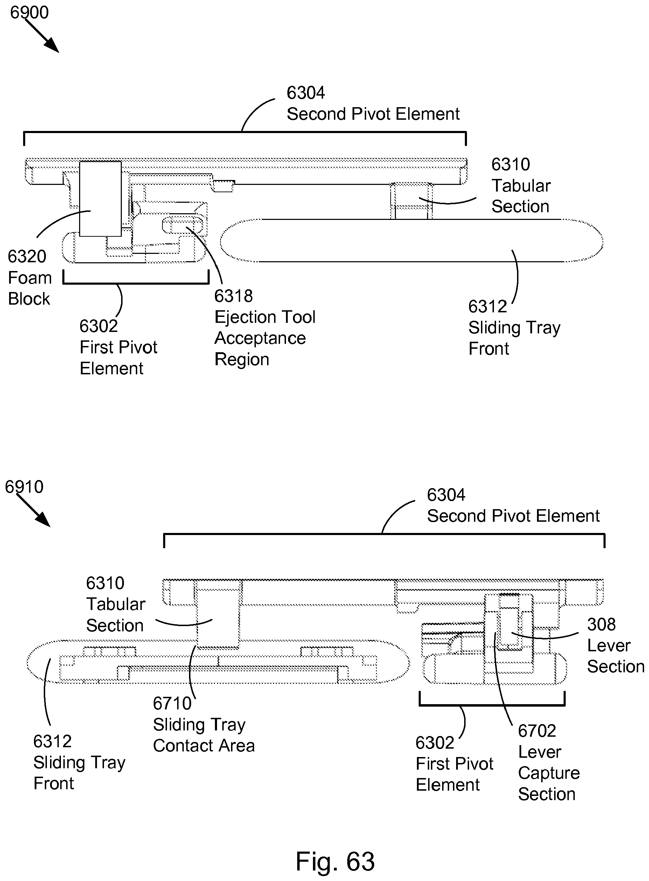

Figure 63 illustrates a front view 6900 and a back view 6910 of the elements of the apparatus for ejecting the sliding tray illustrated in Figures 62 and 61 assembled together in a "neutral" home position when the sliding tray 6326 can be fully inserted into the casing of the mobile device. A front face of the sliding tray front 6312 can be flush with the exterior surface of the casing of the mobile device. The tabular section 6310 can be vertically positioned adjacent to the sliding tray contact area 6710 of the sliding tray 6326. In one embodiment, the tabular section 6310 can be next to but not touching the sliding tray contact area 6710 in the "neutral" home position. In another embodiment, the tabular section 6310 can be touching the sliding tray contact area 6710 in the "neutral" home position but not providing sufficient force to eject the sliding tray 6326 from the casing of the mobile device. The ejection tool acceptance region 6318 of the first pivot element 6302 can be tilted to receive the ejection tool 6328 through an opening in the casing that is perpendicular to the surface of the casing of the mobile device. The lever section 6308 of the second pivot element 6304 can be surrounded by the lever capture section 6702 of the first pivot element 6302, thereby minimizing lateral movement of the first and second pivot elements 6302/6304 within the casing of the mobile device.

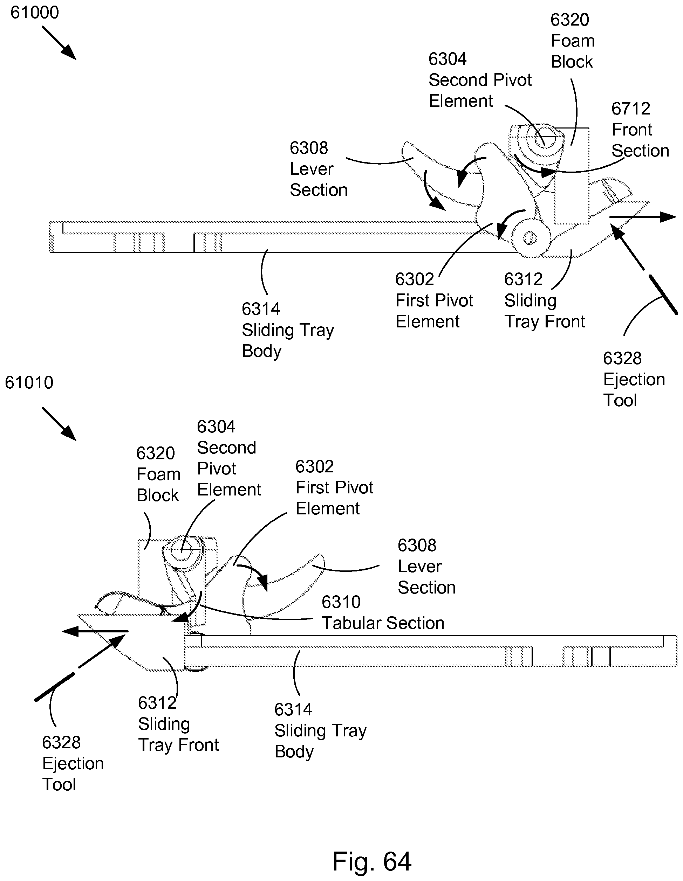

Figure 64 illustrates a left side view 61000 and a right side view 61010 of the elements of the apparatus for ejecting the sliding tray illustrated in Figures 61 and 62 assembled together in the "neutral" home position. Insertion of the ejection tool 6328 into the ejection tool acceptance region 6318 of the first pivot element 6302 can cause the first pivot element 6302 to rotate and contact the lever section 6308 of the second pivot element thereby rotating the tabular section 6310 of the second pivot element 6304 and contacting the tabular section 6310 of the second pivot element 6304 to the contact area 6710 of the sliding tray front 6312 ejecting the sliding tray 6326 from the casing of the mobile device. The insertion of the ejection tool 6328 can be perpendicular (normal) to the surface of the sliding tray front 6312, which can contiguously align with the exterior surface of the casing of the mobile device. The sliding tray 6326 can be ejected along a directional axis that differs from the directional axis of insertion of the ejection tool 6328. In one embodiment, the sliding tray 6326 ejects in a direction parallel to the top surface of the mobile device. When installed in the mobile device, the sliding tray body 6314 can be substantially parallel to a circuit board positioned beneath the sliding tray 6326.

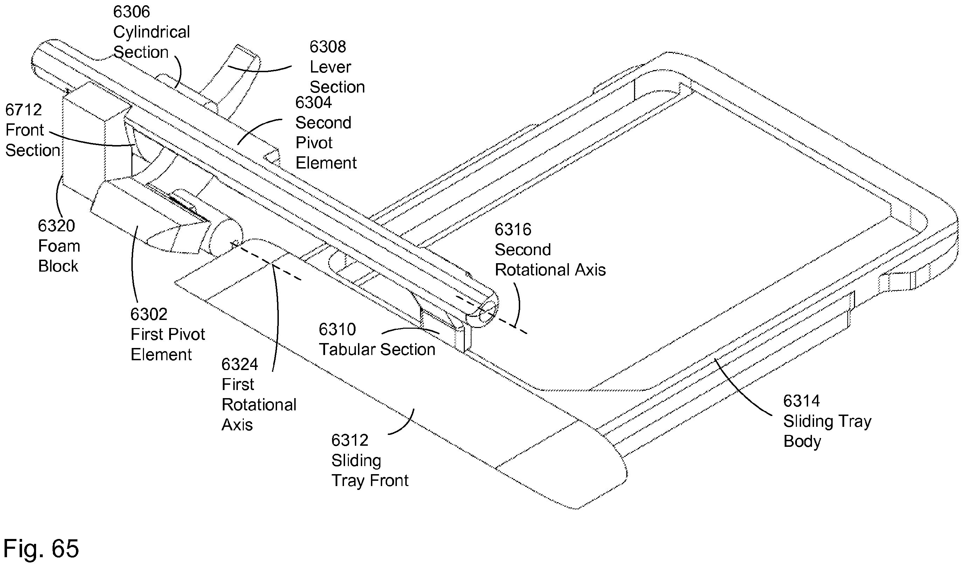

Figure 65 illustrates a perspective view of the select elements of the apparatus illustrated in Figures 62-64 assembled together in a neutral "home" position, as can occur with the elements installed in the casing of the mobile device. The tabular section 6310 of the second pivot element 6304 can be in a substantially vertical position adjacent to a rear facing section of the sliding tray front 6312. The foam block 6320 can be partially compressed by placement of the foam block 6320 against the front section 6712 of the lever section 6308 of the second pivot element 6304 but can not exert any significant pressure against the second pivot element 6304 when in the neutral "home" position. The sliding tray front 6312 can include an indentation by which the user of the mobile device can grab and extract the sliding tray 6326 from the casing of the mobile device.

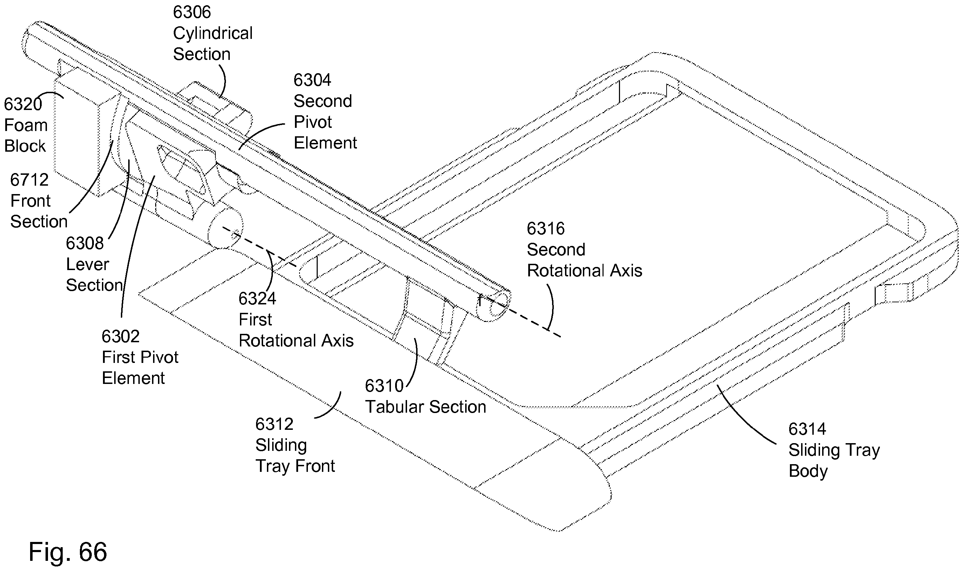

Figure 66 illustrates a perspective view of the select elements of the apparatus illustrated in Figures 62-64 assembled together in an "ejected" position, as can occur with the first pivot element 6302 can rotate by pressure from the ejection tool 6328 (not shown). The cylindrical section 6306 of the first pivot element 6302 can rotate and press against the lever section 6308 of the second pivot element causing the second pivot element 6304 to rotate and press the tabular section 6310 of the second pivot element 6304 against a rear facing section of the sliding tray front 6312, thereby ejecting the sliding tray 6326 at least partially from the casing of the mobile device. The cylindrical section 6306 of the first pivot element 6302 can slide along the curved lever section 6308 of the second pivot element 6304 when both the first pivot element 6302 and the second pivot element 6304 rotate. The surface of the cylindrical section 6306 of the first pivot element 6302 that can contact the surface of the lever section 6308 of the second pivot element 6304 can be coated with dry film lubricant. Similarly the curved surface of the lever section 6308 of the second pivot element 6304 can also be coated with dry film lubricant. The dry film lubricant coating can aid in the smooth movement of the contacting cylindrical section 6306 of the first pivot element 6302 against and across the curved lever section 6308 of the second pivot element 6304. In one embodiment, the first pivot element 6302 and the second pivot element 6304 are both coated entirely with dry film lubricant. The foam block 6320 can be compressed by a front section 6712 of the second pivot element 6304 (front facing side of the curved lever section 6308). The foam block 6320 can decompress upon release of pressure on the first pivot element 6302 (i.e. removal of the ejection tool 6328), thereby causing the second pivot element 6304 to rotate back to the neutral "home" position. When reinserting the sliding tray 6326 back into the casing of the mobile device, the tabular section 6310 in the neutral "home" position can not directly contact the sliding tray body 6314, the sliding tray front 6312 or a SIM card installed in the sliding tray body 6314, and thereby permit smooth operation without frictional contact between the tabular section 6310 of the second pivot element 6304 and the sliding tray 6326 or flat objects mounted therein.

The various aspects, embodiments, implementations or features of the described embodiments can be used separately or in any combination. Various aspects of the described embodiments can be implemented by software, hardware or a combination of hardware and software. The described embodiments can also be embodied as computer readable code on a computer readable medium for controlling manufacturing operations or as computer readable code on a computer readable medium for controlling a manufacturing line. The computer readable medium is any data storage device that can store data which can thereafter be read by a computer system. Examples of the computer readable medium include read-only memory, random-access memory, CD-ROMs, DVDs, magnetic tape, optical data storage devices, and carrier waves. The computer readable medium can also be distributed over network-coupled computer systems so that the computer readable code is stored and executed in a distributed fashion.

The foregoing description, for purposes of explanation, used specific nomenclature to provide a thorough understanding of the invention. However, it will be apparent to one skilled in the art that the specific details are not required in order to practice the invention. Thus, the foregoing descriptions of specific embodiments of the present invention are presented for purposes of illustration and description. They are not intended to be exhaustive or to limit the invention to the precise forms disclosed. It will be apparent to one of ordinary skill in the art that many modifications and variations are
possible in view of the above teachings.

The embodiments were chosen and described in order to best explain the prinOciples of the invention and its practical applications, to thereby enable others skilled in the art to best utilize the invention and various embodiments with various modifications as are suited to the particular use contemplated. It is intended that the
scope of the invention be defined by the following claims.

While the embodiments have been described in terms of several particular embodiments, there are alterations, permutations, and equivalents, which fall within the scope of these general concepts. It should also be noted that there are many alternative ways of implementing the methods and apparatuses of the present embodiments. For example, although an extrusion process is preferred method of manufacturing the integral tube, it should be noted that this is not a limitation and that other manufacturing
methods can be used (e.g., injection molding).

The portable computing device described herein can take many forms such as a laptop computer, a tablet computer, and so on. The portable computing device can include at least a single piece housing. The single piece housing can be machined from a single billet of material, such as a billet of aluminum. The single piece housing can include ledges with a surface receiving a trim bead and a cover. Corner brackets can be attached to the single piece housing to improve the damage resistance of the housing.

A portable computing device is disclosed. The portable computing device can take many forms such as a laptop computer, a tablet computer, and so on. The portable computing device can include a single piece housing formed from a radio opaque material with a cover formed from a radio transparent material. To implement a wireless interface, an antenna stack-up can be provided that allows an antenna to be mounted to a bottom of the cover. Methods and apparatus are provided for improving wireless performance. For instance, in one embodiment, a metal housing can be thinned to improve antenna performance. As another example, a faraday cage can be formed around speaker drivers to improve antenna performance. A battery assembly and main logic board can be mounted directly to the substantially flat bottom wall with a plurality of additional components arranged around a peripheral edge of the battery assembly and main logic board. A method and an apparatus for machining an exterior surface of a metal alloy casing of a portable electronic device to form a combination of a flat edge surface, a curved edge surface and a flat bottom surface is disclosed. The flat edge surface is abraded by contacting a first flat section of a rotating cutting tool along a first circuit of a pre-determined continuous spiral path. The curved edge surface is abraded by contacting a convex section of the rotating cutting tool along additional circuits of the first pre-determined continuous spiral path. The pitch of vertical movement of the cutting tool is adjusted for each circuit of the continuous spiral path based on a resulting curvature of the metal alloy casing. The bottom surface is abraded by contacting a flat section of the cutting tool along a second pre-determined alternating direction linear path.

An apparatus for ejecting a flat object from a casing of a mobile device is disclosed. The apparatus is arranged to receive an ejection tool along a first axis and to eject the flat object along a second axis, wherein the first and second axes are not parallel. In one embodiment, the first axis is parallel to a top surface of the mobile device and the second axis is perpendicular to a curved edge surface of the mobile device. An apparatus for ejecting a flat object from a casing of a mobile device is disclosed. The apparatus is arranged to receive an ejection tool along a first axis and to eject the flat object along a second axis, wherein the first and second axes are not parallel. In one embodiment, the first axis is parallel to a top surface of the mobile device and the second axis is perpendicular to a curved edge surface of the mobile device. In one embodiment, the apparatus includes a first pivot element to receive the ejection tool and rotate thereby displacing a lever section of a second pivot element. The second pivot element includes a tabular element that contacts and ejects the flat object upon rotation of the second pivot element.

## Claims

1. A housing (102) for an electronic device comprising:
a first piece having 1) a bottom (148a, 148b) coupled to four adjoining sidewalls, the sidewalls extending above the bottom to form an interior cavity wherein a portion of an exterior surface of the bottom and an interior surface portion of the bottom within the cavity are substantially flat and parallel to one another, the interior cavity configured to receive a plurality of electronic components associated with the electronic device, 2) each of the sidewalls including ledges (156a, 156b, 156c, 156d) extending from the sidewalls towards an interior of the cavity, the ledges substantially parallel to the flat interior surface portion, the ledges including a surface for receiving a trim bead (108) and a cover (106) wherein the first piece is formed from a single billet of material, further **characterised by** brackets (150a, 150b, 150c, 150d), mounted to and extending around each corner of the sidewalls adjacent to the ledges formed on the sidewalls, the brackets including a surface for receiving the trim bead (108) aligned with and at proximately a same height as the surface for receiving the trim bead on the ledges, for mounting corner portions of the trim bead and the cover to the brackets wherein the brackets are configured to reduce impact damage to the electronic device resulting from an impact at each corner and conductive foam positioned between the brackets and the first piece for electrically grounding the brackets to the first piece.

2. The housing (102) of claim 1, wherein at least 90% of the volume of the single billet is removed during a machining process to form the first piece.

3. The housing (102) of claim 1, further comprising: an opening (136) in the bottom wherein a recess including ledge is formed around the opening within the interior cavity.

4. The housing (102) of claim 1, further comprising a logo stack (250) including a logo insert (256) bonded to a metal sheet wherein the logo insert is shaped to fit through the opening and the metal sheet is shaped to fit within the recess such that it can be bonded to the ledge.

5. The housing (102) of claim 1, wherein a height of the housing from an exterior portion of the bottom to a top of the cover is less than about 9 mm.

6. The housing (102) of claim 1, further comprising an antenna window (132) formed of radio transparent material, wherein the antenna window replaces a corresponding portion of the first piece of the housing.

7. The housing (102) of claim 1, wherein the first piece and the brackets (150a, 150b, 150c, 150d) are formed from metal and the cover is formed from glass.

8. The housing (102) of claim 1, wherein the brackets (150a, 150b, 150c, 150d) extend into an interior of the cavity.

9. The housing (102) of claim 1, further comprising a bracket (152) adapted to strengthen a portion of the first piece.

10. The housing (102) of claim 9, wherein the portion of the first piece includes an opening (122) that weakens the portion of the first piece.

11. The housing (102) of claim 10, wherein the opening (122) comprises a port.

12. The housing (102) of claim 1, wherein the brackets (150a, 150b, 150c, 150d) stiffen the first piece.

13. The housing (102) of claim 1, wherein at least a portion of at least one of the brackets (150a, 150b, 150c, 150d) is castellated.

14. The housing (102) of claim 1, wherein a portion of the first piece is laser etched to improve conductivity between the portion and the conductive foam.

15. The housing (102) of claim 1, wherein the brackets (150a, 150b, 150c, 150d) are formed of stainless steel.

## Patentansprüche

1. Gehäuse (102) für eine elektronische Vorrichtung, umfassend:
ein erstes Teil, das 1) einen Boden (148a, 148b) aufweist, der mit vier anschließenden Seitenwänden gekoppelt ist, wobei sich die Seitenwände über den Boden erstrecken, um einen inneren Hohlraum zu bilden, wobei ein Abschnitt von einer äußeren Oberfläche des Bodens und ein Abschnitt einer inneren Oberfläche des Bodens in dem Hohlraum im Wesentlichen eben und parallel zueinander sind, wobei der innere Hohlraum konfiguriert ist, um eine Vielzahl von elektronischen Komponenten aufzunehmen, die mit der elektronischen Vorrichtung assoziiert sind, 2) jede der Seitenwände Leisten (156a, 156b, 156c, 156d) beinhaltet, die sich von den Seitenwänden hin zu einem Inneren des Hohlraumes erstrecken, wobei die Leisten im Wesentlichen parallel zu dem ebenen Abschnitt der inneren Oberfläche sind, wobei die Leisten eine Oberfläche zum Aufnehmen eines Randwulstes (108) und einer Abdeckung (106) beinhalten, wobei das erste Teil aus einem einzelnen Materialblock gebildet ist,
ferner charakterisiert durch
Klammern (150a, 150b, 150c, 150d), die an jeder Ecke der Seitenwände, anschließend zu den Leisten, die auf den Seitenwänden gebildet sind, montiert sind und sich um diese herum erstrecken, wobei die Klammern eine Oberfläche zum Aufnehmen des Randwulstes (108) beinhalten, ausgerichtet mit der Oberfläche zum Aufnehmen des Randwulstes auf den Leisten und bei annäherungsweise einer gleichen Höhe wie die Oberfläche zum Aufnehmen des Randwulstes auf den Leisten, zum Montieren von Eckabschnitten des Randwulstes und der Abdeckung an den Klammern, wobei die Klammern konfiguriert sind, um einen Aufschlagschaden auf die elektronische Vorrichtung, welcher sich aus einem Aufschlag ergibt, an jeder Ecke zu verringern, und leitenden Schaum, der zwischen den Klammern und dem ersten Teil angeordnet ist, um die Klammern mit dem ersten Teil elektrisch zu erden.

2. Gehäuse (102) nach Anspruch 1, wobei zumindest 90 % des Volumens des einzelnen Blocks während eines Spanungsverfahrens zum Bilden des ersten Teils entfernt wird.

3. Gehäuse (102) nach Anspruch 1, ferner umfassend: eine Öffnung (136) in dem Boden, wobei eine Aussparung, welche die Lasche beinhaltet, um die Öffnung in dem inneren Hohlraum gebildet ist.

4. Gehäuse (102) nach Anspruch 1, wobei das Gehäuse (102) ferner einen Logostapel (250) umfasst, der eine Logoeinlage (256) beinhaltet, die an eine Metallschicht gebunden ist, wobei die Logoeinlage geformt ist, um durch die Öffnung hindurch zu passen, und wobei die Metallschicht geformt ist, um in die Aussparung zu passen, so dass sie an die Lasche gebunden werden kann.

5. Gehäuse (102) nach Anspruch 1, wobei eine Höhe des Gehäuses von einem äußeren Abschnitt des Bodens zu einer Oberseite der Abdeckung kleiner ist als ungefähr 9 mm.

6. Gehäuse (102) nach Anspruch 1, ferner ein Antennenfenster (132) umfassend, das aus einem funktransparenten Material gebildet ist, wobei das Antennenfenster einen entsprechenden Abschnitt des ersten Teils des Gehäuses ersetzt.

7. Gehäuse (102) nach Anspruch 1, wobei das erste Teil und die Klammern (150a, 150b, 150c, 150d) aus Metall gebildet sind und die Abdeckung aus Glas gebildet ist.

8. Gehäuse (102) nach Anspruch 1, wobei die Klammern (150a, 150b, 150c, 150d) sich in ein Inneres des Hohlraumes erstrecken.

9. Gehäuse (102) nach Anspruch 1, wobei das Gehäuse (102) ferner eine Klammer (152) umfasst, die angepasst ist, um einen Abschnitt des ersten Teils zu verstärken.

10. Gehäuse (102) nach Anspruch 9, wobei der Abschnitt des ersten Teils eine Öffnung (122) beinhaltet, welche den Abschnitt des ersten Teils schwächt.

11. Gehäuse (102) nach Anspruch 10, wobei die Öffnung (122) einen Anschluss umfasst.

12. Gehäuse (102) nach Anspruch 1, wobei die Klammern (150a, 150b, 150c, 150d) das erste Teil versteifen.

13. Gehäuse (102) nach Anspruch 1, wobei zumindest ein Abschnitt von zumindest einer der Klammern (150a, 150b, 150c, 150d) gezahnt ist.

14. Gehäuse (102) nach Anspruch 1, wobei ein Abschnitt des ersten Teils lasergeätzt ist, um eine Leitfähigkeit zwischen dem Abschnitt und dem leitenden Schaum zu verbessern.

15. Gehäuse (102) nach Anspruch 1, wobei die Klammer (150a, 150b, 150c, 150d) aus Edelstahl gebildet sind.

## Revendications

1. Un boitier (102) pour un dispositif électronique comprenant :
une première pièce 1°) possédant un fond (148a, 148b) couplé à quatre parois latérales attenantes, les parois latérales s'étendant au-dessus du fond pour former une cavité intérieure où une partie d'une surface extérieure du fond et une partie d'une surface intérieure du fond à l'intérieur de la cavité sont substantiellement plates et parallèles l'une à l'autre, la cavité intérieure étant configurée pour recevoir une pluralité de composants électroniques associés au dispositif électronique, 2°) chacune des parois latérales comprenant des rebords (156a, 156b, 156c, 156d) s'étendant à partir des parois latérales en direction d'un intérieur de la cavité, les rebords étant substantiellement parallèles à la partie de surface intérieure plate, les rebords comprenant une surface destinée à recevoir un cordon de finition (108) et un capot (106), la première pièce étant formée à partir d'une seule billette de matière,
**caractérisé en outre par**
des pattes (150a, 150b, 150c, 150d), montées sur et s'étendant autour de chaque coin des parois latérales adjacent aux rebords formés sur les parois latérales, les pattes comprenant une surface destinée à recevoir le cordon de finition (108) en alignement avec et approximativement à une même hauteur que la surface destinée à recevoir le cordon de finition sur les rebords, pour le montage de parties de coin du cordon de finition et du capot sur les pattes, les pattes étant configurées pour réduire un endommagement à l'impact du dispositif électronique résultant d'un impact au niveau de chaque coin et une mousse conductrice étant positionnée entre les pattes et le première pièce pour mettre électriquement à la masse les pattes avec la première pièce.

2. Le boitier (102) de la revendication 1, dans lequel au moins 90 % du volume de la seule billette est retiré au cours d'un processus d'usinage pour former la première pièce.

3. Le boitier (102) de la revendication 1, comprenant en outre : une ouverture (136) dans le fond, creux incluant un rebord étant formé autour de l'ouverture au sein de la cavité intérieure.

4. Le boitier (102) de la revendication 1, comprenant en outre une superposition de logo (250) comprenant un insert de logo (256) collé sur une feuille de métal, l'insert de logo étant conformé de manière à s'ajuster au travers de l'ouverture et la feuille métallique étant conformée pour s'ajuster à l'intérieur du creux de manière à ce qu'elle puisse être collée au rebord.

5. Le boitier (102) de la revendication 1, dans lequel une hauteur du boitier entre une partie extérieure du fond et un sommet du capot est inférieure à environ 9 mm.

6. Le boitier (102) de la revendication 1, comprenant en outre une fenêtre d'antenne (132) formée d'une matière radiotransparente, la fenêtre d'antenne remplaçant une partie correspondante de la première pièce du boitier.

7. Le boitier (102) de la revendication 1, dans lequel la première pièce et les pattes (150a, 150b, 150c, 150d) sont formées d'un métal et le capot est formé d'un verre.

8. Le boitier (102) de la revendication 1, dans lequel les pattes (150a, 150b, 150c, 150d) s'étendent jusque dans un intérieur de la cavité.

9. Le boitier (102) de la revendication 1, comprenant en outre une patte (152) apte à renforcer une partie de la première pièce.

10. Le boitier (102) de la revendication 9, dans lequel la partie de la première pièce inclut une ouverture (122) qui affaiblit la partie de la première pièce.

11. Le boitier (102) de la revendication 10, dans lequel l'ouverture (122) comprend un port.

12. Le boitier (102) de la revendication 1, dans lequel les pattes (150a, 150b, 150c, 150d) rigidifient la première pièce.

13. Le boitier (102) de la revendication 1, dans lequel au moins une partie d'au moins l'une des pattes (150a, 150b, 150c, 150d) est crénelée.

14. Le boitier (102) de la revendication 1, dans lequel une partie de la première pièce est gravée par laser pour améliorer la conductivité entre la partie et la mousse conductrice.

15. Le boitier (102) de la revendication 1, dans lequel les pattes (150a, 150b, 150c, 150d) sont formées d'un acier inoxydable.
